# EUROPEAN PATENT SPECIFICATION

(11) **EP 2 830 133 B1**
(45) Date of publication and mention of the grant of the patent: **17.08.2016**
(21) Application number: 13763772.4
(22) Date of filing: 25.03.2013
(51) Int. Cl.: H01M 8/04, H01M 8/06, H01M 8/12

(54) **SOLID OXIDE FUEL CELL SYSTEM**
FESTOXID-BRENNSTOFFZELLENSYSTEM
SYSTÈME DE PILE À COMBUSTIBLE À OXYDE SOLIDE

(30) Priority: 23.03.2012 JP 2012066766; 15.01.2013 JP 2013004925; 15.01.2013 JP 2013004926
(43) Date of publication of application: 28.01.2015
(60) Divisional application: 16176410.5
(73) Proprietor: Toto Ltd., Fukuoka 802-8601 (JP)
(72) Inventor: MATSUO, Takuya, Kitakyushu-shi Fukuoka 802-8601 (JP); OTSUKA, Toshiharu, Kitakyushu-shi Fukuoka 802-8601 (JP); TSUCHIYA, Katsuhisa, Kitakyushu-shi Fukuoka 802-8601 (JP); SHIMAZU, Megumi, Kitakyushu-shi Fukuoka 802-8601 (JP); AKAGI, Yousuke, Kitakyushu-shi Fukuoka 802-8601 (JP); KOBAYASHI, Chihiro, Kitakyushu-shi Fukuoka 802-8601 (JP); SHIONO, Mitsunobu, Kitakyushu-shi Fukuoka 802-8601 (JP); OMOSHIKI, Koji, Kitakyushu-shi Fukuoka 802-8601 (JP)
(74) Representative: Witte, Weller & Partner Patentanwälte mbB
(86) International application number: PCT/JP2013/058614
(87) International publication number: WO 2013/141403

(56) References cited:
- JP-A- 2008 251 362
- JP-A- 2009 059 667
- JP-A- 2011 003 305
- JP-A- 2011 009 136
- JP-A- 2011 076 846

## Description

### Technical Field

0001 The present invention pertains to a solid oxide fuel cell system, and more particularly to a solid oxide fuel cell for generating electricity by steam reforming fuel and reacting the resulting hydrogen with oxidant gas.

### Background Art

0002 Solid oxide fuel cells ("SOFCs" below) are fuel cells which operate at a relatively high temperature in which, using an oxide ion conducting solid electrolyte as electrolyte, with electrodes attached to both sides thereof, fuel gas is supplied to one side thereof and oxidizer (air, oxygen, or the like) is supplied to the other side thereof.

0003 Japanese Published Unexamined Patent Application 2012-3850 (Patent Document 1) discloses a solid oxide fuel cell. In this solid oxide fuel cell, when a fuel cell operating at a high temperature is turned off, air is supplied to the air electrode side of the fuel cell stack while continuing to supply a small amount of fuel and fuel-reforming water, and the temperature inside the fuel cell module is reduced by the cooling effect of this air. I.e., in this fuel cell, during the stopping step fuel continues to be supplied even after the extraction of power from the fuel cell module is stopped, while at the same time the fuel cell stack is cooled by delivering a large volume of cooling air. Next, when the cell stack temperature has been reduced to less than the fuel cell oxidation temperature, the supply of fuel is stopped, after which only the supply of cooling air is continued until the temperature drops sufficiently, and the fuel cell is safely turned off.

0004 A fuel cell which performs a "shutdown stop" is also known, whereby in the stopping step, power is extracted and the supply of fuel, fuel reforming water, and generating air (air fed to the air electrode side) is completely stopped.

Japanese Published Unexamined Patent Application 2010-27579 (Patent Document 2) discloses a fuel cell system. In this fuel cell system, during an emergency stop the feed pump for supplying fuel to the reformer, the reform water pump for supplying water for steam reforming, and the air blower for feeding air to the air electrode side of the cell stack are stopped. Thereafter, when the feed pump and the reforming water pump are restarted under emergency stop operation control, fuel gas which had been adsorbed by the adsorber is fed to the reformer and steam reforming is carried out using water supplied from the reform water pump, even if the supply of fuel gas from the fuel supply source is cut off. By this means, reforming fuel is supplied to the cell stack electrode over a predetermined period even after the supply of fuel gas is cut off, and oxidation of fuel electrodes by reverse flow of air is prevented.

0005 Furthermore, Japanese Published Unexamined Patent Application 2012-138186 (Patent Document 3) discloses a high temperature-triggered fuel cell system. In this high temperature-triggered fuel cell system, during an emergency stop the raw fuel pump for supplying fuel gas is stopped and the reforming pump for supplying water to the reformer is activated. When the reforming water pump is activated, the water supplied expands in volume due to vaporization inside the reformer. Therefore even if the supply of raw fuel gas from the fuel supply source is cut off, the fuel gas remaining in the fuel gas supply line downstream of the reformer is pushed toward the fuel cell (cell stack) side by the pressure of the volumetrically expanded steam. Oxidation of the fuel electrode by a reverse flow of air is thus prevented.

### Prior Art References

0006

### Patent Documents

Patent Document 1
   JP 2012-3850
Patent Document 2
   JP 2010-27579
Patent Document 3
   JP 2012-138186

### Summary of the Invention

### Problems the Invention Seeks to Resolve

0007 In the fuel cell set forth in Japanese Published Unexamined Patent Application 2012-3850 (Patent Document 1), fuel is supplied until the fuel cell stack drops to a predetermined temperature, even during the stopping step, resulting in the problem of wasted fuel which does not contribute to electrical generation. If the supply of fuel is stopped and cooling air is supplied before the cell stack temperature is sufficiently reduced, cooling air supplied to the air electrode side of the individual fuel cells flows in reverse to the fuel electrode, and reverse flowing air oxidizes fuel electrodes in the individual fuel cells, damaging the cells. It is therefore necessary to continue supplying fuel until the temperature of the individual fuel cells drops to below the oxidation temperature, and to prevent the reverse flow of cooling air supplied to the air electrodes of individual fuel cells. Note that the time until the temperature of a fuel cell stack which had been operating drops to below the oxidation temperature depends on the insulating performance of the fuel cell module, etc., but in general runs from one hour to several hours, during which time fuel which does not contribute to electrical generation must be continually supplied.

0008 On the other hand, in a shutdown stop the supply of fuel and fuel reforming water is completely stopped in a short time, so wastage of fuel can be constrained. Also, in a shutdown stop the supply of fuel is stopped with the fuel cell stack in a high temperature state, so the supply of cooling air fed to the air electrode of the fuel cell stack is also stopped together with the stopping of the fuel supply, thereby avoiding reverse flow of air to the fuel electrode side and oxidation of the fuel electrode.

0009 However, the present inventor has discovered the new technical problem that when a shutdown stop is performed, oxidation of fuel electrodes in the individual fuel cells occurs and cells are degraded even if the air fed to the air electrode side of the fuel cell stack is stopped when the fuel supply is stopped, leading to cell damage.

0010 At the same time, in the fuel cell system set forth in Japanese Published Unexamined Patent Application 2010-27579 (Patent Document 2), fuel gas which had been adsorbed onto an adsorber can be fed for a fixed period of time to the cell stack by activating a feed pump even after the supply from the fuel supply source is cut off, thereby preventing oxidation of fuel electrodes. However, in this fuel cell system fuel is pre-stored, requiring the special provision of an adsorber. Because the fuel cell heat capacity is extremely large, a long time is required until the temperature declines to one at which oxidation of fuel electrodes can be avoided, and it is difficult to cause this large amount of fuel continually supplied over this long time period to be adsorbed by an adsorber. For this reason, fuel electrode oxidation cannot be sufficiently suppressed in the fuel cell system set forth in Japanese Published Unexamined Patent Application 2010-27579. Also, because an outfeed pump and reforming water pump are activated to feed fuel to the cell stack fuel in this fuel cell system, the problem arises that fuel electrode oxidation cannot be avoided in emergencies when the power supplies to operate each pump are lost, in addition to the supply of fuel from the fuel supply source.

0011 Moreover, in the high temperature-activated fuel cell system set forth in Japanese Published Unexamined Patent Application 2012-138186 (Patent Document 3), a reforming water pump is activated immediately after the raw fuel pump is stopped, and residual fuel is pushed out to the cell stack side by the volumetric expansion of water vaporized in the reformer. An adsorber for adsorbing fuel is therefore unnecessary in this high temperature-activated fuel cell system. In this high temperature-activated fuel cell system, however, residual fuel is actively pushed out by the pressure from vaporized steam, and fuel flowing out of the cell stack is combusted. Therefore it is extremely difficult to continue to supply residual fuel until the temperature declines to a temperature at which oxidation of the cell stack will not occur, and oxidation of fuel electrodes cannot be prevented. Also, in this high temperature-activated fuel cell system, the problem arises that oxidation of fuel electrodes cannot be avoided in emergencies when the power supply needed to operate the water pump is lost.

0012 Therefore the present invention has the object of providing a solid oxide fuel cell system capable of executing a shutdown stop while fully suppressing oxidation of individual fuel cells.

### Means for Resolving Problems

0013 In order to resolve the above-described problems, the present invention is a solid oxide fuel cell system for generating electricity by steam reforming fuel and reacting the resulting hydrogen with oxidant gas, having: a fuel cell module comprising a fuel cell stack, a fuel supply apparatus for supplying fuel to this fuel cell module, a water supply apparatus for supplying water for steam reforming to a fuel cell module, an oxidant gas supply apparatus for supplying oxidant gas to the oxidant gas electrode side of the fuel cell stack, a reformer disposed inside the fuel cell module for steam reforming fuel supplied from a fuel supply apparatus using water supplied from a water supply apparatus, a fuel/exhaust gas passageway for guiding fuel/exhaust gas from a fuel supply apparatus through a reformer and fuel electrodes on fuel cell units constituting a fuel cell stack, to outside a fuel cell module; and a controller for controlling the fuel supply apparatus, water supply apparatus, oxidant gas supply apparatus, and the extraction of power from the fuel cell module; whereby the controller comprises a shutdown stop circuit for executing a shutdown stop to stop the supply of fuel and water and the generation of electricity, and the fuel/exhaust gas passageway functions as a mechanical pressure retention means, maintaining a pressure oxidant gas electrode side within the fuel cell module at a pressure higher than atmospheric pressure, and maintaining the pressure on the fuel electrode side at a pressure higher than the pressure on the oxidant gas electrode side, after the shutdown stop circuit executes the shutdown stop, until the fuel electrode temperature drops to a predetermined oxidation suppression temperature at which the risk of fuel electrode oxidation is diminished.

0014 In the invention thus constituted, fuel and water are respectively supplied by a fuel supply apparatus and a water supply apparatus to a reformer disposed inside a fuel cell module, and the reformer steam reforms the fuel. Reformed fuel is supplied to the fuel electrode side of the individual fuel cell units which make up the fuel cell stack. At the same time, oxidant gas is supplied by an oxidant gas supply apparatus to the oxidant gas electrode side of the fuel cell stack. A fuel/exhaust gas passageway guides fuel/exhaust gas from a fuel supply apparatus through a reformer and through fuel electrodes in the fuel cell units constituting a fuel cell stack, to outside the fuel cell module. The controller comprises a shutdown stop circuit, and controls the extraction of power from the fuel supply apparatus, water supply apparatus, oxidant gas supply apparatus, and fuel cell module. The fuel/exhaust gas passageway functions as a mechanical pressure retention means (mechanical means for retaining pressure), maintaining a pressure oxidant gas electrode side within the fuel cell module at a pressure higher than atmospheric pressure, and maintaining the pressure on the fuel electrode side at a pressure higher than the pressure on the oxidant gas electrode side until, after the supply of fuel and water and the generation of electricity has been stopped by a shutdown stop circuit, the fuel electrode temperature drops to a predetermined oxidation suppression temperature at which the risk of fuel electrode oxidation is diminished.

0015 In conventional solid oxide fuel cell systems, the supply of fuel, supply of reforming water, extraction of power from the fuel cell module, and supply of oxidant gas are all simultaneously stopped when performing a shutdown stop. In the conventional art, the reason for stopping the supply of oxidant gas at the same time as the supply of fuel and the extraction of power are stopped is due to the risk of a reverse flow of oxidant gas to the fuel cell unit fuel electrode side and resulting damage to fuel electrodes when fuel is stopped and only oxidant gas is supplied when the fuel cell stack temperature is higher than the oxidation temperature immediately after extraction of power is stopped.

0016 However, the inventor has discovered the new problem that there are cases in which oxidant gas oxidizes the fuel electrodes even when the supply of oxidant gas is thus simultaneously stopped. This problem is the cause of temperature differentials between the fuel electrode side and the oxidant gas electrode side of fuel cell units after the extraction of power is stopped. First, because the supply of oxidant gas for electrical generation is stopped on the oxidant gas electrode side of the fuel cell units, there is no cooling effect from oxidant gas, and the temperature tends to rise. At the same time, heat from electrical generation ceases in the fuel electrode side of the fuel cell units, since extraction of power is stopped. On the fuel electrode side of each of the fuel cell units, fuel remaining in the reformer, etc. flows in even after the supply of fuel by the fuel supply means is stopped. This fuel flowing into the fuel electrode side is produced by the endothermic steam reforming reaction in the reformer, and is generally at a lower temperature than that on the oxidant gas electrode side in the fuel cell units. Thus in comparison to the tendency for temperature to rise after the supply of fuel and extraction of fuel are stopped on the oxidant gas electrode side of the fuel cell units, the temperature tends to drop on the fuel electrode side due to dissipation of electrical generation heat and inflow of low temperature residual fuel. In parts where the temperature has dropped, surrounding gases contract and pressure drops; in parts where the temperature has risen, surrounding gases expand and pressure rises. As a result of these phenomena, the pressure on the oxidant gas electrode side of fuel cell units rises and pressure on the fuel electrode side falls, and this pressure differential can result in a reverse flow of oxidant gas from the oxidant gas electrode side to the fuel electrode side.

0017 The present inventor solved this new technical problem by providing a mechanical pressure retaining means. I.e., a fuel/exhaust gas passageway which guides fuel/exhaust gas from a fuel supply apparatus through a reformer and through the fuel electrodes of each of the fuel cell units constituting a fuel cell stack, to outside the fuel cell module was constituted as a mechanical pressure retaining means. The fuel passageway is constituted to pass from a fuel supply apparatus through a reformer and the fuel electrodes in each fuel cell unit, to oxidant gas electrodes. An exhaust gas passageway is constituted to go from the oxidant gas electrode side in the fuel cell module to the atmosphere outside the fuel cell module. In the present invention, by appropriately distributing the balance of flow path resistance, etc. in each part of these fuel/exhaust gas passageways, the present embodiment succeeds, after a shutdown stop, at maintaining a pressure greater than atmospheric pressure on the oxidant gas electrode side and maintaining a pressure on the fuel electrode side greater than on the oxidant gas electrode side, until the temperature drops to the oxidation suppression temperature, at which the risk of fuel electrode oxidation diminishes. Reverse flow of oxidant gas from the oxidant gas electrode side to the fuel electrode side is by this means prevented. Using this mechanical pressure retention means, reverse flows of oxidant gas can be prevented until the temperature of fuel electrodes drops to the oxidation suppression temperature, thereby suppressing the oxidation of fuel electrodes, even when the supply of fuel and commercial power to the solid oxide fuel cell system of the present invention is lost due to a natural disaster or the like.

0018 In the present invention the mechanical pressure retention means is preferably constituted so that after a shutdown stop, fuel electrode side pressure is decreased while being maintained at a pressure higher than that on the oxidant gas electrode side, and is maintained at a higher pressure than atmospheric pressure even at the point in time when the fuel electrode temperature has dropped to the oxidation suppression temperature.

0019 In the invention thus constituted, pressure on the fuel electrode side is maintained at a higher pressure than on the oxidant gas electrode side by a mechanical pressure retention means until falling to the oxidation suppression temperature. Here, in general solid oxide fuel cell system operates at a high temperature and has a large heat capacity, therefore the temperature drop behavior after a shutdown stop and the pressure drop behavior on the fuel electrode side and oxidant gas electrode side are not prone to be influenced by the outside air temperature, etc. The present inventor, taking note of this point, constructed a fuel/exhaust gas passageway such that the pressure drop on the fuel electrode side and oxidant gas electrode side after a shutdown stop occurs while maintaining a higher pressure on the fuel electrode side than on the oxidant gas electrode side. By so doing, reverse flows of oxidant gas can be prevented until the temperature drops to the oxidation suppression temperature using only a mechanical structure, without being substantially affected by outside air temperature or the like.

0020 In the present invention the mechanical pressure retention means preferably has an outflow-side flow resistance section communicating with the fuel electrode side and oxidant gas electrode side of each fuel cell unit, and the flow path resistance of this outflow-side flow resistance section is set so that the pressure drop on the fuel electrode side after stopping the supply of fuel, water, and electrical generation is more gradual than the pressure drop on the oxidant gas electrode side.

0021 The inventor discovered that the pressure change behavior on the fuel electrode side and oxidant gas electrode side after a shutdown stop changes with the balance of flow resistance in each part of the fuel/exhaust gas fuel passageway, and that by setting an appropriate balance, the pressure on the fuel electrode side can be maintained at a higher pressure than on the oxidant gas electrode side over a long time period. In the invention thus constituted, the fuel/exhaust gas passageway flow resistance balance can be adjusted, by setting the flow path resistance of the outflow-side flow resistance section, so the pressure drop on the fuel electrode side can with a simple structure be made more gradual than the pressure drop on the oxidant gas electrode side, and reverse flows of oxidant gas can be prevented.

0022 In the present invention the mechanical pressure retention means preferably has an inflow-side flow resistance section for allowing the inflow of fuel to the fuel electrode side of the fuel cell units to flow.

The invention thus constituted, comprises an inflow-side flow resistance section for allowing the inflow of fuel to the fuel electrode side, therefore pressure fluctuations on the upstream side of the fuel cell units can be directly transferred to the fuel electrode side, and excessive pushing out of fuel remaining on the fuel electrode side to the oxidant gas electrode side can be prevented. This allows residual fuel to be accumulated for a long time period on the fuel electrode side using a mechanical pressure retention means.

0023 In the present invention a cap formed as a separate body is preferably attached to the top end of the fuel cell units, and the outflow-side flow resistance section is constituted of elongated narrow tubes installed so as to extend upward from the caps; fine tubes function as a buffer section for preventing oxidation of fuel electrodes by oxidant gas penetrating from the top end thereof.

0024 In the invention thus constituted, the outflow-side flow resistance section is constituted by elongated narrow fine tubes installed on caps formed as separate bodies, therefore flow path resistance can be accurately adjusted. By balancing the flow path resistance with each part, the outflow-side flow resistance section constitutes a mechanical pressure retention means, so the flow path resistance thereof must be precisely set. It is difficult, however, to set such precise flow path resistances using the materials which make up the fuel cell unit main body. Using the present invention, the outflow-side flow resistance section is installed on caps formed as a separate body, so the outflow-side flow resistance section can be formed of various materials amenable to precision machining, and the flow resistance section can be accurately set.

0025 In the present invention the caps are preferably formed of metal so that heat on the oxidant gas electrode side can be easily conducted to the fuel electrode side.

In the invention thus constituted, the caps are constituted of metal, therefore thermal conductivity is high, and the heat on the fuel electrode side is easily conducted to the fuel electrode side. Therefore sudden drops in the temperature of fuel remaining on the fuel electrode side of fuel cell stack resulting in sudden shrinking of the volume of gas on the fuel electrode side and sucking in of oxidant gas on the oxidant gas electrode side to the fuel electrode side can be prevented.

0026 In the present invention the mechanical pressure retention means preferably maintains the pressure on the fuel electrode side at a pressure higher than that on the oxidant gas electrode side until the fuel electrode temperature drops to 400°C.

0027 In the invention thus constituted, the pressure on the fuel electrode side is maintained at a pressure higher than the pressure on the oxidant gas electrode side until the fuel electrode temperature drops to 400°C, therefore fuel electrode oxidation can be reliably suppressed.

0028 In the present invention the mechanical pressure retention means preferably maintains the pressure on the fuel electrode side at a pressure higher than that on the oxidant gas electrode side until the fuel electrode temperature drops to 350°C.

0029 In the invention thus constituted, the pressure on the fuel electrode side is maintained at a pressure higher than the pressure on the oxidant gas electrode side until the fuel electrode temperature drops to 350°C, therefore fuel electrode oxidation can be even more reliably suppressed.

0030 In the present invention, after executing a shutdown stop the shutdown stop circuit preferably stops the fuel supply apparatus, the oxidant gas supply apparatus, and the water supply apparatus until the fuel electrode temperature falls to the oxidation suppression temperature.

0031 In the invention thus constituted, the fuel supply apparatus, oxidant gas supply apparatus, and water supply apparatus are stopped after a shutdown stop until the fuel electrode temperature drops to the oxidation suppression temperature, and a reverse flow of oxidant gas can be prevented until the fuel electrode temperature drops to the oxidation suppression temperature, even during emergencies when fuel and commercial power sources are simultaneously lost.

0032 In the present invention, after executing a shutdown stop the shutdown stop circuit preferably operates the oxidant gas supply apparatus for a predetermined time, then stops the oxidant gas supply apparatus until the fuel electrode temperature drops to the oxidation suppression temperature.

0033 In the invention thus constituted, the oxidant gas supply apparatus is operated for a predetermined time after a shutdown stop, so immediately after a shutdown stop the temperature on the oxidant gas electrode side is decreased, a balance in temperature is established between the fuel electrode side and the oxidant gas electrode side, and the temperature inside the fuel cell module is lowered. By this means, after an oxidant gas supply apparatus which has been operated for a predetermined time is stopped, an initial state is established when the prevention of reverse flow of oxidant gas is started by the mechanical pressure retention means, and reverse flows can be reliably prevented until the temperature drops to the oxidation suppression temperature.

0034 In the present invention, immediately before execution of a shutdown stop, the shutdown stop circuit preferably decreases the amount of electricity generated to a fixed value and increases the amount of oxidant gas supplied by the oxidant gas supply apparatus.

0035 In the invention thus constituted, immediately before execution of a shutdown stop, the amount of electricity generated decreases to a fixed value and the amount of oxidant gas supplied is increased, so the temperature and pressure on the fuel electrode side and oxidant gas electrode side at time of shutdown stop can be set to appropriate values. In this way, after a shutdown stop an initial state can be established when the prevention of reverse flow of oxidant gas is started by a mechanical pressure retention means, and reverse flows can be reliably prevented until the temperature drops to the oxidation suppression temperature.

0036 In the present invention the shutdown stop confidential information preferably has a pressure retention operation circuit for raising the pressure on the fuel electrode side after the fuel electrode temperature has declined to the oxidation suppression temperature, so that a pressure decrease on the fuel electrode side occurring in with the decline in temperature on the fuel electrode side can be suppressed.

0037 In the invention thus constituted, the provision of a mechanical pressure retention means and pressure retention operation enables the prevention of a reverse flow of air from the air electrode side to the fuel electrode side. The risk of fuel electrode oxidation is well reduced by the mechanical pressure retention means, but when unanticipated external disturbances occur, such as changes in atmospheric pressure outside design values, there is a risk that the pressure on the fuel electrode side cannot be maintained at a temperature at which there is no oxidation of fuel electrodes whatsoever (the oxidation lower limit temperature) using only this mechanical means. The pressure retention operation circuit therefore executes a pressure retention operation to raise the pressure on the fuel electrode side after the fuel electrode temperature has declined to the oxidation suppression temperature. Pressure retention control is executed after the fuel electrode temperature has dropped to the oxidation suppression temperature, so the pressure on both the fuel electrode side and the oxidant gas electrode side drops greatly, and only a slight pressure compensation on the fuel electrode side is sufficient. Also, because pressure retention operation is executed with the risk of oxidation sufficiently reduced, oxidation of the fuel electrodes can be reliably prevented without implementing precise controls.

0038 In the present invention the shutdown stop circuit is preferably constituted to execute stoppage of fuel supply and electrical generation by an emergency stop mode and a normal stop mode, and the shutdown stop circuit does not execute control using a pressure retention operation circuit for stopping in the emergency stop mode.

0039 In the invention thus constituted, no control by a pressure retention operation circuit is executed when stopping by the emergency stop mode. The simultaneous loss of fuel and power supplied to the solid oxide fuel cell system is anticipated as a circumstance in which the emergency stop mode is executed; in such circumstances the pressure retention operation is not executed, and the risk of fuel electrode oxidation can be decreased by a mechanical pressure retention means alone. By not executing pressure retention operation, secondary problems occurring when active control is executed can be avoided in the abnormal conditions when the emergency stop mode is executed. Moreover, the certainty of avoiding fuel electrode oxidation is diminished by not executing a pressure retention operation in the emergency stop mode, but since the frequency with which the emergency stop mode is executed is extremely low, decreasing the risk of fuel electrode oxidation using a mechanical pressure retention means enables the effect on the durable life span of the solid oxide fuel cell system to be reduced to a negligible level.

0040 In the present invention the normal stop modes preferably include a program stop mode for executing a stop at a pre-planned opportune time, and the shutdown stop circuit executes control by a pressure retention operation circuit when stopping by the program stop mode.

0041 In the invention thus constituted, pressure retention operation is executed in the program stop mode, so the pressure retention operation is executed at a pre-planned time. For this reason no problems are prevented even when a pressure retention operation is executed after a shutdown stop, and a long period of time is required until the pressure retention operation stops. Also, because the program stop mode is anticipated to be executed to respond to an intelligent meter, it is executed at a high frequency, and the durable lifespan of the solid oxide fuel cell system can be extended by executing pressure retention operation during stop modes which executed at a high frequency, thereby reliably avoiding the risk of fuel electrode oxidation.

0042 In the present invention, when stopping in the normal stop mode the shutdown stop circuit preferably executes a temperature drop operation for dropping the temperature on the oxidant gas electrode side of the fuel cell stack immediately after the fuel supply and electrical generation are stopped, whereas when stopping in the emergency stop mode, no temperature drop operation is executed.

0043 In the invention thus constituted, when stopping in the emergency stop mode, no temperature drop operation is executed after a shutdown stop, and the risk of fuel electrode oxidation is diminished by the mechanical pressure retention means alone. On the other hand, when stopping in the normal stop mode, the temperature and pressure on the fuel electrode side and oxidant gas electrode side can be dropped at the point when mechanical pressure retention is started by performing a temperature drop operation after a shutdown stop, and the risk of a reverse flow of oxidant gas can be further diminished during the time until the fuel electrode temperature drops to the oxidation suppression temperature.

### Effect of the Invention

0044 Using the solid oxide fuel cell system of the present invention, a shutdown stop can be executed while sufficiently suppressing fuel electrode oxidation.

### Brief Description of Figures

0045
Fig. 1: An overview schematic diagram showing a solid oxide fuel cell system according to a first embodiment of the present invention.
Fig. 2: A front elevation cross section showing a fuel cell module in a solid oxide fuel cell system according to a first embodiment of the present invention.
Fig. 3: A sectional diagram along line III-III in Fig. 2.
Fig. 4: A partial cross section showing fuel cell units of a solid oxide fuel cell system according to a first embodiment of the present invention.
Fig. 5: A perspective view showing a fuel cell stack in a solid oxide fuel cell system according to a first embodiment of the present invention.
Fig. 6: A block diagram showing a solid oxide fuel cell system according to a first embodiment of the present invention.
Fig. 7: A perspective view showing the reformer in a solid oxide fuel cell system according to a first embodiment of the present invention.
Fig. 8: A perspective view showing the interior of a reformer with the top plate removed of the reformer removed, in a solid oxide fuel cell system according to a first embodiment of the present invention.
Fig. 9: A plan view showing a cross section of the flow of fuel inside a reformer in a solid oxide fuel cell system according to a first embodiment of the present invention.
Fig. 10: A perspective view showing a metal case and air heat exchanger housed within a housing in a solid oxide fuel cell system according to a first embodiment of the present invention.
Fig. 11: A cross section showing the positional relationship between insulation used in a heat exchanger and a vaporizing section in a solid oxide fuel cell system according to a first embodiment of the present invention.
Fig. 12: A timing chart showing an example of the supply amounts of fuel, etc. and temperatures of various parts, in the startup step of a solid oxide fuel cell system according to a first embodiment of the present invention.
Fig. 13: A flow chart of the stopping decision which selects a stop mode in a solid oxide fuel cell system according to a first embodiment of the present invention.
Fig. 14: A timing chart schematically showing in time line form an example of the stopping behavior when a stop mode 1 is executed in a solid oxide fuel cell system according to a first embodiment of the present invention.
Fig. 15: A diagram explaining in time line form the control, temperature and pressure inside the fuel cell module, and the state of the tip portion of fuel cell units when stop mode 1 is executed in a solid oxide fuel cell system according to a first embodiment of the present invention.
Fig. 16: A timing chart schematically showing in time line form an example of the stopping behavior when a stop mode 2 is executed in a solid oxide fuel cell system according to a first embodiment of the present invention.
Fig. 17: A diagram explaining in time line form the control, temperature and pressure inside the fuel cell module, and the state of the tip portion of fuel cell units when stop mode 2 is executed in a solid oxide fuel cell system according to a first embodiment of the present invention.
Fig. 18: A timing chart schematically showing in time line form an example of the stopping behavior when a stop mode 3 is executed in a solid oxide fuel cell system according to a first embodiment of the present invention.
Fig. 19: A timing chart showing an expanded view immediately after a shutdown stop in stop mode 3 of a solid oxide fuel cell system according to a first embodiment of the present invention.
Fig. 20: A diagram explaining in time line form the control, temperature and pressure inside the fuel cell module, and the state of the tip portion of fuel cell units when stop mode 3 is executed in a solid oxide fuel cell system according to a first embodiment of the present invention.
Fig. 21: A flow chart of the supply of water in pre-shutdown operation.
Fig 22: A timing chart showing a variant example of stop mode 3.
Fig. 23: A timing chart schematically showing stopping behavior on a timeline when stop mode 4 is executed in a solid oxide fuel cell system according to a second embodiment of the present invention.
Fig. 24: A flow chart of the stopping decision which selects a stop mode in a solid oxide fuel cell system according to a second embodiment of the present invention.
Fig. 25: A timing chart schematically showing in time line form an example of the stopping behavior when a stop mode 4 is executed in a solid oxide fuel cell system according to a second embodiment of the present invention.
Fig. 26: A diagram explaining in time line form the control, temperature and pressure inside the fuel cell module, and the state of the tip portion of fuel cell units when stop mode 4 is executed in a solid oxide fuel cell system according to a second embodiment of the present invention.
Fig. 27: A flow chart of the stopping decision which selects a stop mode in a solid oxide fuel cell system according to a variant example of the second embodiment of the present invention.
Fig. 28: A timing chart schematically showing in a time line an example of stopping behavior in a conventional solid oxide fuel cell system.

### Embodiments

0046 Next, referring to the attached drawings, we discuss a solid oxide fuel cell system (SOFC) according to an embodiment of the present invention.

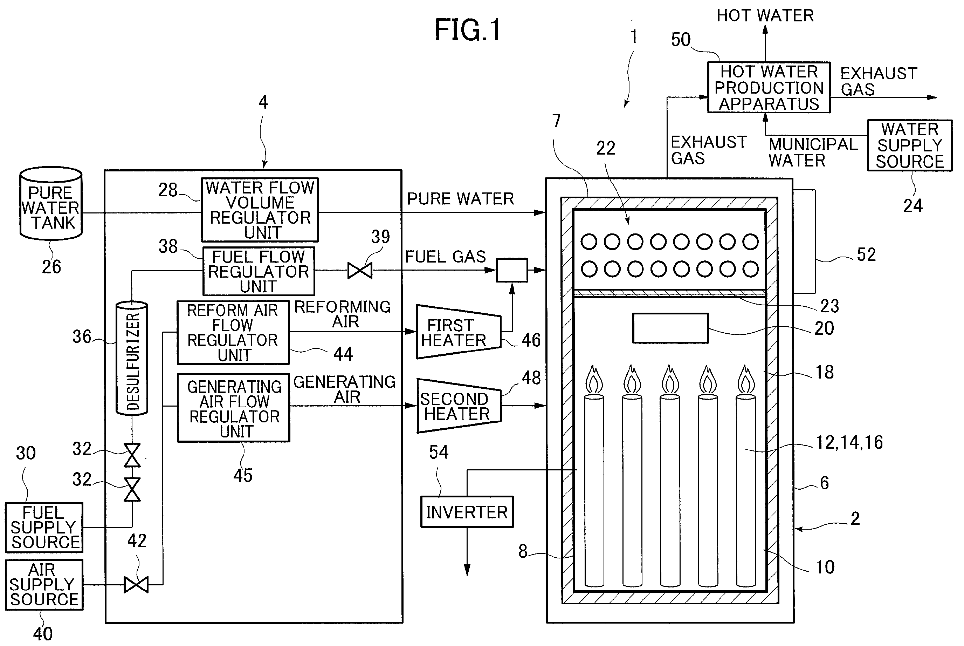

Fig. 1 is an overview schematic of a solid oxide fuel cell system (SOFC) according to a first embodiment of the present invention. As shown in Fig. 1, the solid oxide fuel cell system (SOFC) of the first embodiment of the present invention is furnished with a fuel cell module 2 and an auxiliary unit 4.

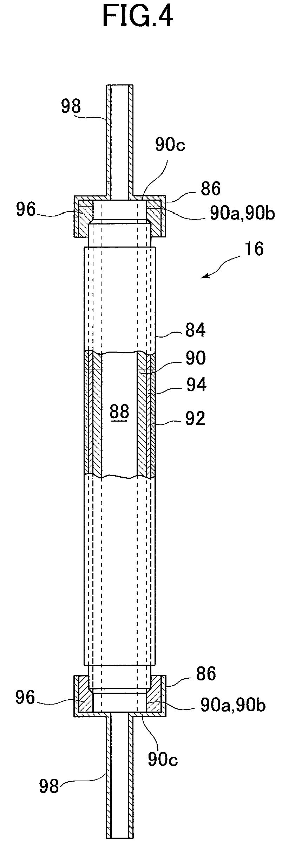

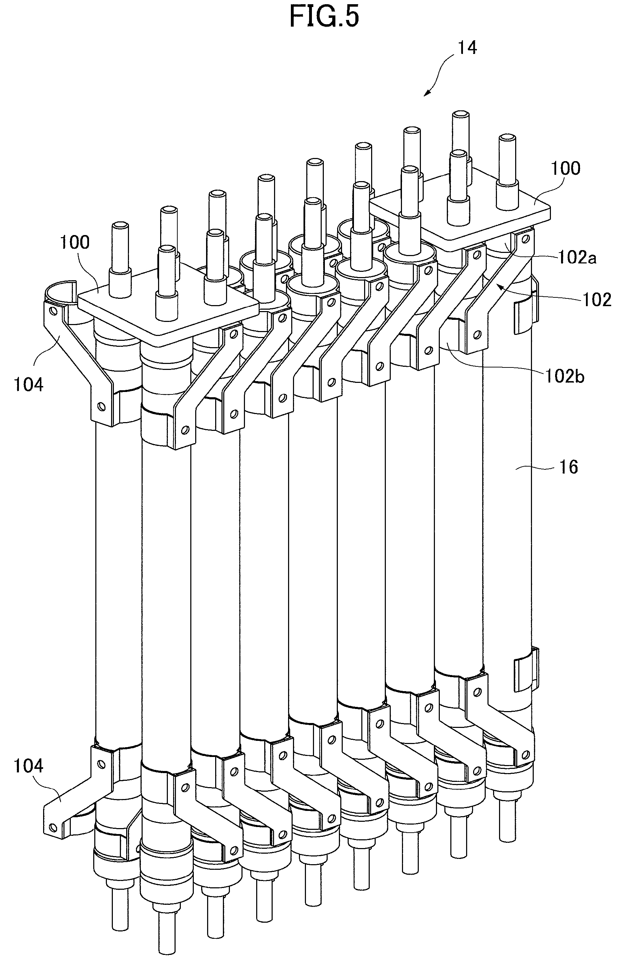

0047 Fuel cell module 2 comprises a housing 6; a metal case 8 is built into the interior of housing 6, mediated by insulation 7. Fuel cell assembly 12, which performs an electricity generating reaction using fuel gas and oxidant gas (air), is disposed on generating chamber 10, under case 8, which is a sealed space. This fuel cell assembly 12 comprises 10 fuel cell stacks 14 (see Fig. 5); fuel cell stacks 14 comprise 16 fuel cell units 16 (see Fig. 4). Thus fuel cell assembly 12 has 160 fuel cell units 16, and all of these fuel cell units 16 are connected in series.

0048 A combustion chamber 18, being a combustion section, is formed at the top of the above-described generating chamber 10 in case 8 of fuel cell module 2; residual fuel and residual oxidant (air) not used in the electrical generation reaction is combusted in this combustion chamber 18 to produce an exhaust gas. Furthermore, case 8 is covered by insulation 7, and diffusion to the outside atmosphere of heat inside fuel cell module 2 is suppressed.

Reformer 20 for reforming fuel is disposed at the top of combustion chamber 18; combustion heat from residual gas heats reformer 20 to a temperature at which the reforming reaction can occur. Disposed above this reformer 20 is an air-heat exchanger 22, being a heat exchanger for heating generating air using combustion gas from residual gas to pre-heat the generating air.

0049 Next auxiliary unit 4 comprises a pure water tank 26 which stores water obtained by condensing moisture contained in exhaust from fuel cell module 2 and purifies it using a filter, and a water flow volume regulator unit 28 (a "water pump" or the like driven by a motor) for adjusting the flow volume of water supplied from this water storage tank. Auxiliary unit 4 comprises a gas shutoff valve 32 for shutting off gas supplied from a municipal gas or other fuel supply source 30, a desulfurizer 36 for removing sulfur from fuel gas, a fuel flow regulator unit 38 (a motor-driven "fuel pump" or the like) for regulating the flow volume of fuel gas, and a valve 39 for shutting off fuel gas flowing out from fuel flow regulator unit 38 during a loss of power. Furthermore, auxiliary unit 4 comprises: an electromagnetic valve 42 for shutting off air, which is the oxidant gas supplied from air supply source 40, reforming air flow regulator unit 44 and generating air flow regulator unit 45 (a motor-driven "air blower" or the like), which regulate the flow volume air, first heater 46 for heating reforming air supplied to reformer 20, and second heater 48 for heating air supplied to the electrical generating chamber. This first heater 46 and second heater 48 are provided in order to efficiently raise the temperature at startup, but may also be omitted.

0050 Next, connected to fuel cell module 2 is a hot-water production device 50, supplied with exhaust gas. Tap water is supplied from water supply source 24 to this hot water production device 50; this tap water becomes hot water using the heat of the exhaust gas, and is supplied to an external hot water holding tank, not shown.

A control box 52 for controlling the amount of fuel gas supplied, etc. is connected to fuel cell module 2.

In addition, an inverter 54 serving as an electrical power extraction unit (electrical power conversion unit) for supplying electrical power generated by the fuel cell module to the outside is connected to fuel cell module 2.

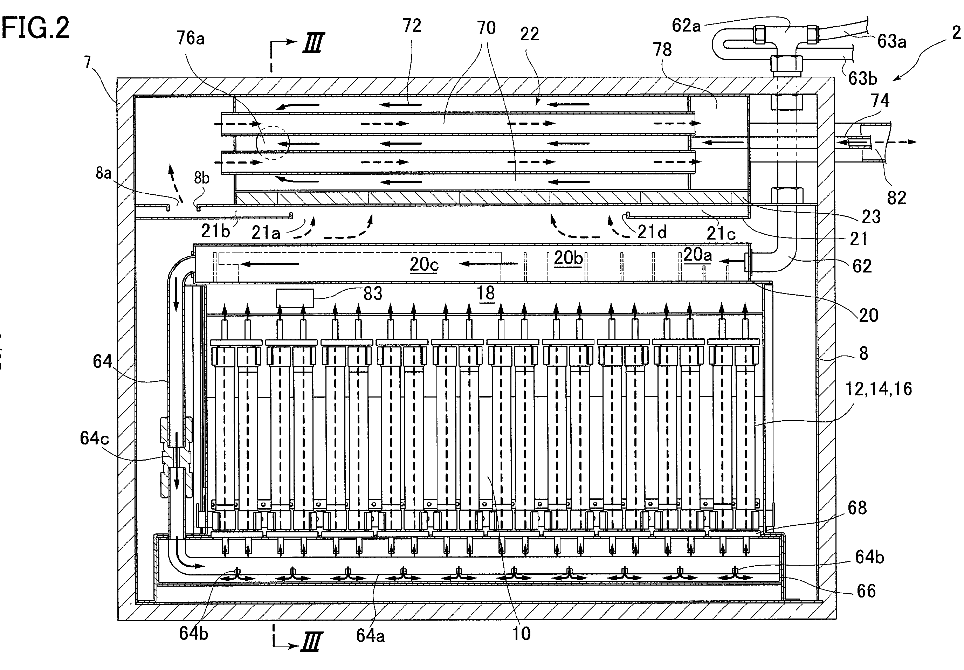

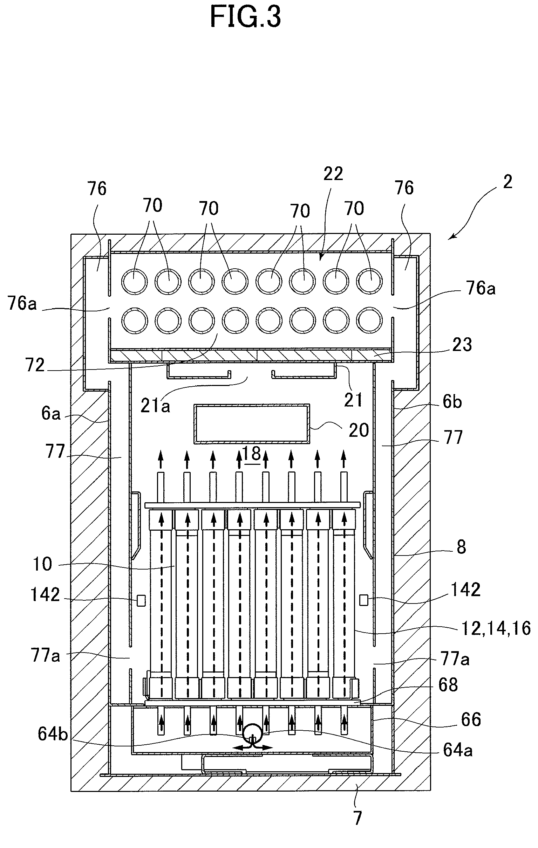

0051 Next, referring to Figs. 2 and 3, we explain the internal structure of the fuel cell module in a solid oxide fuel cell system (SOFC) according to a first embodiment of the present invention. Fig. 2 is a side elevation cross section showing a fuel cell module in a solid oxide fuel cell system (SOFC) according to a first embodiment of the present invention; Fig. 3 is a cross section along line III-III in Fig. 2.

As shown in Figs. 2 and 3, fuel cell assembly 12, reformer 20, and air heat exchanger 22 are disposed in order starting from the bottom, as described above, in case 8 within housing 6 of fuel cell module 2.

0052 A reformer introducing pipe 62 for introducing pure water, reformed fuel gas, and reforming air is attached to the end portion side surface on the upstream side of reformer 20.

Reformer introducing pipe 62 is a round pipe extending from the side wall surface at one end of reformer 20; it bends 90° and extends essentially in a plumb direction, penetrating the top end surface of case 8. Note that reformer-introducing pipe 62 functions as a water-introducing pipe for introducing water into reformer 20. T-pipe 62a is connected to the top end of reformer-introducing pipe 62, and piping for supplying fuel gas and pure water is respectively connected to both end portions of a pipe extending in approximately the horizontal direction of this T-pipe 62a. Water supply piping 63a extends diagonally upward from one end of T-pipe 62a. Fuel gas supply piping 63b extends horizontally from the other end of T-pipe 62a, then is bent in a U shape and extends approximately horizontally in the same direction as water supply piping 63a.

0053 At the same time, in order starting upstream, vaporizing section 20a, blending section 20b, and reforming section 20c are formed in the interior of reformer 20, and reforming section 20c is filled with reforming catalyst. Fuel gas and air, blended with steam (pure water) introduced into reformer 20, is reformed using the reforming catalyst with which reformer 20 is filled. Reforming catalysts in which nickel is applied to the surface of aluminum spheres, or ruthenium is applied to the surface of aluminum spheres, are used as appropriate.

0054 A fuel gas supply line 64 is connected to the downstream end of reformer 20; this fuel gas supply line 64 extends downward, then further extends horizontally within a manifold formed under fuel cell assembly 12. Multiple fuel supply holes 64b are formed on the bottom surface of the horizontal portion 64a of fuel gas supply line 64; reformed fuel gas is supplied into manifold 66 from these fuel supply holes 64b. A pressure fluctuation-suppressing flow resistance section 64c in which the flow path is narrowed is provided in the middle of the vertical portion of fuel gas supply pipe 64, and flow path resistance in the fuel gas supply flow path is thereby adjusted. Adjustment of flow path resistance is discussed below.

0055 A lower support plate 68 provided with through holes supporting the above-described fuel cell stack 14 is attached at the top of manifold 66, and fuel gas in manifold 66 is supplied into fuel cell units 16.

0056 At the same time, an air heat exchanger 22 is provided over reformer 20.

Also, as shown in Fig. 2, an ignition apparatus 83 for starting the combustion of fuel gas and air is disposed on combustion chamber 18.

0057 Next, referring to Fig. 4, we discuss fuel cell units 16. Fig. 4 is a partial cross section showing fuel cell units of a solid oxide fuel cell system (SOFC) according to a first embodiment of the present invention.

As shown in Fig. 4, individual fuel cells 16 comprise individual fuel cells 84 and inside electrode terminals 86, which are metal caps respectively connected to both side portions of individual fuel cells 84.

Fuel cell 84 is a tubular structure extending vertically, equipped with a cylindrical internal electrode layer 90, on the inside of which is formed a fuel gas flow path 88, a cylindrical external electrode layer 92, and an electrolyte layer 94 between internal electrode layer 90 and external electrode layer 92. This internal electrode layer 90 is a fuel electrode through which fuel gas passes, and has a (-) polarity, while the external electrode layer 92 is an air-contacting electrode with a (+) polarity.

0058 The internal electrode terminals 86 attached at the top and bottom ends of individual fuel cells 84 have the same structure, therefore here we specifically discuss internal electrode terminal 86 attached at the top end. The top portion 90a of inside electrode layer 90 comprises an outside perimeter surface 90b and top end surface 90c, exposed to electrolyte layer 94 and outside electrode layer 92. Inside electrode terminal 86 is connected to the outer perimeter surface of inside electrode layer 90 through conductive seal material 96, and is electrically connected to inside electrode layer 19 by direct contact with the top end surface 90c of inside electrode layer 90. Fuel gas flow path fine tubing 98 communicating with inside electrode layer 90 fuel gas flow path 88 is formed at the center portion of inside electrode terminal 86.

0059 This fuel gas flow path fine tubing 98 is elongated fine tubing disposed to extend in the axial direction of individual fuel cells 84 from the center of inside electrode terminals 86. Therefore a predetermined pressure loss occurs in the flow of fuel gas flowing from manifold 66 (Fig. 2) through the fuel gas flow path fine tubing 98 in the lower inside electrode terminals 86 into fuel gas flow path 88. Fuel gas flow path fine tubing 98 on the lower inside electrode terminals 86 therefore acts as an inflow-side flow resistance section, and the flow path resistance thereof is set at a predetermined value. A predetermined pressure loss also occurs in the flow of fuel gas flowing out from fuel gas flow path 88 through fuel gas flow path fine tubing 98 in upper inside electrode terminals 86 into combustion chamber 18 (Fig. 2). Therefore fuel gas flow path fine tubing 98 on the upper inside electrode terminals 86 acts as an outflow-side flow resistance section, and the flow path resistance thereof is set at a predetermined value.

0060 Inside electrode layer 90 is formed, for example, from at least one of a mixture of Ni and zirconia doped with at least one type of rare earth element selected from among Ni, Ca, Y, Sc, or the like; or a mixture of Ni and ceria doped with at least one type of rare earth element; or any mixture of Ni with lanthanum gallate doped with at least one element selected from among Sr, Mg, Co, Fe, or Cu.

0061 The electrolyte layer 94 is formed, for example, from at least one of the following: zirconia doped with at least one type of rare earth element selected from among Y, Sc, or the like; ceria doped with at least one type of selected rare earth element; or lanthanum gallate doped with at least one element selected from among Sr or Mg.

0062 Outside electrode layer 92 is formed, for example, from at least one of the following: lanthanum manganite doped with at least one element selected from among: Sr or Ca; lanthanum ferrite doped with at least one element selected from among Sr, Co, Ni, or Cu; lanthanum cobaltite doped with at least one element selected from among Sr, Fe, Ni, or Cu; silver, or the like.

0063 Next, referring to Fig. 5, we explain fuel cell stack 14. Fig. 5 is a perspective view showing a fuel cell stack in a solid oxide fuel cell system (SOFC) according to a first embodiment of the present invention.

As shown in Fig. 5, fuel cell stack 14 comprises 16 fuel cell units 16; these fuel cell units 16 are disposed in 2 rows of 8. The fuel cell units 16 is supported on the bottom side by a ceramic elongated lower support plate 68 (Fig. 2); on the top side it is supported by 2 approximately square upper support plates 100, on both sides of which are 4 of the fuel cell units 16 at both ends. Through holes through which inside electrode terminals 86 can penetrate are provided on this lower support plate 68 and outer support plates 100.

0064 In addition, a collector 102 and an external terminal 104 are attached to fuel cell units 16. This collector 102 is integrally formed to connect a fuel electrode connecting portion 102a, electrically connected to inside electrode terminal 86 attached to inside electrode layer 90 serving as fuel electrode, and an air electrode connecting portion 102b, electrically connected to the external perimeter of outside electrode layer 92 serving as air electrode. A silver thin film is formed as an air electrode-side electrode over the entirety of the outside surface of outside electrode layer 92 (air electrode) on each of the individual fuel cells units 16. The contact by air electrode connecting portion 102b with this thin film surface results in an electrical connection between current collector 102 and the entire air electrode.

0065 Furthermore, positioned at the ends of fuel cell stack 14, two external terminals 104 are respectively connected to the inside electrode terminals 86 on fuel cell units 16. These external terminals 104 are connected to the inside electrode terminals 86 on fuel cell units 16 at the edges of adjacent fuel cell stacks 14, and as described above, all 160 of the fuel cell units 16 are connected in series.

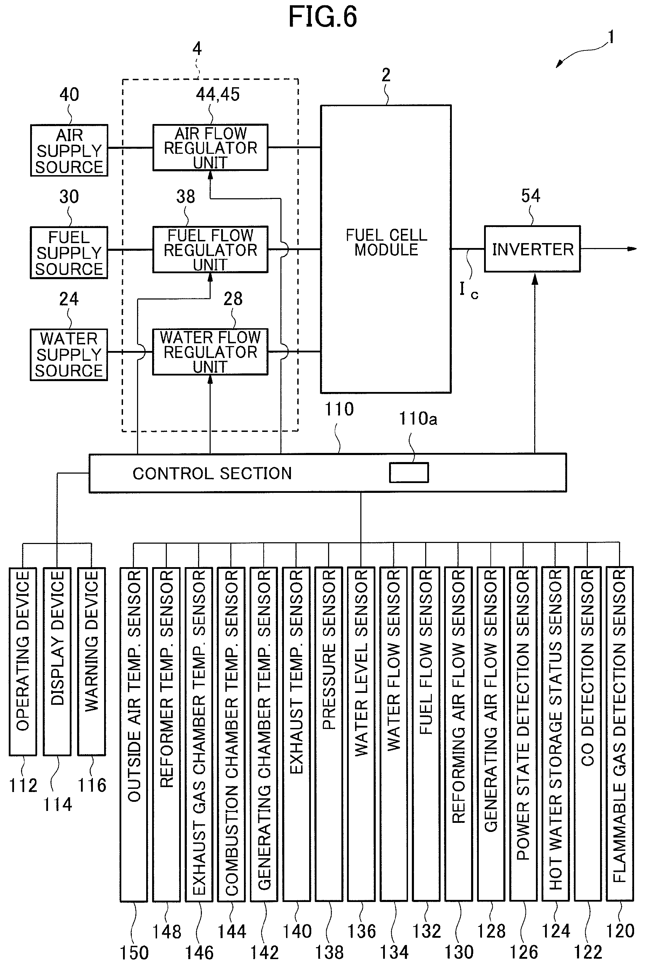

0066 Next, referring to Fig. 6, we explain the types of sensors attached to a solid oxide fuel cell system (SOFC) according to the present embodiment. Fig. 6 is a block diagram of a solid oxide fuel cell system (SOFC) according to a first embodiment of the present invention.

As shown in Fig. 6, a solid oxide fuel cell system 1 is furnished with a control section 110; connected to this control section 110 are an operating device 112 provided with operating buttons such as "ON" or "OFF" for user operation, a display device 114 for displaying various data such as a generator output value (Watts), and a notification device 116 for issuing warnings during abnormal states and the like. A microprocessor, memory, and program to operate these (the above are not shown) are built into control section 110; auxiliary unit 4, inverter 54, and the like are controlled by these, based on input signals from each of the sensors. Note that this notification device 116 may also be connected to a management center in a remote location to inform the management center of abnormal states.

0067 Next, signals from the various sensors described below are input to control section 110.

First, flammable gas detection sensor 120 has the purpose of detecting gas leaks, and is attached to fuel cell module 2 and auxiliary unit 4.

The purpose of flammable gas detection sensor 120 is to detect whether CO in the exhaust gas, which is supposed to be discharged to the outside via exhaust gas conduit 80, has leaked into the external housing (not shown) which covers fuel cell module 2 and auxiliary unit 4.

A water reservoir state detection sensor 124 detects the temperature and amount of hot water in a water heater (not shown).

0068 An electrical power state detection sensor 126 detects current, voltage, and the like in inverter 54 and in a distribution panel (not shown).

A generator air flow detection sensor 128 detects the flow volume of generating air supplied to generating chamber 10.

A reforming air flow volume sensor 130 detects the flow volume of reforming air supplied to reformer 20.

A fuel flow volume sensor 132 detects the flow volume of fuel gas supplied to reformer 20.

0069 A water flow volume sensor 134 detects the flow volume of pure water supplied to reformer 20.

A water level sensor 136 detects the water level in pure water tank 26.

Pressure sensor 138 detects pressure on the upstream side outside reformer 20.

An exhaust temperature sensor 140 detects the temperature of exhaust gas flowing into hot water producing device 50.

0070 As shown in Fig. 3, generating chamber temperature sensor 142 is disposed on the front surface side and rear surface side around fuel cell assembly 12, and has the purpose of detecting the temperature near fuel cell stack 14 and estimating the temperature of fuel cell stack 14 (i.e., of the fuel cells 84 themselves).

A combustion chamber temperature sensor 144 detects the temperature in combustion chamber 18.

Exhaust gas chamber temperature sensor 146 detects the temperature of exhaust gases in exhaust gas chamber 78.

Reformer temperature sensor 148 detects the temperature of reformer 20; it calculates the reformer 20 temperature from the intake and exit temperatures on reformer 20.

An outside temperature sensor 150 detects the outside temperature when a solid oxide fuel cell system (SOFC) is placed out of doors. Sensors to detect outside atmospheric humidity and the like may also be provided.

0071 Signals from these various sensors are sent to control section 110; control section 110 sends control signals to water flow regulator unit 28, fuel flow regulator unit 38, reforming air flow regulator unit 44, and generating air flow regulator unit 45 based on data from the sensors, and controls the flow volumes in each of these units.

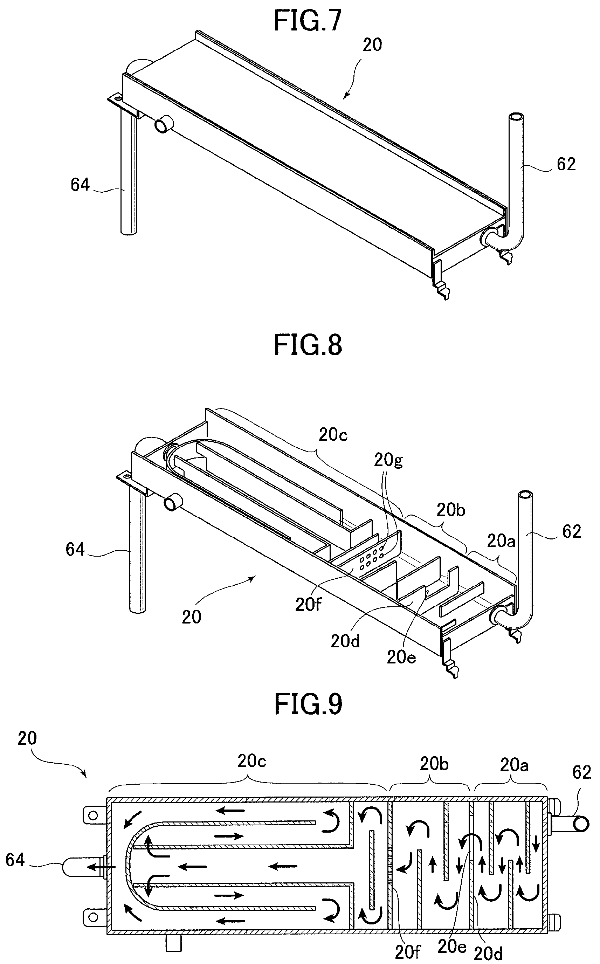

0072 Next, referring to Figs. 7 through 9, we explain the detailed constitution of reformer 20.

Fig. 7 is a perspective view of reformer 20; Fig. 8 is a perspective view showing the interior of reformer 20 with the top panel removed. Fig. 9 is a plan view cross section showing the flow of fuel inside reformer 20.

0073 As shown in Fig. 7, reformer 20 is a cuboid metal box, filled internally with a reforming catalyst for reforming fuel. A reformer introducing pipe 62 is connected on the upstream side of reformer 20 for introducing water, fuel, and reforming air. In addition, a fuel gas supply pipe 64 is connected on the downstream side of reformer 20 for discharging fuel reformed in the interior of reformer 20.

0074 As shown in Fig. 8, a vaporizing section 20a, being a vaporization chamber, is installed on the upstream side inside reformer 20; a blending section 20b is installed on the downstream side thereof, adjacent to vaporizing section 20a. Furthermore, a reforming section 20c is installed on the downstream side, adjacent to blending section 20b. A winding, serpentine passageway is formed within steam generating section 20a by the disposition of multiple partitioning plates. Water introduced into reformer 20 is vaporized at an elevated temperature inside vaporizing section 20a and becomes steam. Moreover, blending section 20b is constituted by a chamber having a predetermined volume; a winding, serpentine passageway is also formed on the interior thereof by the placement of multiple partitioning plates. Fuel gas and reforming air introduced into reformer 20 are mixed with steam produced in vaporizing section 20a as they pass through the winding passageway of blending section 20b.

0075 At the same time, a winding passageway is also formed inside reforming section 20c by the disposition of multiple partitioning plates, and this passageway is filled with catalyst. When a mixture of fuel gas, steam, and reforming air which has passed through vaporizing section 20a is introduced, a partial oxidation reforming reaction and a steam reforming reaction occur in reforming section 20c. In addition, when a mixture of residual gas and steam is introduced, only the steam reforming reaction occurs in reforming section 20c.

Note that in the present embodiment the vaporizing section, blending section, and reforming section are constituted as a single piece, but as a variant example a reformer comprising only a reforming section can be provided, with a blending section and vaporization chamber placed adjacent thereto on the upstream side.

0076 As shown in Figs. 8 and 9, fuel gas, water, and reforming air introduced into vaporizing section 20a of reformer 20 flows in a serpentine manner in a direction traversing reformer 20; the introduced water vaporizes and become steam. A steam/blending section partition 20d is provided between vaporizing section 20a and blending section 20b; a partition opening 20e is installed on this steam/blending section partition 20d. This partition opening 20e is a rectangular opening placed in approximately half the upper region in approximately one half of one side of steam/blending section partition 20d.

A blending/reforming section partition 20f is installed between blending section 20b and reforming section 20c; in this case a narrow flow path is formed by the placement of multiple communicating holes 20g in this blending/reforming section partition 20f. Fuel gas and the like blended inside blending section 20b flows into reforming section 20c through these communicating holes 20g.

0077 After flowing in the longitudinal direction at the center of reforming section 20c, fuel and the like which has flowed into reforming section 20c is split into two parts and reversed; the two passageways then reverse again and are merged, facing the downstream end, and flow into fuel gas supply pipe 64. As it passes through the passageway, winding in the serpentine manner described, fuel is reformed by the catalyst with which the passageway is filled. Note that in some cases, boiling occurs inside vaporizing section 20a, by which a certain quantity of water is suddenly vaporized in a short time period, causing internal pressure to rise. However, a chamber of predetermined volume is constituted in blending section 20b, and narrow passageways are formed in blending/reforming section partition 20f, making it difficult for sudden fluctuations inside vaporizing section 20a to affect reforming section 20c. Therefore the narrow passageways between blending section 20b and blending/reforming section partition 20f function as a pressure fluctuation absorption means.

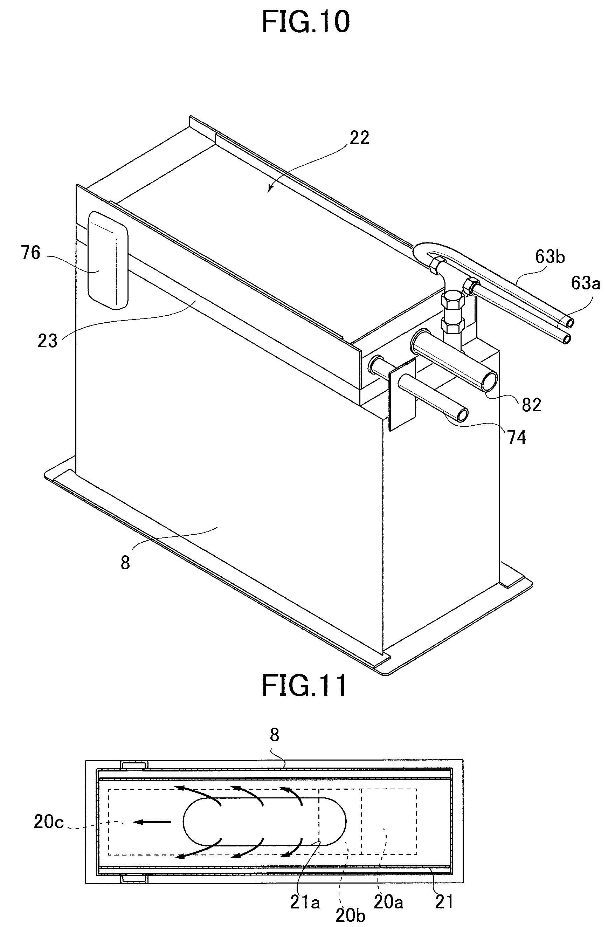

0078 Next, referring newly to Figs. 10 and 11, and again to Figs. 2 and 3, we explain details of the structure of air heat exchanger 22, which is a heat exchanger for oxidant gas used for electrical generation. Fig. 10 is a perspective view showing metal case 8 and air heat exchanger 22 housed inside housing 6. Fig. 11 is a cross section showing the positional relationship between the vaporization chamber insulation and the vaporizing section.

0079 As shown in Fig. 10, air heat exchanger 22 is a heat exchanger disposed at the top of case 8 in the fuel cell module 2. As shown in Figs. 2 and 3, a combustion chamber 18 is formed inside case 8, and multiple fuel cell units 16 and reformer 20, etc. are housed therein, therefore air heat exchanger 22 is positioned above these. Air heat exchanger 22 recovers heat from combustion gas combusted in combustion chamber 18 and discharged as exhaust and uses this heat to pre-heat air for electrical generation introduced into fuel cell module 2. As shown in Fig. 10, vaporization chamber insulation 23, being internal insulation, is sandwiched between the top surface of case 8 and the bottom surface of air heat exchanger 22. I.e., vaporization chamber insulation 23 is disposed between reformer 20 and air heat exchanger 22. In addition, insulation 7 (Fig. 2), being outside insulation, covers the outside of the air heat exchanger 22 and case 8 shown in Fig. 10.

0080 As shown in Figs. 2 and 3, air heat exchanger 22 has multiple combustion gas pipes 70 and generating air flow paths 72. As shown in Fig. 2, an exhaust gas collection chamber 78 is installed at one end portion on the multiple combustion gas pipes 70; this exhaust gas collection chamber 78 communicates with each of the combustion gas pipes 70. An exhaust gas discharge pipe 82 is connected to exhaust gas collection chamber 78. The other end portion of each of the combustion gas pipes 70 is left open; these open end portions communicate with the inside case 8 of combustion chamber 18 through communication openings 18a.

0081 Combustion gas pipes 70 are multiple metal round tubes directed in the horizontal direction; each round tube is respectively horizontally disposed. On the other hand generating air flow paths 72 are constituted by spaces outside each of the combustion gas pipes 70. An oxidant gas introducing pipe 74 (Fig. 10) is connected at the end portion on the exhaust gas discharge pipe 82 side of generating air flow paths 72; air outside fuel cell module 2 is introduced into generating air flow paths 72 through oxidant gas introducing pipe 74. Note that, as shown in Fig. 10, oxidant gas introducing pipe 74 projects outward in the horizontal direction from air heat exchanger 22, parallel to exhaust gas discharge pipe 82. Furthermore, a pair of connecting flow paths 76 (Fig. 3, Fig. 10) are connected to both sides of the other end portion of generating air flow paths 72, and generating air flow paths 72 and each of the connecting flow paths 76 are respectively joined through outlet ports 76a.

0082 As shown in Fig. 3, generating air supply paths 77 are respectively placed on both side surfaces of case 8. Each of the connecting flow paths 76 erected on both sides of air heat exchanger 22 respectively communicates with the top portion of generating air supply paths 77 installed on both sides of case 8. A large number of jet outlets 77a are arrayed in the horizontal direction at the bottom portion of each of the generating air supply paths 77. Air for electrical generation which has been supplied through each of the generating air supply paths 77 is jetted from the many jet outlets 77a toward the bottom side of fuel cell stack 14 in fuel cell module 2.

0083 A flow straightening plate 21, being a partition, is attached to the ceiling surface inside case 8, and an opening portion 21a is provided in flow straightening plate 21.

Flow straightening plate 21 is a plate material horizontally disposed between the ceiling surface of case 8 and reformer 20. This flow straightening plate 21 is constituted to align the flow of gas flowing upward from combustion chamber 18, guiding it to the entrance of air heat exchanger 22 (communication opening 8a in Fig. 2). Generating air and fuel gas flowing upward from combustion chamber 18 flows into the top side of flow straightening plate 21 through opening portion 21a formed at the center of flow straightening plate 21, then flows leftward in Fig. 2 through exhaust passageway 21b between the top surface of flow straightening plate 21 and the ceiling surface of case 8, and is guided to the entrance of air heat exchanger 22. As shown in Fig. 11, opening portion 21a is placed above reforming section 20c on reformer 20; gas rising through opening portion 21a flows to exhaust passageway 21b on the left side of Fig. 2 and Fig. 11, on the opposite side of vaporizing section 20a. Therefore in the space above vaporizing section 20a (the right side in Figs. 2 and 11), the flow of exhaust is slower than in the space above reforming section 20c, and acts as a gas retaining space 21c in which the flow of exhaust is detained.

0084 A vertical wall 21d is installed at the edge of opening portion 21a in flow straightening plate 21 over the entire perimeter thereof; this vertical wall 21d causes the flow path to be narrowed from the space at the bottom side of flow straightening plate 21 flowing into exhaust passageway 21b on the top side of flow straightening plate 21. Furthermore, a suspended wall 8b (Fig. 2) is also installed over the entire perimeter of the edge of communication opening 8a to allow exhaust passageway 21b and air heat exchanger 22 to communicate; the flow path flowing into air heat exchanger 22 from exhaust passageway 21b is narrowed by this suspended wall 8b. The flow path resistance in the passageway by which exhaust reaches the outside of fuel cell module 2 through air heat exchanger 22 from combustion chamber 18 is adjusted by the provision of this vertical wall 21d and suspended wall 8b. Adjustment of flow path resistance is discussed below.

0085 Vaporization chamber insulation 23 is attached to the bottom surface of air heat exchanger 22 so as to cover essentially the entirety thereof. Therefore vaporization chamber insulation 23 is disposed over the top of the entire vaporizing section 20a. This vaporization chamber insulation 23 is disposed to constrain the direct heating of the bottom surface of air heat exchanger 22 by high temperature gases inside exhaust passageway 21b and gas holding space 21c formed between the top surface of flow straightening plate 21 and the ceiling surface of case 8. Therefore during operation of fuel cell module 2, the amount of heat directly transferred from exhaust accumulated in the exhaust passageway at the top of vaporizing section 20a is low, and the temperature around vaporizing section 20a can easily rise. After fuel cell module 2 has been stopped, the disposition of vaporization chamber insulation 23 means that heat dissipation from reformer 20 is constrained, making it difficult for heat around vaporizing section 20a to be robbed by air heat exchanger 22, so the decline in the temperature of vaporizing section 20a is made gradual.

0086 Note that in order to suppress dissipation of heat to the outside, vaporization chamber insulation 23 is outside insulation covering the entirety of case 8 and air heat exchanger 22 in fuel cell module 2, disposed inside insulation 7, separate from insulation 7. Insulation 7 has higher thermal insulation characteristics than vaporization chamber insulation 23. I.e., the heat resistance between inside and outside surfaces of insulation 7 is greater than the heat resistance between the inside and outside surface of vaporization chamber insulation 23. In other words, if insulation 7 and vaporization chamber insulation 23 are constituted of the same material, insulation 7 will be thicker than vaporization chamber insulation 23.

0087 Next we explain the flow of fuel, generating air, and fuel gas during an electrical generation operation by solid oxide fuel cell system 1.

First, fuel is introduced into reformer 20 vaporizing section 20a through fuel gas supply piping 63b, T-pipe 62a, and reformer introducing pipe 62, and pure water is introduced into vaporizing section 20a through water supply piping 63a, T-pipe 62a, and reformer introducing pipe 62. Therefore supplied fuel and water is merged in T-pipe 62a, and is introduced into vaporizing section 20a through reformer introducing pipe 62. During an electrical generating operation, vaporizing section 20a is heated to a high temperature, therefore pure water introduced into vaporizing section 20a is vaporized relatively quickly to become steam. Vaporized steam and fuel are blended inside blending section 20b and flow into the reforming section 20c in reformer 20. Fuel introduced into reforming section 20c together with steam is here steam reformed into a fuel gas rich in hydrogen. Fuel reformed in reforming section 20c descends through fuel gas supply pipe 64 and flows into manifold 66, which is a dispersion chamber.

0088 Manifold 66 is a cuboid space of a relatively large volume disposed on the bottom side of fuel cell stack 14; a large number of holes disposed on the top surface thereof communicate with the inside of the fuel cell units 16 constituting fuel cell stack 14. Fuel introduced into manifold 66 flows out through the large number of holes on the top surface thereof, through the fuel electrode side of fuel cell units 16, i.e. the interior of fuel cell units 16, from the top end thereof. When hydrogen gas, which is fuel, passes through the interior of fuel cell units 16, it reacts with oxygen in the air passing outside fuel cell units 16, which are air electrodes (oxidant gas electrodes), producing a charge. Residual fuel remaining unused for electrical generation flows out from the top ends of the fuel cell units 16 and is combusted inside the combustion chamber 18 disposed at the top of fuel cell stack 14.

0089 At the same time, oxidant gas, which is the air used for electrical generation, is fed through oxidant gas introducing pipe 74 by generating air flow regulator unit 45, which is a generating oxidant gas supply apparatus, into fuel cell module 2. Air fed into fuel cell module 2 is introduced into generating air flow paths 72 in air heat exchanger 22 through oxidant gas introducing pipe 74, and is preheated. Preheated air flows out to each of the connecting flow paths 76 through each of the exit ports 76a (Fig. 3). Generating air flowing into each of the connecting flow paths 76 flows through the generating air supply paths 77 formed on both sides of fuel cell module 2, and is jetted from a large number of jet outlets 77a into generating chamber 10 toward fuel cell stack 14.

0090 Air jetted into generating chamber 10 contacts the outside surface of fuel cell units 16, which is the air electrode side (oxidant gas electrode side) of fuel cell stack 14, and a portion of the oxygen in the air is used for electrical generation. Air jetted into the bottom portion of generating chamber 10 through jet outlets 77a rises inside generating chamber 10 as it is used for electrical generation. Air which has risen inside generating chamber 10 causes fuel flowing out from the top end of fuel cell units 16 to combust. The combustion heat from this combustion heats the vaporizing section 20a, blending section 20b, and reforming section 20c of the reformer 20 disposed on top of fuel cell stack 14. After heating the upper reformer 20, combustion gas produced by the combustion of fuel passes through the upper opening portion 21a on reformer 20 and flows into the top side of flow straightening plate 21. Combustion gas flowing into the top side of flow straightening plate 21 is directed through the exhaust passageway 21b constituted by flow straightening plate 21 into communication opening 8a, which is the entrance to air heat exchanger 22. Combustion gas flowing into air heat exchanger 22 from communication opening 8a flows into the end portion of each of the opened combustion gas pipes 70, is subjected to heat exchange with generating air flowing in generating air flow paths 72 on the outside of each of the combustion gas pipes 70, and is collected in exhaust gas collection chamber 78. Exhaust gas collected in exhaust gas collection chamber 78 is discharged through exhaust gas discharge pipe 82 to outside fuel cell module 2. Vaporization of water in vaporizing section 20a and the endothermic steam reforming reaction in reforming section 20c are promoted, and generating air inside air heat exchanger 22 is preheated.

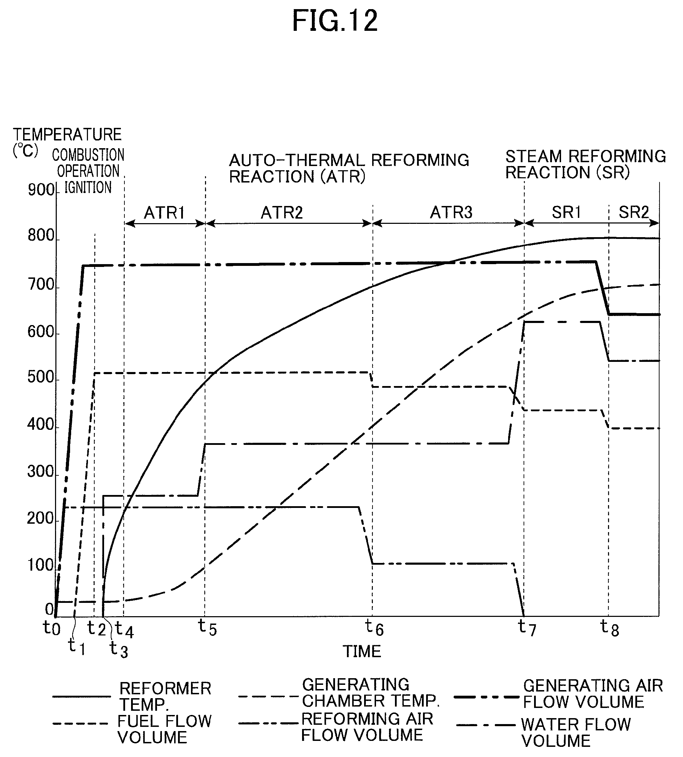

0091 Next, referring newly to Fig. 12, we explain control in the startup step of solid oxide fuel cell system 1.

Fig. 12 is a timing chart showing an example of the various supply amounts and temperatures of different parts in the startup step. Note that the scale markings on the vertical axis in Fig. 12 indicate temperature, and the supply amounts of fuel indicate the increases and decreases thereof in a summary manner.

0092 In the startup step shown in Fig. 12, the temperature of the fuel cell stack 14 at room temperature is raised to a temperature at which electricity can be generated.

First, at time t0 in Fig. 12, the supply of generating air and reforming air is started. Specifically, control section 110, which is a controller, sends a signal to generating air flow regulator unit 45, which is an apparatus for supplying oxidant gas for generation, activating same. As described above, generating air is introduced into fuel cell module 2 via generating air introducing pipe 74, and flows into generating chamber 10 through air heat exchanger 22 and generating air supply paths 77. Control section 110 sends a signal to reforming air flow regulator unit 44, which is an apparatus for supplying oxidant gas for reforming, activating same. Reforming air introduced into fuel cell module 2 passes through reformer 20 and manifold 66 into fuel cell units 16, and flows out of the top end thereof. Note that at time t0, because fuel is still not being supplied, no reforming reaction takes place inside reformer 20. In the present embodiment, the supply amount of generating air started at time t0 in Fig. 12 is approximately 100L/min, and the supply amount of reforming air is approximately 10.0L/min.

0093 Next, supply of fuel is begun at time t1, a predetermined time after time t0 in Fig. 12. Specifically, control section 110 sends a signal to fuel flow regulator unit 38, which is a fuel supply apparatus, activating same. In the present embodiment, the supply amount of fuel started at time t1 is approximately 5.0L/min. Fuel introduced into fuel cell module 2 passes through reformer 20 and manifold 66 into fuel cell units 16 and flows out of the top end thereof. Note that at time t1, because the reformer temperature is still low, no reforming reaction takes place inside reformer 20.

0094 Next, a step for igniting supplied fuel is started at time t2 after the elapse of a predetermined time from time t1. Specifically, the ignition step control section 110 sends a signal to ignition apparatus 83 (Fig. 2), which is an ignition means, igniting the fuel flowing out of the top end of the fuel cell units 16. Ignition apparatus 83 generates repeated sparks in the vicinity of the top end of fuel cell stack 14, igniting fuel flowing out from the top end of the fuel cell units 16.

0095 When ignition is completed at time t3 in Fig. 12, the supply of reforming water is started. Specifically, control section 110 sends a signal to water flow volume regulator unit 28 (Fig. 6), which is a water supply apparatus, activating same. In the present embodiment, the amount of water supplied starting at time t3 is 2.0 cc/min. At time t3, the fuel supply apparatus is maintained at the previous level of approximately 5.0 L/min. The amount of generating air and reforming air supplied is also maintained at the previous values. Note that at time t3, the ratio O₂ of oxygen O₂ in reforming air to carbon C in fuel is approximately 0.32.

0096 After ignition has occurred at time t3 in Fig. 12, supplied fuel flows out from the top end of each individual fuel cell unit 16 as off-gas, and is here combusted. This combustion heat heats reformer 20 disposed above the fuel cell stack 14. Here vaporization chamber insulation 23 is disposed above reformer 20 (at the top of case 8), and by this means the temperature of the reformer 20 rises suddenly from room temperature immediately following the start of fuel combustion. Because outside air is introduced into air heat exchanger 22 disposed over vaporization chamber insulation 23, the temperature of air heat exchanger 22 is low, particularly immediately after start of combustion, and so can easily become a cooling source. In the present embodiment, because vaporization chamber insulation 23 is disposed between the top surface of case 8 and the bottom surface of air heat exchanger 22, movement of heat from reformer 20 disposed at the top inside case 8 to air heat exchanger 22 is constrained, and heat tends to retreat to the vicinity of reformer 20 inside case 8. In addition, the space on the top side of flow straightening plate 21 at the top of reformer 20 is constituted as a gas holding space 21c (Fig. 2) in which fuel gas flow is slowed, therefore a double insulation around vaporizing section 20a is achieved, and the temperature rises even more rapidly.

0097 Thus by the rapid rise in the temperature of vaporizing section 20a it is possible to produce steam in a short time after off-gas begins to combust. Also, because reforming water is supplied to vaporizing section 20a in small amounts at a time, water can be heated to boiling with a very small heat compared to when a large amount of water is stored in vaporizing section 20a, and the supply of steam can be rapidly started. Furthermore, since water flows in from water flow regulator unit 28, excessive temperature rises in the vaporizing section 20a caused by delays in the supply of water, as well as delays in the supply of steam, can be avoided.

0098 Note that when a certain amount of time has elapsed after the start of off-gas combustion, the temperature of air heat exchanger 22 rises due to exhaust gas flowing into air heat exchanger 22 from combustion chamber 18. Vaporization chamber insulation 23, which insulates between reformer 20 and air heat exchanger 22, is placed on the inside of heat insulation 7. Therefore vaporization chamber insulation 23 does not suppress the dissipation of heat from fuel cell module 2; rather it is disposed in order to cause the temperature of reformer 20, and particularly vaporizing section 20a thereof, to rise rapidly immediately following combustion of off-gas.

0099 Thus at time t4, when the temperature of reformer 20 has risen rapidly, the fuel and reforming air flowing into reformer section 20b via vaporizing section 20a causes the partial oxidation reforming reaction shown in Expression (1).

CₘHₙ + xO₂ → aCO₂ + bCO + cH₂ (1)

Because this partial oxidation reforming reaction is an exothermic reaction, there are local sudden rises in the surrounding temperature when the partial oxidation reforming reaction takes place inside reformer section 20b.

0100 On the other hand, in the present embodiment the supply of reforming water starts from time t3 immediately following confirmation of ignition, and the temperature of vaporizing section 20a rises suddenly, therefore at time t4, steam is produced in vaporizing section 20a and supplied to reformer section 20b. I.e., after the off-gas has been ignited, water is supplied starting at a predetermined duration prior to when reformer section 20b reaches the temperature at which the partial oxidation reforming reaction occurs, and at the point when the partial oxidation reforming reaction temperature is reached, a predetermined amount of water is held in vaporizing section 20a, and steam is produced. Therefore when the temperature rises suddenly due to the occurrence of the partial oxidation reforming reaction, a steam reforming reaction takes place in which reforming steam and fuel being supplied to reformer section 20b react. This steam reforming reaction is the endothermic reaction shown in Expression (2); it occurs at a higher temperature than the partial oxidation reforming reaction.

CₘHₙ + xH₂O → aCO₂ + bCO + cH₂ (2)

0101 Thus when time t4 in Fig. 12 is reached, a partial oxidation reforming reaction takes place inside reformer section 20b, and the temperature rise caused by the occurrence of the partial oxidation reforming reaction causes the steam reforming reaction to simultaneously occur. Therefore the reforming reaction which takes place in reformer section 20b starting at time t4 is an auto-thermal reforming reaction (ATR) indicated by Expression (3), in which the partial oxidation reforming reaction and the steam reforming reaction are both present. I.e., the ATR step is started at time t4.

CₘHₙ + xO₂ + yH₂O → aCO₂ + bCO + cH₂ (3)

0102 Thus in solid oxide fuel cell system 1 according to a first embodiment of the present invention, water is supplied during the entire period of the startup step, and no partial oxidation reforming reactions (POX) occurs independently. Note that in the timing chart shown in Fig. 12, the reformer temperature at time t4 is approximately 200°C. This reformer temperature is lower than the temperature at which the partial oxidation reforming reaction occurs, but the temperature detected by reformer temperature sensor 148 (Fig. 6) is the average temperature in reformer section 20b. In actuality, even at time t4 reformer section 20b has partially reached the temperature at which partial oxidation reforming reactions occur, and a steam reforming reaction is also induced by the reaction heat of the partial oxidation reforming reaction that does arise. Thus in the present embodiment, after ignition the supply of water begins before the time when reformer section 20b reaches the partial oxidation reforming reaction temperature, and no partial oxidation reforming reaction occurs independently.

0103 Next, when the temperature detected by reformer temperature sensor 148 reaches approximately 500°C or greater, the system transitions from the ATR1 step to the ATR2 step at time t5 in Fig. 12. At time t5, the water supply amount is changed from 2.0 cc/min to 3.0 cc/min. The previous values are maintained for the fuel supply amount, reforming air supply amount, and generating air supply amount. The ratio S/C for steam and carbon in the ATR2 step is thereby increased to 0.64, whereas the ratio between reforming air and carbon O₂/C is maintained at 0.32. Thus by increasing the steam to carbon ratio S/C while holding fixed the reforming air to carbon ratio O₂/C, the amount of steam-reformable carbon is increased without reducing the amount of partial oxidation reformable carbon. By so doing, the temperature of reformer section 20b can be raised and the amount of steam-reformed carbon increased, while reliably avoiding the risk of carbon deposition in reformer section 20b.

0104 Furthermore, the system transitions from the ATR2 step to the ATR3 step when the temperature detected by generating chamber temperature sensors 142 reaches approximately 400°C or greater at time t6 in Fig. 12. The reforming air supply amount is thus changed from 5.0 L/min to 4.0 L/min, and the reforming air supply amount is changed from 9.0 L/min to 6.5 L/min. The previous values are maintained for the water supply amount and generating air supply amount. The ratio S/C for steam and carbon in the ATR3 step is thereby increased to 0.80, whereas the ratio between reforming air and carbon O₂/C is reduced to 0.29.

0105 Furthermore at time t7 in Fig. 12, when the temperature detected by generating chamber temperature sensors 142 reaches approximately 550°C or greater, the system transitions to the SR1 step. In conjunction with this, the fuel supply amount is changed from 4.0 (L/min) to 3.0 L/min, and the water supply amount is changed from 3.0 (cc/min). Supply of reforming air is stopped, and the generating air supply amount is maintained at the previous value. Thus in the SR1 step, the steam reforming reaction is already occurring within reformer section 20b, and the steam to carbon ratio S/C is set to 2.49, appropriate for steam reforming the entire amount of supplied fuel. At time t7 in Fig. 12, the temperatures of both reformer 20 and fuel cell stack 14 have risen sufficiently, therefore the steam reforming reaction can be stably brought about even if no partial oxidation reforming reaction is occurring in reformer section 20b.

0106 Next, at time t8 in Fig. 12, when the temperature detected by generating chamber temperature sensors 142 reaches approximately 600°C or greater, the system transitions to the SR2 step. In conjunction with this, the fuel supply amount is changed from 3.0 (L/min) to 2.5 L/min, and the water supply amount is changed from 7.0 (cc/min) to 6.0 cc/min. The generating air supply amount is maintained at the previous value. In the SR2 step the water to carbon ratio S/C is thus set to 2.56.

0107 Moreover, after the SR2 has been executed for a predetermined time, the system transitions to the electrical generation step. In the electrical generating step, power is extracted from fuel cell stack 14 to inverter 54 (Fig. 6), and electrical generation is begun. Note that in the electrical generation step, fuel is already reformed by steam reforming in reformer section 20b. Also, in the electrical generation step, the fuel supply amount, generating air supply amount, and water supply amount are changed in response to the output power demanded of fuel cell module 2.

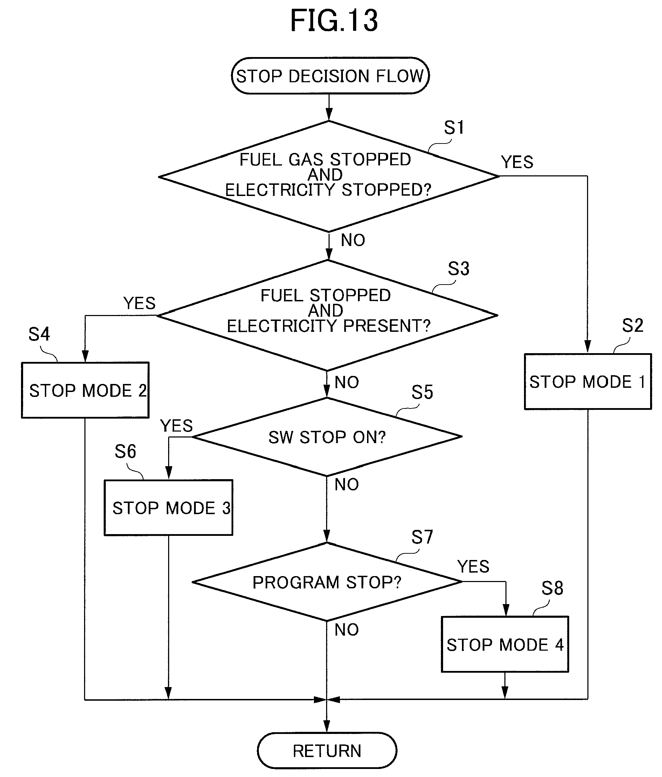

0108 Next, referring to Figs. 13 through 22 and Fig. 28, we explain the stopping of a solid oxide fuel cell system 1 according to a first embodiment of the present invention.

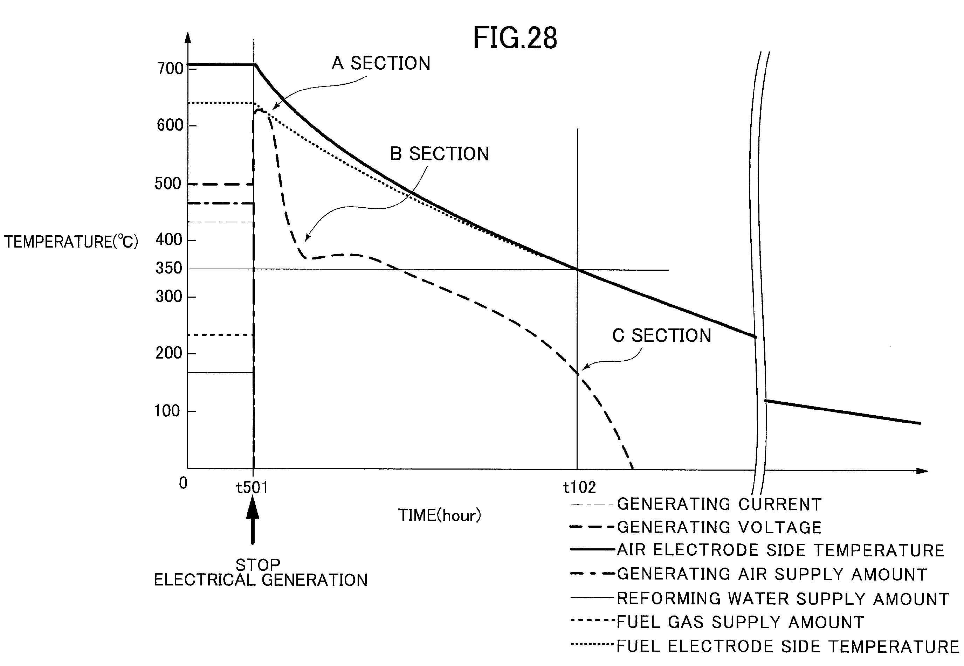

First, referring to Fig. 28, we explain the behavior at the time of shutdown stop in a conventional solid oxide fuel cell system. Fig. 28 is a timing chart schematically showing on a time line an example of stopping behavior in a conventional solid oxide fuel cell system.

0109 First, at time t501 in Fig. 28, a shutdown stop operation is performed on a fuel cell which had been generating electricity. Thus the fuel supply amount, reforming water supply amount, and generating air supply amount are brought to zero without waiting for the temperature inside the fuel cell module to decline, and the current (generating current) extracted from the fuel cell module is also brought to zero. I.e., the fuel, water, and generating air supply to the fuel cell module are stopped in a short time period, and the extraction of power from the fuel cell module is stopped. Even when there is a loss in supply of fuel and electricity to the solid oxide fuel cell system due to natural disaster, etc., the stopping behavior is the same as in Fig. 28. Note that each of the supply amount, current, and voltage graphs in Fig. 28 merely illustrates a change trend, and does not indicate specific values.

0110 As a result of the stopping of power extraction at time t501, the voltage value produced in the fuel cell stack rises (however, current is zero). Because the supply of generating air is brought to zero at time t501, the fuel cell stack is naturally cooled over a long period after time t501 without forcibly feeding air into the fuel cell module.

0111 If, hypothetically, air continues to be supplied into the fuel cell module after time t501, the pressure inside the fuel cell module will rise due to the fed-in air. On the other hand, the supply of fuel has already been stopped, so pressure inside the fuel cell units starts to drop. Air fed into the generating chamber of the fuel cell module may therefore conceivably flow in reverse on the fuel electrode side within the fuel cell units. Since the fuel cell stack is in a high temperature state at time t501, a reverse flow of air on the fuel electrode side leads to oxidation of the fuel electrode and damage to the fuel cell units. To avoid this, in a convention fuel cell, as shown in Fig. 28, generating air was also quickly stopped immediately after the supply of fuel was stopped by a shutdown, even if the supply of power was lost.

0112 Moreover, after the elapse of 6 to 7 hours following a shutdown stop, when the temperature inside the fuel cell module has dropped to under a lower limit temperature for fuel electrode oxidation, air is again supplied into the fuel cell module (not shown). Such supplying of air is executed with the object of discharging remaining fuel gas, but when the fuel cell stack temperature has dropped to under a lower limit temperature for fuel electrode oxidation, there will be no fuel electrode oxidation even if a reverse flow of oxygen to the fuel electrode has occurred.

0113 However the present inventor realized that even if a shutdown stop is performed in this type of conventional fuel cell, there still a risk of a reverse flow of air to the fuel electrode side, causing oxidation of the fuel electrode.

0114 A reverse flow of air from the air electrode side to the fuel electrode side occurs based on a pressure differential between the inside (fuel electrode side) and the outside (air electrode side) of the fuel cell unit. In the state prior to a shutdown stop, when fuel gas and generating air are being supplied, reformed fuel is being fed under pressure to the fuel electrode side of the fuel cell unit. On the other hand, generating air is also being fed into the air electrode side of the fuel cell unit. In this state, the pressure on the fuel electrode side of the fuel cell unit is higher than the pressure on the air electrode side, and fuel is jetted from the fuel electrode side to the air electrode side of the fuel cell unit.

0115 Next, when the supply of fuel gas and generating air is stopped by a shutdown stop, fuel is jetted from the fuel electrode side, which was in a high pressure state, to the low pressure air electrode side. Since the pressure on the air electrode side inside the fuel cell module is also higher than the outside air pressure (atmospheric pressure), after a shutdown stop air on the air electrode side inside the fuel cell module (and fuel gas jetted from the fuel electrode side) is exhausted through the exhaust pathway to outside the fuel cell module. Therefore after a shutdown stop, the pressures at both the fuel electrode side and the air electrode side of the fuel cell unit decline, ultimately converging to atmospheric pressure. Therefore the behavior of the declining pressure on the fuel electrode side and air electrode side are affected by the flow path resistance between the fuel electrode side and air electrode side of the fuel cell unit, the flow path resistance between the air electrode side inside the fuel cell module and the outside air, and so forth. Note that in a state whereby pressures on the fuel electrode and air electrode side are equal, air on the air electrode penetrates the fuel electrode side through diffusion.

0116 In actuality, however, because the interior of the fuel cell module is at a high temperature, the pressure behavior after a shutdown stop is also affected by temperature changes on the fuel electrode side and the air electrode side. For example, if the temperature on the fuel electrode side of the fuel cell unit drops more suddenly than on the air electrode side, the volume of fuel gas inside the fuel cell unit shrinks, causing a drop in pressure on the fuel electrode side and a reverse flow of air. Thus the pressure on the fuel electrode side and air electrode side after a shutdown stop is affected by the flow path resistance in each part of the fuel cell module, the temperature distribution and stored heat amounts within the fuel cell module, and so forth, and changes in an extremely complex manner.

0117 The gas component present on the fuel electrode side and air electrode side of the fuel cell unit can be estimated based on the fuel cell stack output pressure when no current is being extracted (output current = 0). As shown by the heavy dotted line in Fig. 28, immediately after the shutdown at time t501, the output voltage from the cell stack suddenly rises (part A in Fig. 28). This is because immediately after a shutdown stop, a large amount of hydrogen is present on the fuel electrode side, and air is present on the air electrode side, while the current extracted from the cross section is set at 0. Next, the output pressure of the cell stack drops suddenly (part B in Fig. 28), but this is assumed to be due to the fact that the hydrogen present on the fuel electrode side of each of the fuel cell units flows out so that the concentration of hydrogen on the fuel electrode side declines, while the outflowing hydrogen causes the concentration of air on the air electrode side to decline.

0118 Next, the output voltage from the cell stack drops with the passage of time, and when the temperature inside the fuel cell module has dropped to below the oxidation lower limit temperature (part C in Fig. 28), the output voltage has dropped greatly. In this state it is estimated that there is almost no hydrogen remaining on the fuel electrode side of each of the fuel cell units, and in a conventional fuel cell the fuel electrode would be exposed to the risk of oxidation. In reality it is believed that in most cases in a conventional fuel cell a phenomenon arises whereby the pressure on the fuel electrode side falls more than the pressure on the air electrode side before the temperature inside the fuel cell module drops to below the oxidation lower limit temperature, producing an adverse effect on the fuel cell units.

0119 Also, depending on the fuel cell module structure and the operating conditions prior to the shutdown stop, a phenomenon (not shown) arises whereby the temperature at the top of the fuel cell module rises after a shutdown stop, notwithstanding that the supply of fuel has been stopped. I.e., for about an hour after a shutdown stop, the temperature inside the fuel cell module in some cases rises more than during the electrical generation operation. This type of temperature rise is believed to be caused by the fact that the endothermic steam reforming reaction which had been occurring inside the reformer during an electrical generation operation ceases to occur when the supply of fuel stops, while at the same time the fuel remaining inside the fuel cell units and in the manifold which distributes fuel to those units continues to be combusted in the combustion chamber even after the supply of fuel stops.

0120 Thus while on the one hand the temperature near the reformer inside the fuel cell module is rising, the heat of electrical generation ceases to be produced in the fuel cell stack due to the cessation of current extraction from the fuel cell stack. Therefore in contrast to the rise in pressure accompanying the rise in temperature at the top of the fuel cell stack, the pressure inside the fuel cell units drops due to the fall in temperature. As a result of this temperature slope inside the fuel cell module, the pressure on the fuel electrode side in each of the fuel cell units in some cases becomes lower than the pressure on the air electrode side. In such cases, there is a high potential that air on the air electrode side outside the fuel cell unit will reverse flow to the interior fuel electrode side, damaging the fuel cell unit.

0121 In the solid oxide fuel cell system 1 of the first embodiment of the present invention, an appropriate value is set for the flow path resistance in each part within the fuel cell module, and the risk of oxidation of the fuel electrode is greatly suppressed by the control provided by the shutdown stop circuit 110a (Fig. 6) built into control section 110.

0122 Next, referring to Figs. 13 through 22, we explain the stopping of a solid oxide fuel cell system 1 according to a first embodiment of the present invention.

Fig. 13 is a flow chart of the stopping decision which selects a stop mode in a solid oxide fuel cell system 1 according to a first embodiment of the present invention. The purpose of the Fig. 13 flow chart is to determine which of the stop modes to select based on predetermined conditions; during operation of the solid oxide fuel cell system 1, this flow chart sequence is repeated at a predetermined time interval.

0123 In step S1 of Fig. 13, a determination is made as to whether the supply of fuel gas from fuel supply source 30 (Fig. 1) and the supply of power from a commercial power source have been stopped. If the supplies of both fuel gas and power have been stopped, the system advances to step S2; at step S2, stop mode 1, which is the emergency stop mode, is selected, and one iteration of the processing in the Fig. 13 flow chart is completed. When stop mode 1 is selected, it is assumed that the supply of fuel gas and power has been stopped by a natural disaster or the like; the frequency with which this type of stoppage occurs is expected to be extremely rare.

0124 On the other hand, when at least either fuel gas or power is being supplied, the system advances to step S3, and in step S3 a decision is made as to whether the supply of fuel gas has been stopped and power is being supplied. When the supply of fuel gas has been stopped and power is being supplied, the system advances to step S4; in cases other than this the system advances to step S5. In step S4, stop mode 2, which is one of the normal stop modes, is selected, and one iteration of the Fig. 13 flow chart processing is completed. When stop mode 2 is selected, a temporary stoppage of the supply of fuel gas due to construction or the like is assumed to have occurred in the fuel gas supply path; the frequency with which this type of stopping occurs is expected to be low.

0125 Furthermore, in step S5 a determination is made as to whether a stop switch has been operated by a user. If a user has operated a stop switch, the system advances to step S6; if the switch has not been operated, the system advances to step S7. In step S6, stop mode 3 is selected as one of the switch stop modes among the normal stop modes, is selected, and one iteration of the Fig. 13 flow chart processing is completed. The presumed situation for a selection of stop mode 3 is that a user of the solid oxide fuel cell system 1 has been absent for a long period, such that operation of solid oxide fuel cell system 1 was intentionally stopped over a relatively long time period; the frequency of this type of stoppage is not believed to be very great.

0126 In step S7, on the other hand, a determination is made of whether the stop is a regular stop, executed at a pre-planned regular timing. If the stop is a regular stop, the system advances to step S8; if it is not a regular stop, one iteration of the Fig. 13 flow chart is completed. In step S6, stop mode 3 is selected in the same way as a switch stop mode, as one of the program stop mode among the normal stop modes and one iteration of the Fig. 13 flow chart processing is completed. Responding to an intelligent meter installed on fuel supply source 30 is assumed as a circumstance for executing a program stop mode. I.e., in general if an intelligent meter (not shown) is installed on fuel supply source 30, and there is no period longer than approximately 1 hour during which the supply of gas is completely turned off over approximately a 1 month interval, the intelligent meter judges that a gas leak is occurring and cuts off the supply of fuel gas. In general, therefore, solid oxide fuel system 1 should be stopped for roughly 1 hour or more approximately once per month. As a result, it is anticipated that a stoppage by stop mode 4 will be performed at a frequency of approximately once per month, and that this will be the most frequently performed stoppage.

0127 Note that if the supply of power is stopped and the supply of fuel gas is continued, neither of the stop modes will be selected according to the Fig. 13 flow chart. In such cases, in a solid oxide fuel cell system 1 according to the embodiment, electrical generation can be continued by activating auxiliary unit 4 using power produced by fuel cell stack 14. Note that the invention can also be constituted to stop electrical generation if the supply of power stays stopped continuously over a predetermined long time period.

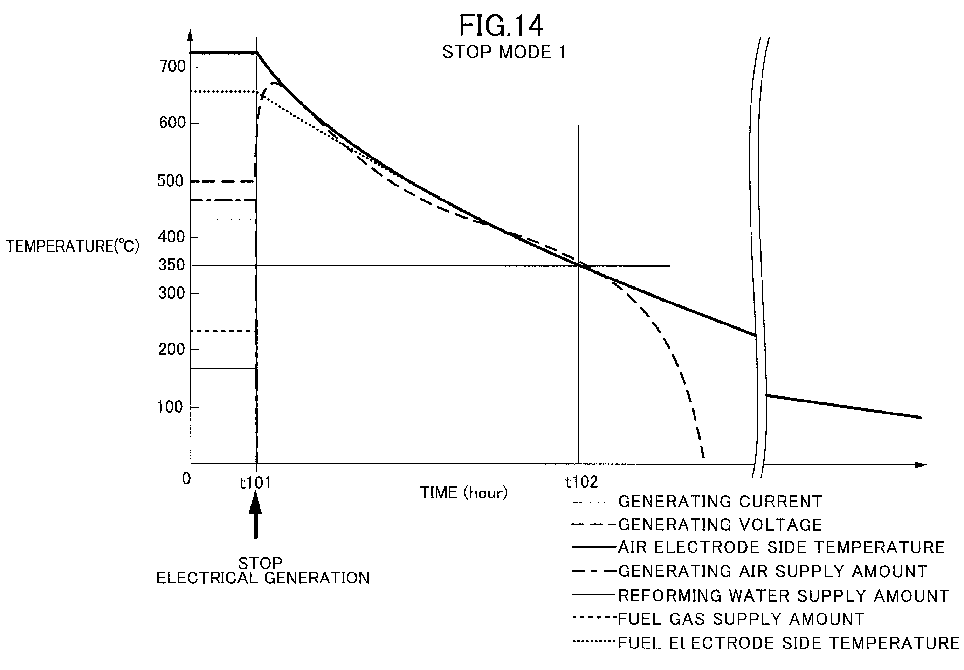

0128 Next, referring to Figs. 14 through 22, we explain the stop processing in each stop mode.

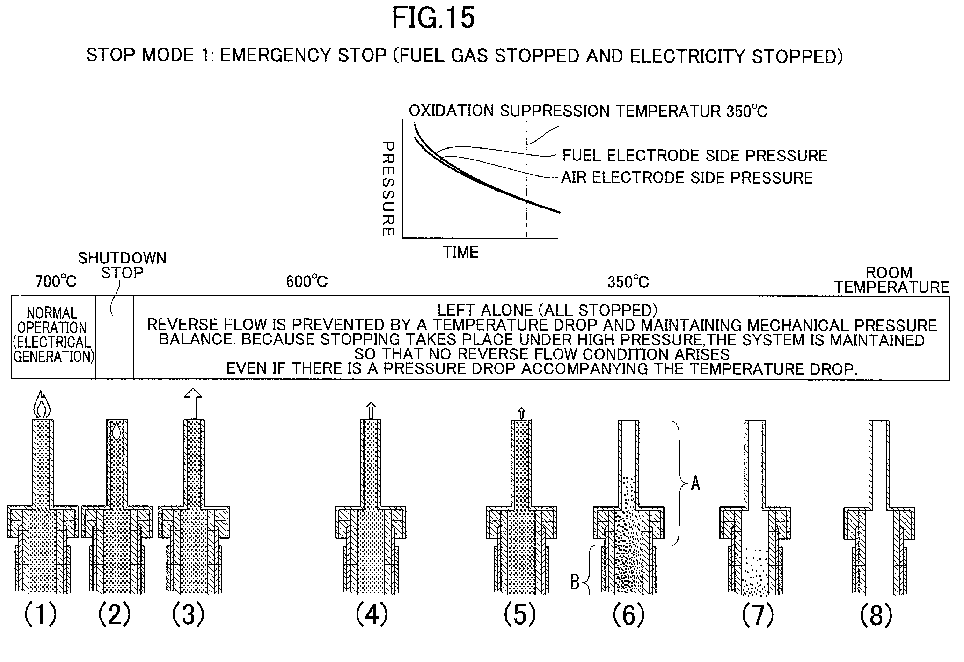

Fig. 14 is a timing chart schematically showing on a time line an example of the stopping behavior when stop mode 1 (step S2 in Fig. 13) is executed in a solid oxide fuel cell system 1 according to a first embodiment of the present invention. Fig. 15 is a diagram explaining on a time line the control, the temperature and pressure inside the fuel cell module, and the state of the tip portion of fuel cell units when stop mode 1 is executed in a fuel cell apparatus according to a first embodiment of the present invention.

0129 First, at time t101 in Fig. 14, when a shutdown stop is performed the supply of fuel by fuel flow regulator unit 38, the supply of water by water flow volume regulator unit 28, and the supply of generating air by generating air flow regulator unit 45 are stopped in a short time period. The extraction of power from fuel cell module 2 by inverter 54 is also stopped (output current = 0). When stop mode 1 is executed, fuel cell module 2 is left alone in this state after a shutdown stop. For this reason, fuel which had been present on the fuel electrode side of the fuel cell units 16 is jetted to the air electrode side through gas flow path fine tubing 98 (Figs. 4) based on the pressure differential relative to the external air electrode side. Also, air present on the air electrode side of the fuel cell units 16 (and fuel jetted from the fuel electrode side) is discharged through air-heat exchanger 22, etc. to the outside of fuel cell module 2 based on the pressure differential between pressure on the air electrode side (the pressure inside generating chamber 10 (Fig. 1)) and atmospheric pressure. Therefore after a shutdown stop, pressure on the fuel electrode and the air electrode side of each of the fuel cell units 16 drops naturally.

0130 However, gas flow path fine tubing 98, which is an outflow-side flow resistance section, is installed on the top end portion of the fuel cell units 16, and a vertical wall 21d and suspended wall 8b (Fig. 2) are erected in exhaust pathway 21b. The flow path resistance of this gas flow path fine tubing 98 is set so that after the fuel supply and power are stopped, the pressure drop on the fuel electrode side is more gradual than the pressure drop on the air electrode side. In solid oxide fuel cell system 1, by tuning the flow path resistance appropriately in each part of these fuel and exhaust pathways, fuel is made to remain over long time periods even after a shutdown stop on the fuel electrode side of fuel cell units 16. For example, if the flow path resistance in the exhaust path leading from generating chamber 10 to the outside air is too small relative to the flow path resistance in gas flow path fine tubing 98, the pressure on the air electrode side after a shutdown stop will drop suddenly, causing the pressure differential between the fuel electrode side and the air electrode side to increase so that the outflow of fuel from the fuel electrode side is actually increased. Conversely, if the exhaust path flow path resistance is too great relative to the flow path resistance of gas flow path fine tubing 98, the pressure drop on the air electrode side will be gradual compared to the pressure drop on the fuel electrode side, and the pressures on the fuel electrode side and the air electrode side will approach one another, increasing the risk of a reverse air flow to the fuel electrode side.

0131 Thus in the present embodiment the fuel and/or exhaust gas pathways guiding fuel and/or gas to outside fuel cell module 2 from fuel flow regulator unit 38 through reformer 20, and the fuel electrodes in each of fuel cell units 16, are tuned as described above. Therefore even when left alone after a shutdown stop, pressure on the fuel electrode side drops while maintaining a higher pressure than the air electrode side, and maintains a higher pressure than atmospheric pressure until the fuel electrode temperature drops to the oxidation suppression temperature, so the risk of fuel electrode oxidation can be well suppressed. As shown in Fig. 14, in the solid oxide fuel system 1 of the embodiment, after a shutdown stop is performed at time t101 the output voltage from fuel cell stack 14 shown by the heavy dotted line temporarily rises significantly and then drops, but that drop is less than in a conventional solid oxide fuel cell system (Fig. 28), and a relatively high voltage continues for a long time period. In the example shown in Fig. 14, a relatively high voltage is maintained after a shutdown stop until the fuel electrode side and air electrode side temperatures drop to the oxidation suppression temperature at time t102. This indicates that fuel remains on the fuel electrode side of the fuel cell units 16 until time t102, when the temperature falls to the oxidation suppression temperature.

0132 Note that in this Specification, "oxidation suppression temperature" refers to the temperature at which the risk of oxidation of the fuel electrodes is sufficiently reduced. The risk of fuel electrode oxidation declines gradually as the temperature falls, ultimately reaching zero. Therefore the risk of fuel electrode oxidation can be sufficiently reduced even with an oxidation suppression temperature slightly higher than the oxidation lower limit temperature, which is the minimum temperature at which oxidation of the fuel electrode can occur. In a standard fuel cell unit, this oxidation suppression temperature is thought to be about 350°C to 400°C, and the oxidation lower limit temperature about 250°C to 300°C.

0133 I.e., in the solid oxide fuel cell system 1 of the embodiment, the fuel/exhaust gas pathway is constituted so that after a shutdown stop and until the fuel electrode temperature drops to the oxidation suppression temperature, the pressure on the air electrode side within fuel cell module 2 is maintained at higher than atmospheric pressure, and the pressure on the fuel electrode side is maintained at a pressure higher than the pressure on the air electrode side. Therefore the fuel/exhaust gas pathway functions as a mechanical pressure retention means for extending the time until the pressure on the fuel electrode side approaches the pressure on the air electrode side.

0134 Fig. 15 is a diagram explaining the operation of stop mode 1; the top portion shows a graph schematically depicting pressure changes on the fuel electrode side and air electrode side; the middle portion shows the control operations by control section 110 and the temperature inside fuel cell module 2 on a time line, and the bottom portion shows the state at the top end portion of the fuel cell units 16 at each point in time.

0135 First, a normal electrical generation operation is being performed prior to the shut down in the middle portion of Fig. 15. In this state, the temperature inside fuel cell module 2 is approximately 700°C. As shown in the bottom portion (1) of Fig. 15, fuel gas remaining without being used for electrical generation is jetted out from gas flow path fine tubing 98 at the top end of fuel cell units 16, and this jetted out fuel gas is combusted at the top end of gas flow path fine tubing 98. Next, when the supply of fuel gas, reforming water, and generating air is stopped by the shutdown stop, the flow volume of jetted out fuel gas declines and, as shown in the bottom portion (2) of Fig. 15, the flame is extinguished at the tip of gas flow path fine tubing 98. Because gas flow path fine tubing 98 is formed to be long and narrow, flame is quickly extinguished when the flame is pulled into gas flow path fine tubing 98 as the result of a decrease in the flow volume of fuel gas. Quick extinction of the flame means the consumption of fuel gas remaining inside the fuel cell units 16, etc. is suppressed, and the time during which remaining fuel can be maintained on the fuel electrode side is extended.

0136 As shown in the lower portion (3) of Fig. 15, even after the flame is extinguished following a shutdown stop, the pressure inside fuel cell units 16 (on the fuel electrode side) is higher than outside (the air electrode side), therefore jetting of fuel gas from gas flow path fine tubing 98 is continued. Also, as shown in the upper portion of Fig. 15, immediately after a shutdown stop the pressure on the fuel electrode side is higher than the pressure on the air electrode side, and each pressure declines with this relationship maintained intact. The pressure differential between the fuel electrode side and the air electrode side declines together with the decline in jetting of fuel gas after a shutdown stop.

0137 The amount of fuel gas jetted from gas flow path fine tubing 98 declines as the pressure differential between the fuel electrode side and the air electrode side diminishes (bottom portions (4), (5) of Fig. 15). At the time of a shutdown stop, on the other hand, reformed fuel gas, unreformed fuel gas, steam, and water also remain inside reformer 20, and fuel gas not reformed by residual heat is reformed by steam even after a shutdown stop. Remaining water is also vaporized by residual heat into steam, since the reformer 20 integrally comprises a vaporizing section 20a. Because there is volumetric expansion due to the reforming of fuel gas and vaporization of water in reformer 20, fuel gas which had been remaining inside the reformer 20, fuel gas supply pipe 64, and manifold 66 (Fig. 2) is pushed out in sequence into the fuel cell units 16 (on the fuel electrode side). A pressure drop on the fuel electrode side accompanying the jetting of fuel gas from gas flow path fine tubing 98 is in this way suppressed.

0138 Furthermore, since reforming section 20c inside reformer 20 is filled with catalyst, its flow path resistance is relatively large. Hence when remaining water is vaporized in vaporizing section 20a, steam flows into reforming section 20c, and also reverse flows toward reformer-introducing pipe 62 (Fig. 2). After this reformer-introducing pipe 62 extends approximately horizontally from the side surface of vaporizing section 20a, it is bent to extend approximately vertically upward. Therefore reverse-flowing steam rises vertically upward inside reformer-introducing pipe 62 and reaches the T-pipe 62a connected to the top end of reformer-introducing pipe 62. Here reformer-introducing pipe 62 extending from vaporizing section 20a is disposed on the interior of the covering case 8 on thermal insulation 7, so the temperature is high. Also, the top end portions of reformer-introducing pipe 62, and T-pipe 62a, are positioned outside thermal insulation 7, so their temperature is low. Hence steam which has risen up in reformer-introducing pipe 62 contacts the top end portion of reformer-introducing pipe 62 and T-pipe 62a, which are at a low temperature, and is cooled and condenses, producing water.

0139 Water produced by condensation falls from T-pipe 62a and the top end portion of reformer-introducing pipe 62 onto the inside wall surface at the bottom of reformer-introducing pipe 62 where it is again heated so that it rises and flows once more into vaporizing section 20a. Since reformer-introducing pipe 62 is bent, water droplets dropping down after condensing do not directly flow into vaporizing section 20a, but rather fall onto the inner wall surface at the bottom portion of reformer-introducing pipe 62. Therefore the part of reformer-introducing pipe 62 disposed inside thermal insulation 7 functions as a pre-heating portion for preheating supplied or condensed water, and the top end portions of reformer-introducing pipe 62 and T-pipe 62a, which are lower in temperature than this preheating section, function as condensing sections.

0140 There are cases in which steam that has risen up inside reformer-introducing pipe 62 reverse flows from T-pipe 62a to water supply pipes 63a. However, water supply pipe 63a is disposed at an incline to face upward from T-pipe 62a, therefore even when steam condenses inside water supply pipes 63a, the condensate flows from water supply pipes 63a toward T-pipe 62a and falls into reformer-introducing pipe 62. Also, as shown in Fig. 2, the bottom portion of reformer-introducing pipe 62 is placed in proximity at the inside of thermal insulation 7 to intersect exhaust gas discharge pipe 82. Therefore a heat exchange is performed between reformer-introducing pipe 62, being the preheating section, and exhaust gas discharge pipe 82; heating is also accomplished by exhaust heat.

0141 Thus a portion of the steam vaporized in vaporizing section 20a reverse flows to reformer-introducing pipe 62; this produces a condensate, which is again vaporized in vaporizing section 20a. Therefore even after the supply of water is stopped during a shutdown stop, remaining water is vaporized a little at a time inside vaporizing section 20a, and water is vaporized over a relatively long period after a shutdown stop. Moreover, after extending from the side surface of vaporizing section 20a, reformer-introducing pipe 62 is bent to extend approximately vertically upward, penetrating thermal insulation 7. Therefore the location where reformer-introducing pipe 62 penetrates thermal insulation 7 is separated from the region vertically above reformer 20, making it difficult for the heat of reformer 20 to escape through the site of penetration of thermal insulation 7 by reformer-introducing pipe 62, so there is no extraordinary loss of thermal insulation characteristics caused by reformer-introducing pipe 62.

0142 On the other hand, the water vaporization occurring inside reformer 20 can occur suddenly depending on the distribution of temperatures inside vaporizing section 20a, etc. In such cases, the pressure inside vaporizing section 20a rises suddenly, so a high pressure is transferred to the downstream side, and there is a risk that fuel gas inside the fuel cell units 16 will suddenly be jetted to the air electrode side. However, because a pressure fluctuation-suppressing flow resistance section 64c is provided on fuel gas supply pipe 64, sudden eruptions of fuel gas within the fuel cell units 16 based on sudden rises in pressure inside reformer 20 are suppressed. Also, because gas flow path fine tubing 98 (Figs. 4) is also installed at the bottom end of the fuel cell units 16, sudden pressure rises inside the fuel cell units 16 are suppressed by the flow path resistance of gas flow path fine tubing 98. Therefore the gas flow path fine tubing 98 and pressure fluctuation-suppressing flow resistance section 64c at the bottom end of the fuel cell units 16 function as a mechanical pressure retaining means for maintaining a high pressure on the fuel electrode side.

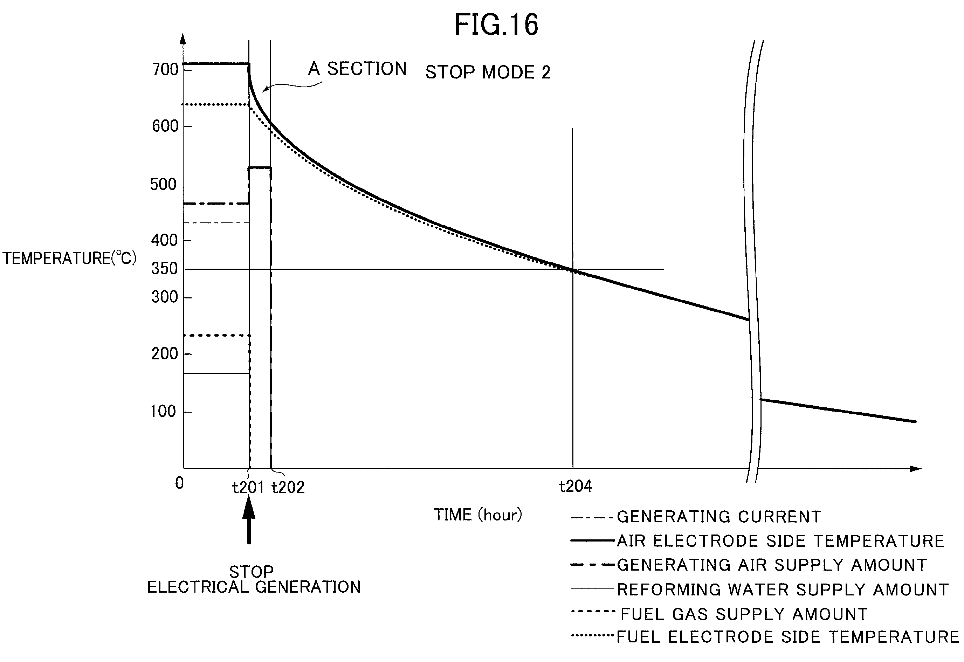

0143 By thus using a mechanical pressure retaining means, the drop in pressure on the fuel electrode side of the fuel cell units 16 is suppressed over a long time period following a shutdown stop. When 5 to 6 hours have elapsed following a shutdown stop and the temperature inside fuel cell module 2 has dropped to 400°C, both the fuel electrode side and the air electrode side of the fuel cell units 16 fall to essentially atmospheric pressure, and air on the air electrode begins to diffuse to the fuel electrode side (bottom portions (6), (7) in Fig. 16). However, gas flow path fine tubing 98 and the top end portion of fuel cell 84 where no outside electrode layer 92 is formed (the A part of bottom portion (6) in Fig. 15) are not oxidized even if air penetrates, so this part functions as a buffer portion. In particular, because gas flow path fine tubing 98 is formed to be long and narrow, the buffer portion is elongated, and oxidation of the fuel electrode is unlikely to occur even if air penetrates from the top end of the fuel cell units 16. Close to the oxidation suppression temperature, the oxidation which occurs even when the fuel electrode temperature is low and air is contacting the fuel electrode is minute, and since the frequency with which stop mode 1 is executed is extremely low, the adverse effects resulting from oxidation can in substance be ignored. Moreover, as shown in the lower portion (8) of Fig. 15, after the fuel electrode temperature declines to below the oxidation lower limit temperature, there is no change to fuel electrodes even if the fuel electrode side of the fuel cell units 16 is filled with air.

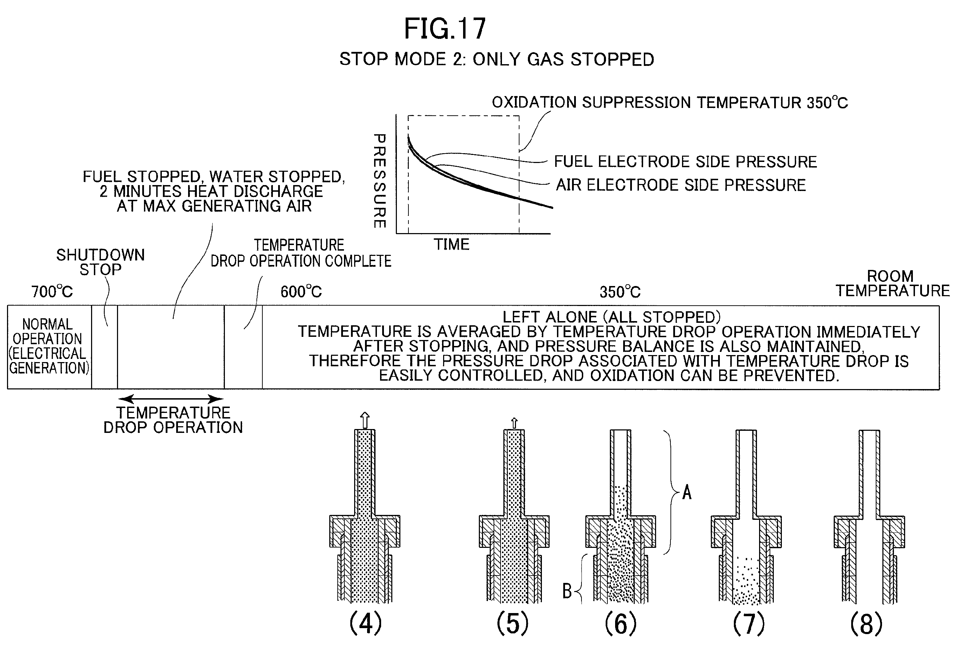

0144 Next, referring to Figs. 16 and 17, we explain stop mode 2.

Fig. 16 is a timing chart schematically showing on a time line an example of the stopping behavior when stop mode 2 (step S4 in Fig. 13) is executed in a solid oxide fuel cell system 1 according to a first embodiment of the present invention. Fig. 17 is a diagram explaining on a time line the control, the temperature inside the fuel cell module, the pressure, and the state of the front end portion of the fuel cell units when stop mode 2 is executed.

0145 First, stop mode 2 is a stop mode executed when only the supply of fuel gas has been stopped. At time t201 in Fig. 16, when a shutdown stop is performed, the supply of fuel by fuel flow regulator unit 38 and the supply of water by water flow volume regulator unit 28 stops in a short time period. The extraction of power from fuel cell module 2 by inverter 54 is also stopped (output current = 0). When stop mode 2 has been executed, the shutdown stop circuit 110a built into control section 110 executes a temperature drop operation immediately after a shutdown stop at time t201, causing the generating air flow regulator unit 45 to operate at maximum output over a predetermined heat discharge time. Note that in the embodiment, the predetermined heat discharge time is approximately 2 minutes, during which water flow volume regulator unit 28 is stopped. Furthermore, at time t202 in Fig. 16, after generating air flow regulator unit 45 has been stopped, the system is left alone, as in stop mode 1.

0146 In a stoppage by stop mode 2, air is fed after a shutdown stop to the air electrode side of fuel cell units 16 under temperature drop operation. Thus in part A of Fig. 16, the temperature on the air electrode side is more suddenly reduced than in the stop mode 1 case (Fig. 14). As described above, after the supply of fuel is completely stopped up until the temperature of fuel cell stack 14 drops to the oxidation suppression temperature, there is a danger that fuel electrodes will be oxidized and damaged, therefore the supply of air was always stopped. However, the inventor discovered that generating air can be supplied safely over a predetermined time period even immediately after the supply of fuel is stopped.

0147 I.e., immediately after a shutdown stop, sufficient fuel gas remains on the fuel electrode side of the fuel cell units 16, and since this is being jetted out from the top end of the fuel cell units 16, there is no reverse flow of air to the fuel electrode side caused by feeding air to the air electrode side. In other words, feeding in air in this state under temperature drop operation does cause the pressure on the air electrode side to rise, but the pressure on the fuel electrode side is still higher than the pressure on the air electrode side. The gas flow path fine tubing 98 installed at the top end of the fuel cell units 16 is a constricting flow path with a narrowed flow path cross sectional area, by which the flow velocity of fuel gas flowing out of the fuel cell units 16 is increased. Therefore gas flow path fine tubing 98, which is installed at the top end, functions as an accelerating portion for increasing the flow velocity of fuel gas. Moreover, after the supply of air has been stopped at time t202, the system is left alone as in stop mode 1, and the pressure on the fuel electrode side is maintained by a mechanical pressure retention means for a predetermined time at a higher level than the pressure on the air electrode side. In stop mode 2, however, because the high temperature air and fuel gas accumulating inside fuel cell module 2 is discharged under temperature drop operation, the natural leaving alone of the system is started from a temperature lower than in stop mode 1. The risk of a reverse flow of air before the fuel electrode temperature drops to the oxidation suppression temperature is therefore decreased. Thus after a shutdown stop, the pressure reduction on the fuel electrode side becomes more gradual than the drop in pressure on the air electrode. Since the temperature inside the fuel cell module 2 is averaged under temperature drop operation, the risk is diminished that fuel gas on the inside of fuel cell units 16 will suddenly shrink and air will be pulled in on the fuel electrode side.

0148 Furthermore, after a shutdown stop air is fed to the air electrode side under temperature drop operation, therefore the flame at the top end of gas flow path fine tubing 98 is more quickly extinguished, and consumption of remaining fuel is suppressed. Immediately after a shutdown stop, a large amount of fuel gas jetted from fuel cell units 16 flows out on the air electrode side of fuel cell units 16 without being combusted. In stop mode 2, after a shutdown stop air is fed into the air electrode side and jetted fuel gas is discharged together with air, so the risk that fuel gas which has flowed away from the fuel electrodes will contact the air electrodes and cause a partial reduction of the air electrodes is avoided.

0149 Fig. 17 is a diagram explaining the operation of stop mode 1; the top portion shows a graph schematically depicting pressure changes on the fuel electrode side and air electrode side; the middle portion shows the control operations by control section 110 and the temperature inside fuel cell module 2 on a time line, and the bottom portion shows the state at the top end portion of the fuel cell units 16 at each point in time.

0150 First, in the middle portion of the Fig. 17, an electrical generation operation is being performed before a shutdown stop, and temperature drop operation is executed after the shutdown stop. After a temperature drop operation of approximately 2 minutes, generating air flow regulator unit 45 is stopped, following which the system is left alone as in stop mode 1. However in stop mode 2, the temperature inside fuel cell module 2 at the starting point of leaving the system alone (time t202 in Fig. 16), and the pressure on the fuel electrode side and on the air electrode side, are reduced more than in stop mode 1. For this reason the risk of air penetrating to the fuel electrode side before the fuel electrode temperature drops to the oxidation suppression temperature is still further diminished.

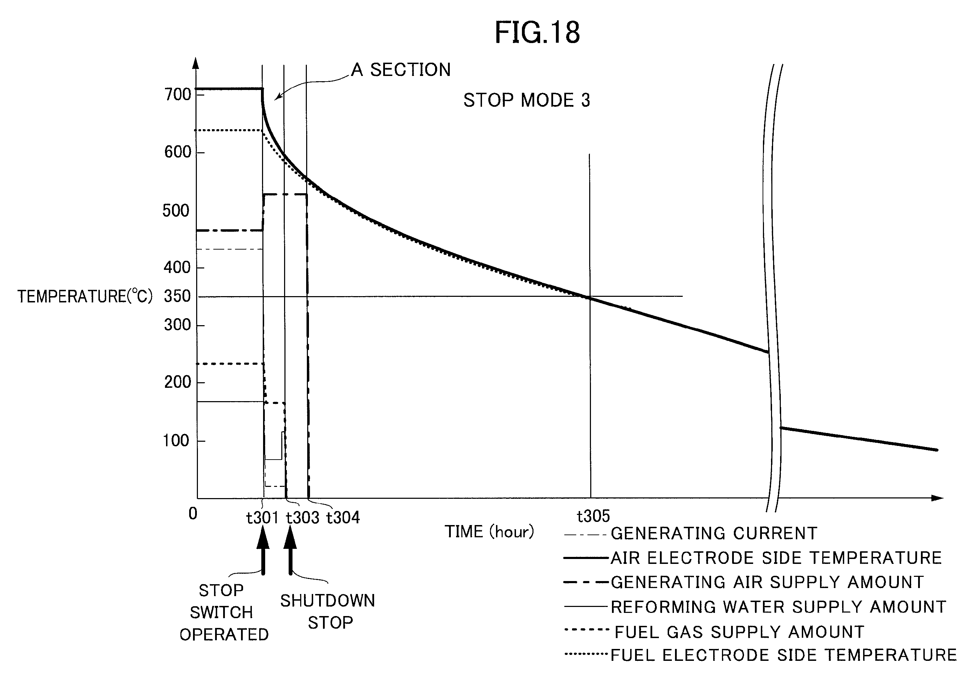

0151 Next, referring to Figs. 18 through 22, we explain stop mode 3.

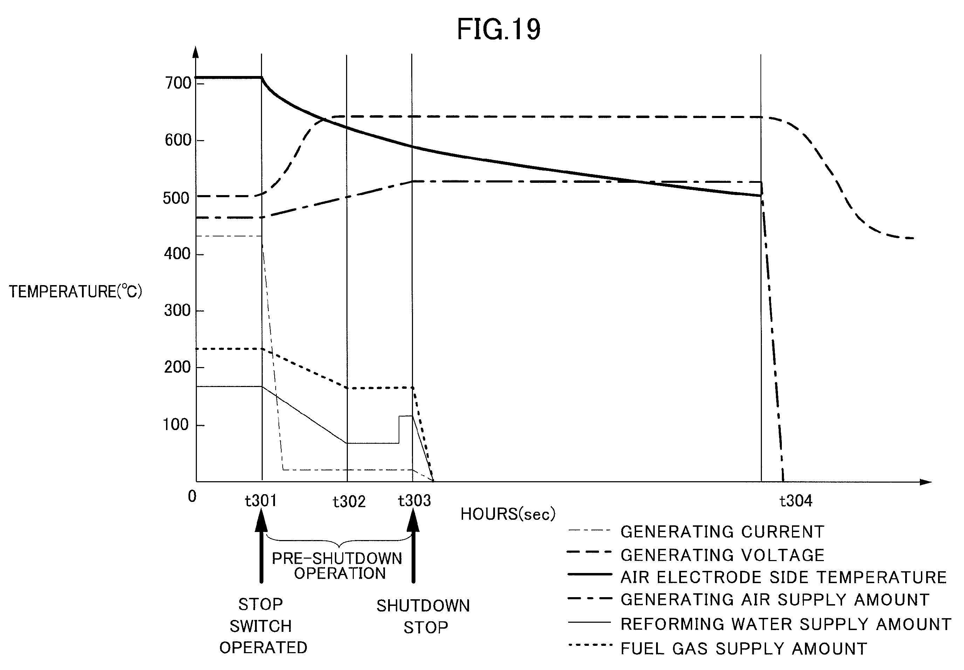

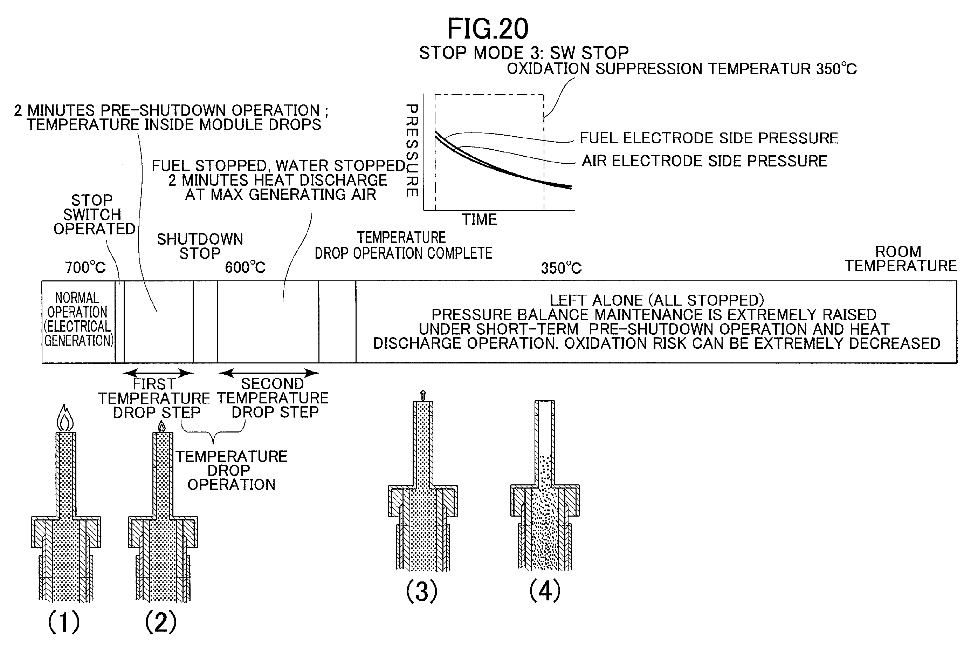

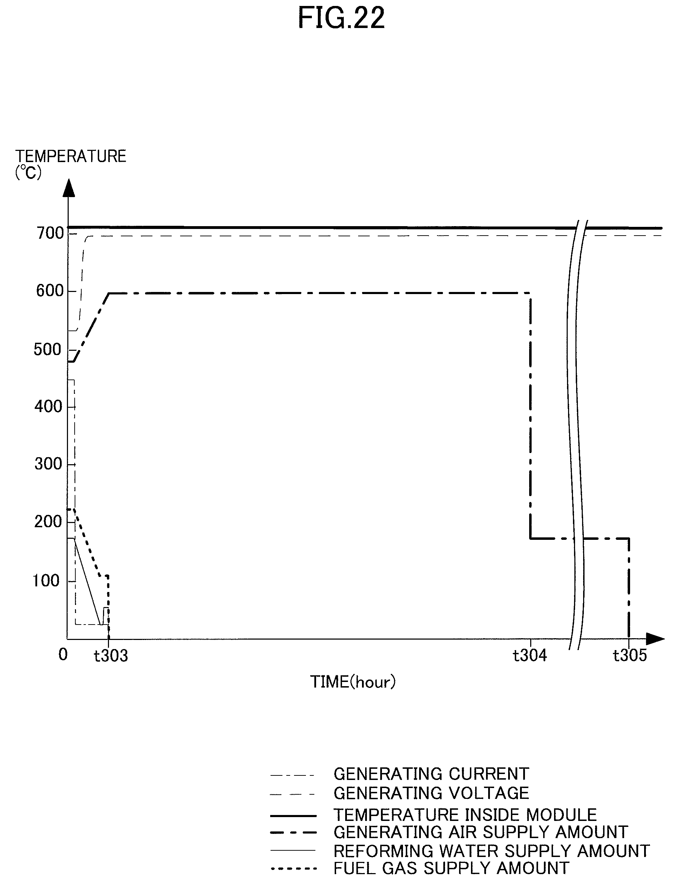

Fig. 18 is a timing chart schematically showing in time line form an example of the stopping behavior when stop mode 3 (step S6 in Fig. 13) is executed in a solid oxide fuel cell system 1 according to a first embodiment of the present invention. Fig. 19 is a timing chart showing an expanded view immediately after a shutdown stop. Fig. 20 is a diagram explaining in time line form the control, the temperature inside the fuel cell module, the pressure, and the state of the tip portion of the fuel cell units when stop mode 3 is executed. Fig. 22 is a timing chart showing a variant of stop mode 3.

0152 First, stop mode 3 is a stop mode which is executed when a stop switch has been operated by a user, or with a program stop. As shown in Figs. 18 and 19, temperature drop operation is also executed during stop mode 3, but the temperature drop operation in stop mode 3 comprises a first temperature drop step prior to the complete stopping of power extraction from fuel cell stack 14, and a temperature drop step after power extraction is stopped. The second temperature drop step is the same as the temperature drop operation in stop mode 2, and the first temperature drop step is executed as pre-shutdown operation before power extraction is stopped.

0153 In the example shown in Fig. 19, a stop switch is operated by a user at time t301, and pre-shutdown operation, which is the first temperature drop step, is started. In pre-shutdown operation, the output to inverter 54 by fuel cell module 2 is first stopped. This results in a sudden drop in the current and power extracted from fuel cell module 2, as shown by the light dot and dash line in Fig. 19. Note that in pre-shutdown operation, the current output to inverter 54 from fuel cell module 2 is stopped, but extraction of a degree of weak current (approximately 1 A) for operating the solid oxide fuel cell system 1 auxiliary unit 4 is continued for a predetermined time. Therefore even after the generated current has greatly decreased at time t301, a weak current is extracted from fuel cell module 2 during pre-shutdown operation. As shown by the dotted line in Fig. 19, the output voltage on fuel cell module 2 rises as extracted current drops. Thus in pre-shutdown operation, the amount of power extracted is restricted, and electrical generation at a predetermined power is continued while a weak current is extracted, therefore since a part of the supplied fuel is used for electrical generation, an extraordinary increase in surplus fuel not used for electrical generation is avoided, and the temperature inside fuel cell module 2 is decreased.

0154 Moreover, in pre-shutdown operation, after time t301 the fuel supply amounts shown by the dotted line and the reforming water supply amounts shown by the light solid line in Fig. 19 are linearly decreased. On the other hand, the amount of generating air supplied, as shown by the thick dot and dash line, is linearly increased. Therefore during pre-shutdown operation, more air is supplied than the amount corresponding to the power extracted from fuel cell module 2. By increasing the air supply amount in this way, robbing of heat from reformer 20 and a rise in temperature within fuel cell module 2 are suppressed. Continuing, in the example shown in Fig. 19, at time t302 approximately 20 seconds after time t301, the fuel supply amount and water supply amount are reduced to the supply amounts which correspond to the weak current extracted from fuel cell module 2; thereafter a reduced supply amount is maintained. By reducing the fuel supply amount and water supply amount in this way as pre-shutdown operation, air current turbulence within fuel cell module 2 caused by the sudden stopping of a large flow volume of fuel when the fuel supply is fully stopped is prevented, and large quantities of fuel are kept from accumulating in reformer 20 and manifold 66 after the supply of fuel is completely stopped. Note that after time t301, the temperature of the air on the air electrode side inside fuel cell module 2, shown by the heavy solid line in Fig. 19, is reduced by lowering the fuel supply amount and increasing the air supply amount. However, a large heat quantity is still accumulated in thermal insulation 7, etc. surrounding fuel cell module 2. Also, while the current output to inverter 54 is stopped under pre-shutdown operation, the supply of fuel and water are continued, therefore even if the supply of generating air is continued, no reverse flow of air to the fuel electrode side occurs within the fuel cell units 16. Therefore the supply of air can be safely continued.

0155 In the example shown in Fig. 19, from time t301 at which pre-shutdown operation is started until time t303 approximately 2 minutes later, the fuel supply amount and reforming water supply amount are brought to zero, and current extracted from fuel cell module 2 is also brought to zero and a shutdown stop effected. Note that in the example shown in Fig. 19, at time t303 the water supply amount is increased slightly immediately before the current extracted from fuel cell module 2 is brought to zero. This increase in the water supply amount adjusts the water amount at the time of a shutdown stop so that an appropriate amount of water remains in vaporizing section 20a. This control of the water supply amount is discussed below.

0156 In the example shown in Fig. 19, even after the shutdown stop at time t303, the supply of generating air is continued as a second temperature drop step in the temperature drop operation (although electrical generation is completely stopped). By so doing, the air in fuel cell module 2 (on the air electrode side of fuel cell stack 14), the remaining fuel combustion gas, and the fuel from the fuel electrode side of fuel cell stack 14 after a shutdown stop are discharged, so the second temperature drop step functions as an exhaust step. At time t303 in the embodiment, after the supply of fuel has been completely stopped, the supply of a large volume of generating air is continued for a predetermined time until time t304. The amount of generating air supplied is increased up to the maximum air supply amount during pre-shutdown operation, after which it is maintained at the maximum value.

0157 As shown in Fig. 18, at time 304 the system is left alone, as in stop mode 1, after the supply of generating air is stopped. However, in stop mode 3 a first temperature drop step is executed before a shutdown stop, and a second temperature drop step is executed after a shutdown stop, therefore the temperature decrease in part A of Fig. 18 is greater than in stop modes 1 and 2, and the leaving alone of the system is started from a lower temperature and a lower pressure state.

0158 Fig. 20 is a diagram explaining the operation of stop mode 3; the top portion shows a graph schematically depicting pressure changes on the fuel electrode side and air electrode side; the middle portion shows the control operations by control section 110 and the temperature inside fuel cell module 2 on a time line, and the bottom portion shows the state at the top end portion of the fuel cell units 16 at each point in time.

0159 First, before the stop switch is operated in the middle portion of Fig. 20, a generating operation is being performed; after the stop switch is operated a pre-shutdown operation step is executed, being the first temperature drop step. In the pre-shutdown operation step, the amount of fuel gas supplied is decreased, as shown in the bottom portion (1) of Fig. 20, causing the flame at the top end of the fuel cell units 16 to decline in size, as shown in the lower portion (2) of the figure. Since the amounts of fuel gas supplied and electricity generated are decreased in this way, the temperature inside fuel cell module 2 is decreased more than during the electrical generation operation. After an approximately 2 minute pre-shutdown operation step, a shutdown stop is performed. After the shutdown stop, generating air is supplied for 2 minutes by generating air flow regulator unit 45 as a second temperature drop step. After the second temperature drop step, generating air flow regulator unit 45 is stopped, following which the system is left alone, as in stop mode 1.

0160 As described above, at the time of a shutdown stop the pressure on the fuel electrode side of the fuel cell units 16 is higher than the pressure on the air electrode side, therefore fuel gas on the fuel electrode side jets out from the top end of the fuel cell units 16 even after the fuel supply is stopped. In addition, flame resulting from the combustion of fuel gas is extinguished at the time of a shutdown stop. After a shutdown stop, the quantity of fuel gas jetted from the top end of each individual fuel cell unit 16 is greatest immediately after a shutdown stop, then declines gradually. This large amount of fuel gas jetted immediately after a shutdown stop is discharged to the outside of fuel cell module 2 by generating air supplied in the second temperature drop step (exhaust step). Even after the exhaust step ends, fuel gas is jetted from the top ends of the fuel cell units 16, but the quantity of that fuel gas is relatively small.

0161 For this reason hydrogen, which is the fuel gas jetted after completion of the exhaust step, accumulates at the top portion inside fuel cell module 2 (above the fuel cell stack 14), but jetted fuel gas makes no substantial contact with the air electrodes in the fuel cell units 16. Therefore fuel gas is reduced subjected to a reduction reaction by contact with high temperature air electrodes, and there is no degradation of the air electrodes. In pre-shutdown operation prior to a shutdown stop, water is supplied so that an appropriate amount of water within a predetermined range of quantities is accumulated within vaporizing section 20a. Therefore in the exhaust step following a shutdown stop, the pressure on the fuel electrode side of the fuel cell units 16 is increased by the vaporization of water in vaporizing section 20a, and an appropriate amount of fuel gas is jetted from the top end of the fuel cell units 16. Fuel gas jetted during the exhaust step is quickly exhausted from fuel cell module 2. Since an appropriate amount of fuel gas is jetted out in the exhaust step, it does not occur after the exhaust step that an excessive amount of fuel gas is jetted out from the fuel cell units 16, degrading the air electrodes.

0162 Here, in stop mode 3, after completion of the exhaust step, the temperature inside fuel cell module 2 at the starting point of leaving the system alone (time t304 in Fig. 18), and the pressure on the fuel electrode side and on the air electrode side, are reduced more than in stop mode 1. Also, in stop mode 3 the fuel gas supply amount and water supply amount prior to shutdown stop are fixed at a predetermined value by the pre-shutdown operation step. This leads to a decline in the degree of variability of pressure and temperature distribution, etc. when the system is initially left alone, which is dependent on the operating state during electrical generation, and the system is always left alone from an appropriate starting state. Therefore the risk of air invading the fuel electrode side before the fuel electrode temperature drops to the oxidation suppression temperature is extremely low.

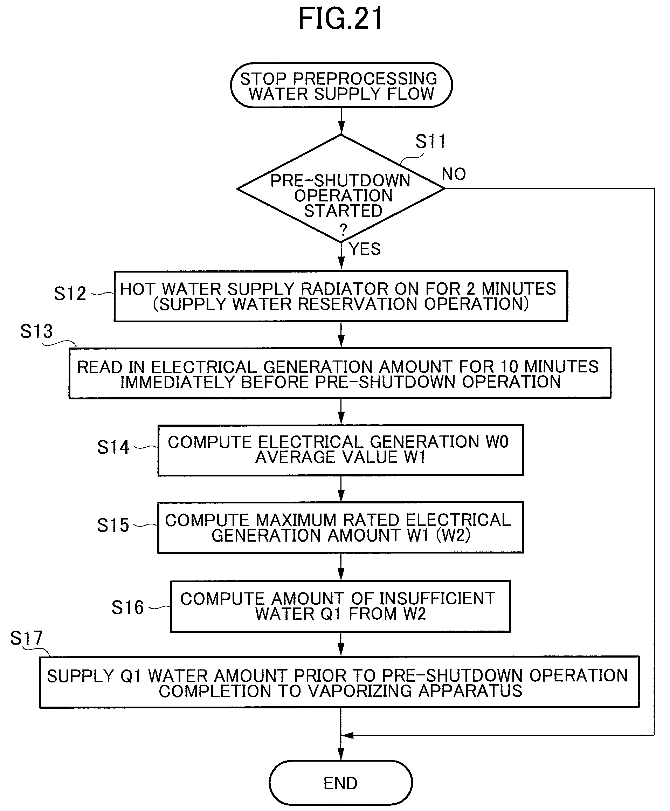

0163 Next, referring to Fig. 21, we explain the supply of water in pre-shutdown operation.

Fig. 21 is a flow chart of the supply of water in pre-shutdown operation; during the operation of solid oxide fuel cell system 1, this is repeatedly executed at a predetermined time interval by shutdown stop circuit 110a. First, at step S11 in Fig. 21, a determination is made as to whether pre-shutdown operation has started. If pre-shutdown operation has started, the system advances to step S12; if it has not started, one iteration of the Fig. 21 flow chart is completed.

0164 Next, in step S12, as a water supply securing step, a hot water radiator (not shown) built into hot water production device 50 (Fig. 1) is activated for 2 minutes. This hot water radiator heats water by performing a heat exchange with high temperature exhaust gas from fuel cell module 2, recovering discharged heat in the exhaust gas. At the same time, the exhaust gas contains steam, and a heat exchange is carried out between this steam and the hot water radiator, whereby the steam turns into water due to cooling and condenses. By activating the hot water radiator, the amount of cooling of exhaust gas increases, and the amount of condensed water increases. The increased condensed water is recovered and stored in pure water tank 26 (Fig. 1). Water recovered in this pure water tank 26 is utilized as water for steam reforming after passing through filter processing, etc. (not shown). Water produced by this processing in step S12 is utilized to supply water during pre-shutdown operation. Note that while the amount of water used during pre-shutdown operation and pressure retention operation is slight, high temperature exhaust gas containing large amounts of steam is suddenly cooled by the hot water radiator (not shown), therefore the needed water can be sufficiently acquired in 2 minutes during pre-shutdown operation.

0165 Next, in step S13, time line data W0 for the quantity of electrical generation during the 10 minutes immediately prior to time t301 in Fig. 19, when pre-shutdown operation is begun, is read into control section 110. Also, an average value W1 for 10 minutes of read-in electrical generation amount time line data WO is calculated in step S14. Next, at step S15, a difference W2 is calculated between the solid oxide fuel cell system 1 maximum rated generating amount and the average value W1. In addition, at step S16 an insufficient water quantity Q1 is also calculated based on the difference W2. Finally, in step S17, the quantity Q1 of water calculated to be lacking is supplied before the end of pre-shutdown operation (immediately before time t303 in Fig. 19), and one iteration of the flow chart in Fig. 21 is completed.

0166 As a result of supplying this insufficient water quantity Q1, approximately the same quantity of reforming water is accumulated in vaporizing section 20a as when a shutdown stop is performed following continuous operation at the maximum rated generating amount. Vaporization of this water in the exhaust step following a shutdown stop (time t303-t304 in Fig. 19) causes the pressure on the fuel electrode side of the fuel cell units 16 to increase, and an appropriate amount of fuel gas is jetted from the top end of the fuel cell units 16.

0167 Next, referring to Fig. 22, we explain a variant example of stop mode 3.

In the variant example shown in Fig. 22, the way in which generating air is supplied in the second temperature drop step differs from Fig. 19. As shown in Fig. 22, in this variant example, after a shutdown stop is performed at time t303, generating air is supplied in the maximum amount until time t304. At time t304, the amount of generating air supplied is decreased in stages, and supply is continued at the reduced supply amount until time t305. The interval between time t303 and t304 is preferably set at approximately 2 to 5 minutes, and the interval between time t304 and t305 is set at approximately 2 to 20 minutes.

0168 In this variant example, high temperature air on the air electrode side is quickly discharged by supplying a large quantity of generating air under high pressure on the fuel electrode side immediately after a shutdown stop. At the same time, if a certain amount of time has elapsed since a shutdown stop and pressure on the fuel electrode has dropped, reducing the amount of generating air supplied causes high temperature air to be discharged while avoiding the risk of reverse flow.

0169 Using a solid oxide fuel cell system 1 of a first embodiment of the present invention, by providing a mechanical pressure retention means, reverse flows of air can be prevented until the temperature of fuel electrodes drops to the oxidation suppression temperature, thereby suppressing the oxidation of fuel electrodes. I.e., a mechanical pressure retention means is formed by the fuel/exhaust gas passageway (Fig. 2) which guides fuel/exhaust gas from fuel flow regulator unit 38 through reformer 20, and the fuel electrodes in the fuel cell units 16 which constitute fuel cell units 16, to outside fuel cell module 2. The fuel passageway is constituted to run from fuel flow regulator unit 38 through reformer 20 and the fuel electrodes of fuel cell units 16 to the air electrode side. The exhaust gas passage is arranged to run from the air electrode side within fuel cell module 2 to the atmosphere outside fuel cell module 2. In the present embodiment, by appropriately distributing the balance of flow path resistance, etc. in each part of these fuel/exhaust gas passageways, the present embodiment succeeds, after a shutdown stop, at maintaining a pressure greater than atmospheric pressure on the air electrode side and maintaining a pressure on the fuel electrode side greater than on the air electrode side, until the temperature drops to the oxidation suppression temperature, at which the risk of fuel electrode oxidation diminishes. In this way, reverse flows of air from the air electrode side to the fuel electrode side are prevented. Using this mechanical pressure retention means, reverse flows of air can be prevented until the temperature of fuel electrodes drops to the oxidation suppression temperature, thereby suppressing the oxidation of fuel electrodes, even when the supply of fuel and commercial power to the solid oxide fuel cell system of the present embodiment is lost due to a natural disaster or the like.

0170 Also, using the solid oxide fuel cell system of the present embodiment, pressure on the fuel electrode side can, by the mechanical pressure retention means, be decreased while maintaining a higher pressure than on the air electrode until the temperature drops to the oxidation suppression temperature. Here, in general solid oxide fuel cell system 1 operates at a high temperature and has a large heat capacity, therefore the temperature drop behavior after a shutdown stop (time t101 in Fig. 14) and the pressure drop behavior on the fuel electrode side and air electrode side are not prone to be influenced by the outside air temperature, etc. The present inventor, taking note of this point, constructed a fuel/exhaust gas passageway such that the pressure drop on the fuel electrode side and air electrode side after a shutdown stop occurs while maintaining a higher pressure on the fuel electrode side than on the air electrode side (upper portion of Fig. 15). By so doing, reverse flows of air can be prevented until the temperature drops to the oxidation suppression temperature using only a mechanical structure, without being substantially affected by outside air temperature or the like.

0171 Furthermore, the inventor discovered that the pressure change behavior on the fuel electrode side and air electrode side after a shutdown stop (Fig. 14, time t101) changes with the balance of flow resistance in each part of the fuel/exhaust gas fuel passageway, and that by setting an appropriate balance, the pressure on the fuel electrode side can be maintained at a higher pressure than on the air electrode side over a long time period. Using the solid oxide fuel cell system 1 of the present embodiment, the fuel/exhaust gas passageway flow resistance balance can be adjusted by setting the flow path resistance of fuel gas flow path fine tubing 98 (Fig. 4), so the pressure drop on the fuel electrode side can with a simple structure be made more gradual than the pressure drop on the air electrode side (top portion of Fig. 15), and reverse flows of air can be prevented.

0172 The solid oxide fuel cell system 1 of the present embodiment comprises a fuel gas flow path fine tubing 98 (Fig. 4) for causing fuel to flow into the fuel electrode side, therefore pressure fluctuations on the upstream side of fuel cell units 16 can be prevented from transferring directly to the fuel electrode side, thereby causing fuel remaining on the fuel electrode side to be pushed out excessively to the air electrode side. This allows residual fuel to be accumulated for a long time period on the fuel electrode side using a mechanical pressure retention means.

0173 In addition, using the solid oxide fuel cell system 1 of the present embodiment, fuel gas flow path fine tubing 98 is constituted by elongated narrow tubes installed on inside electrode terminals 86 (Fig. 4) formed as separate bodies, so that flow path resistance can be correctly set. By balancing the flow path resistance with each part, fuel gas flow path fine tubing 98 constitutes a mechanical pressure retention means, so the flow path resistance thereof must be precisely set. It is difficult, however, to set such precise flow path resistances using the materials which make up the individual fuel cell unit 16 main body. In the present embodiment, fuel gas flow path fine tubing 98 is installed on inside electrode terminals 86, formed as separate bodies, therefore fuel gas flow path fine tubing 98 can be constituted by various materials amenable to precision working, so flow path resistance can be accurately set.

0174 Using solid oxide fuel cell system 1 of the present embodiment, inside electrode terminals 86 (Fig. 4) is constituted of metal, and therefore has a high thermal conductivity so that heat on the air electrode side is easily conducted to the fuel electrode side. Therefore sudden drops in the temperature of fuel remaining on the fuel electrode side of fuel cell stack 14 resulting in sudden shrinking of the volume of gas on the fuel electrode side and sucking in of air on the air electrode side to the fuel electrode side can be prevented.

0175 Moreover, using the solid oxide fuel cell system 1 of the present embodiment, the pressure on the fuel electrode side is maintained at a higher level than the pressure on the air electrode side until the temperature of the fuel electrode drops to 350°C-400°C or below (top portion of Fig. 15), so oxidation of the fuel electrodes can be reliably suppressed.

0176 Also, using the solid oxide fuel cell system 1 of the present embodiment, fuel flow regulator unit 38, generating air flow regulator unit 45, and water flow volume regulator unit 28 are stopped (Fig. 14, times t101-t102) until the fuel electrode temperature drops to the oxidation suppression temperature, so reverse flows of air can be prevented until the fuel electrode temperature drops to the oxidation suppression temperature, even in emergencies when fuel and commercial power are simultaneously lost.

0177 Moreover, using the solid oxide fuel cell system 1 of the present embodiment, generating air flow regulator unit 45 is operated (Fig. 16, time t201-t202) for a predetermined time after a shutdown stop (Fig. 16, time t201), therefore immediately after a shutdown stop the temperature on the air electrode side is decreased and the temperature balanced on the fuel electrode side and the air electrode side, and the temperature inside fuel cell module 2 is decreased. By this means, after a generating air flow regulator unit 45 which has been operated for a predetermined time is stopped, an initial state is established when the prevention of reverse flow of air is started by the mechanical pressure retention means, and reverse flows can be reliably prevented until the temperature drops to the oxidation suppression temperature.

0178 Also, using the solid oxide fuel cell system 1 of the present embodiment, immediately prior to a shutdown (Fig. 19, time t303), the amount of electricity generated is reduced to a fixed value and the amount of air supplied is increased (Fig. 19, time t301-t303), so the temperature and pressure on the fuel electrode side and air electrode side at time of shutdown stop can be set to an appropriate value. In this way, after a shutdown stop an initial state can be established when the prevention of reverse flow of air is started by a mechanical pressure retention means, and reverse flows can be reliably prevented until the temperature drops to the oxidation suppression temperature.

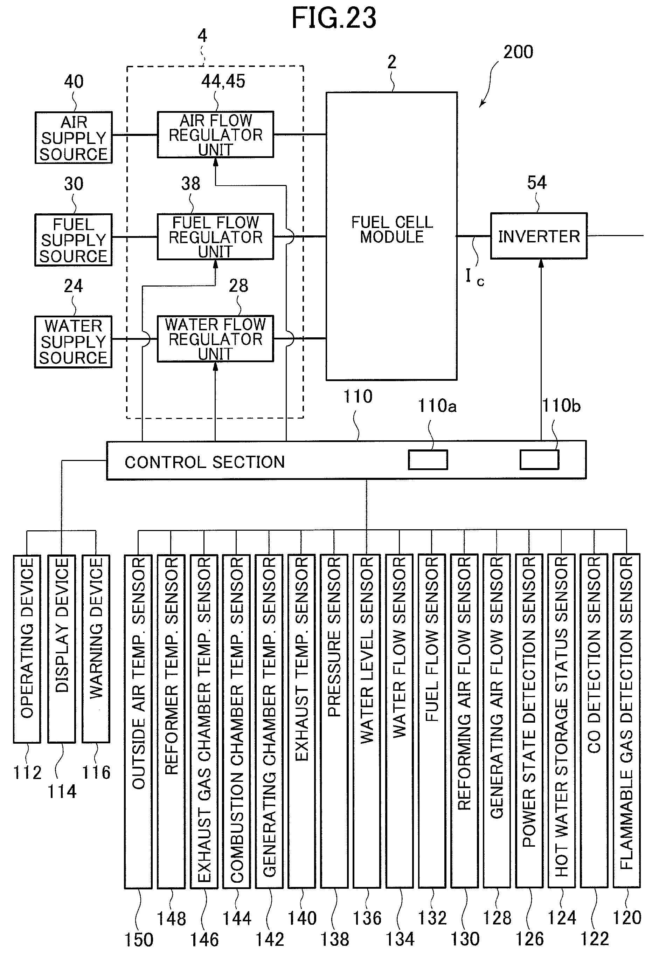

0179 Next, referring to the Figs. 23 through 26, we discuss the control of a solid oxide fuel cell system according to a second embodiment of the present invention.

In the solid oxide fuel cell system of the present embodiment, processing at time of stopping differs from the above-described first embodiment. Therefore here we will explain only the parts which differ between the first embodiment and second embodiment of the present invention; the description in the first embodiment shall be modified and used for those parts which are the same, and an explanation thereof omitted.

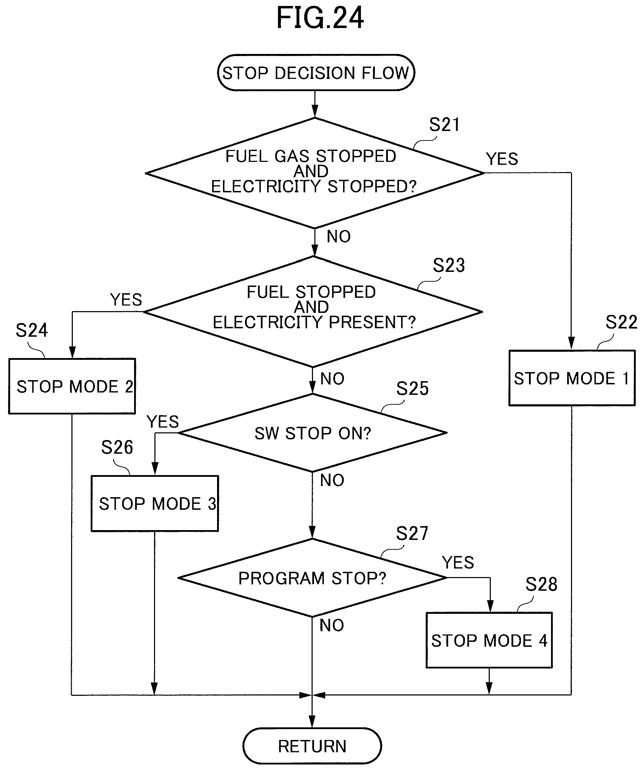

0180 Fig. 24 is a block diagram showing a solid oxide fuel cell system according to a second embodiment of the present invention. As shown in Fig. 23, the constitution of solid oxide fuel cell system 200 according to the present embodiment is the same as the first embodiment except that pressure retention operation circuit 110b is built into control section 110. The same reference numerals are used for the same constituent parts, and an explanation thereof is omitted. Below, the same reference numerals are assigned as in the first embodiment, even for constituent parts not shown in Fig. 23.

0181 Fig. 24 is a flow chart of the stopping decision which selects a stop mode in a solid oxide fuel cell system 200 according to a second embodiment of the present invention. In addition to the stop modes 1-3 in the first embodiment, this embodiment comprises a stop mode 4, which is executed for a program stop. The purpose of the Fig. 24 flow chart is to determine which of the stop modes to select based on predetermined conditions; during operation of the solid oxide fuel cell system 1, this flow chart sequence is repeated at a predetermined time interval.

0182 First, at step S2 in Fig. 24, a judgment is made of whether the supply of fuel gas from fuel supply source 30 (Fig. 1) and the supply of power from a commercial power source has been stopped. If the supplies of both fuel gas and power have been stopped, the system advances to step S22; at step S22, stop mode 1, which is the emergency stop mode, is selected, and one iteration of the processing in the Fig. 24 flow chart is completed. The conditions under which stop mode 1 is selected and the processing executed in stop mode 1 are the same in the first embodiment, so an explanation thereof is here omitted.

0183 On the other hand, when at least either fuel gas or power is being supplied, the system advances to step S3, and in step S23 a decision is made as to whether the supply of fuel gas has been stopped and power is being supplied. When the supply of fuel gas has been stopped and power is being supplied, the system advances to step S24; in cases other than this the system advances to step S25. In step S24, stop mode 2, which is one of the normal stop modes, is selected, and one iteration of the Fig. 24 flow chart processing is completed. The conditions under which stop mode 2 is selected and the control executed in stop mode 2 are the same in the first embodiment, so an explanation thereof is here omitted.

0184 Furthermore, in step S25 a determination is made as to whether a stop switch has been operated by a user. If a user has operated a stop switch, the system advances to step S26; if the switch has not been operated, the system advances to step S27. In step S26, stop mode 3, which is one of the switch stop modes among the normal stop modes, is selected, and one iteration of processing the Fig. 24 flow chart is completed. In this embodiment, stop mode 3 is selected only when the stop switch has been operated by a user. The control executed in stop mode 3 is the same as in the first embodiment, therefore an explanation thereof is here omitted.

0185 In step S27, on the other hand, a determination is made of whether the stoppage is a regular stoppage, executed at a pre-planned regular timing. If the stop is a regular stop, the system advances to step S28; if it is not a regular stop, one iteration of the Fig. 24 flow chart is completed. In step S28, stop mode 4, which is one of the program stop modes among the normal stop modes, is selected, and one iteration of processing the Fig. 24 flow chart is completed. In the present embodiment, stop mode 4 is selected only when a regular stop is being implemented. Responding to an intelligent meter installed on fuel supply source 30 is assumed as a circumstance for the selection of stop mode 4. Therefore in the present embodiment it is anticipated that a stoppage by stop mode 4 will be performed at a frequency of approximately once per month, which is the most frequently performed stoppage.

0186 Note that if the supply of power is stopped and the supply of fuel gas is continued, neither of the stop modes will be selected according to the Fig. 24 flow chart. In such cases, in a solid oxide fuel cell system 1 according to the embodiment, electrical generation can be continued by activating auxiliary unit 4 using power produced by fuel cell stack 14. Note that the invention can also be constituted to stop electrical generation if the supply of power stays stopped continuously over a predetermined long time period.

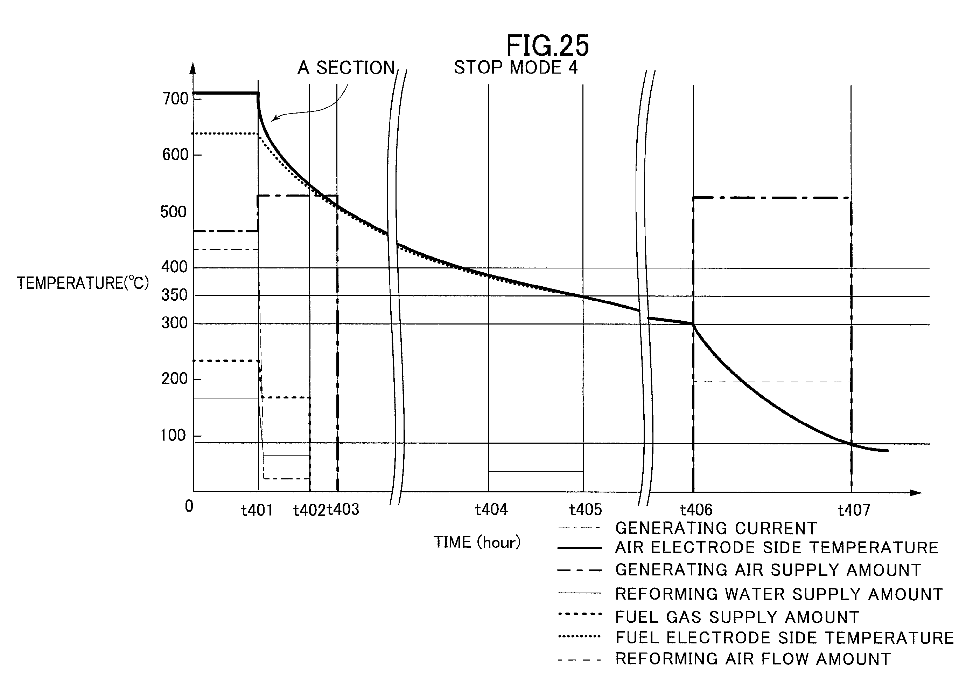

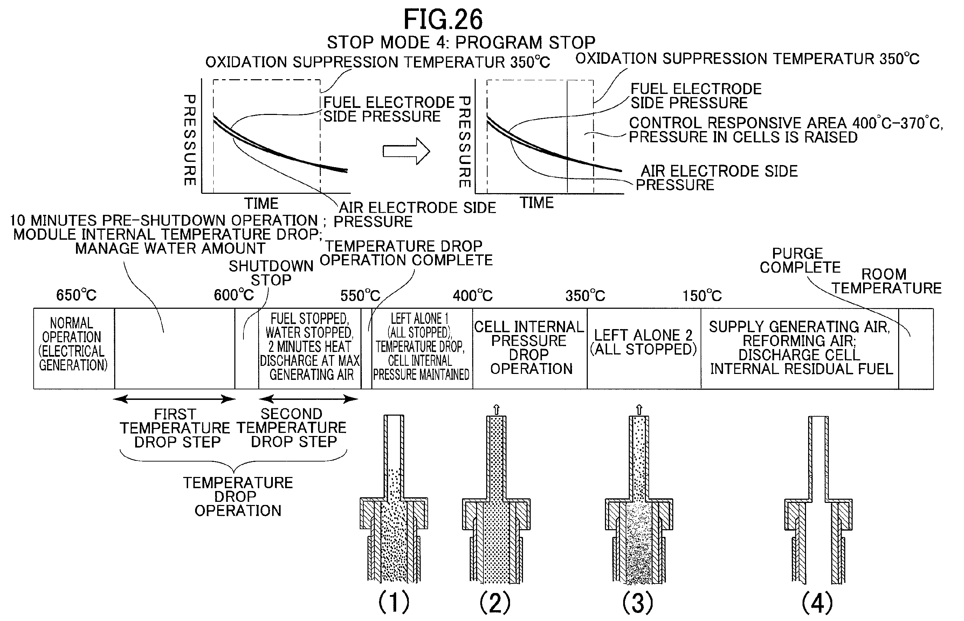

0187 Next, referring to Figs. 25 and 26, we explain stop mode 4.

Fig. 25 is a timing chart schematically showing on a time line an example of the stopping behavior when stop mode 4 (step S28 in Fig. 24) is executed in a solid oxide fuel cell system according to a first embodiment of the present invention. Fig. 26 is a diagram explaining on a time line the control, the temperature inside the fuel cell module, the pressure, and the state of the front end portion of the fuel cell units when stop mode 4 is executed.

0188 First, as described above, stop mode 4 is a stop which is executed on the order of once per month in order to respond to an intelligent meter (not shown), and is the most frequently executed stop mode. Therefore when executing stop mode 4, oxidation of fuel electrodes must be more reliably prevented, since even a slight negative effect from the oxidation of the fuel electrodes on fuel cell units 16, etc. imparts a large effect on the durability of fuel cell stack 14. Stopping by stop mode 4 is executed periodically based on a program built into shutdown stop circuit 110a.

0189 First, at time t401 in Fig. 25, at a predetermined prior to the shutdown stop time planned in the shutdown stop circuit 110a program, shutdown stop circuit 110a executes a temperature drop operation. As in stop mode 3, in stop mode 4 the temperature drop operation is executed by a first temperature drop step and a second temperature drop step. I.e., in pre-processing for stopping, which is the first temperature reduction step, the output of generated power to inverter 54 by fuel cell module 2 is first stopped, and only the extraction of a weak current (appropriate 1A) for the operating solid oxide fuel cell system auxiliary unit 4 is continued. In pre-shutdown operation, as noted above, the water supply flow for pre-shutdown operation shown in Fig. 21 is also executed.

0190 Moreover, in pre-shutdown operation, after time t401 the fuel supply amounts shown by the dotted line and the reforming water supply amounts shown by the heavy dotted line in Fig. 25 are linearly decreased. On the other hand, the amount of generating air supplied, as shown by the heavy dot and dash line, is increased. In stop mode 4, the first temperature drop step is continued for 10 minutes after time t401, a longer period than stop mode 3.

0191 At time t402, when 10 minutes have elapsed following time t401, shutdown stop circuit 110a executes a shutdown stop. When a shutdown stop is performed, the supply of fuel by fuel flow regulator unit 38 and the supply of water by water flow volume regulator unit 28 are stopped in a short period of time. The extraction of power from fuel cell module 2 by inverter 54 is also stopped (output current = 0).

0192 Shutdown stop circuit 110a executes the second temperature drop step out of the temperature drop operations after a shutdown stop at time t402, and generating air flow regulator unit 45 is operated at maximum output for appropriate 2 minutes. In addition, at time t403 in Fig. 25, as in stop mode 1, after generating air flow regulator unit 45 is stopped, the system is left alone.

0193 Furthermore, in stop mode 4, at time t404 when approximately 5 hours have elapsed after a shutdown stop, and the temperature inside fuel cell module 2 has fallen to a predetermined temperature, shutdown stop circuit 110a activates pressure retention operation circuit 110b (Fig. 23). In this embodiment, when the temperature inside fuel cell module 2 drops to a predetermined temperature of 400°C, the pressure on the fuel electrode side of fuel cell units 16 also falls, and approaches the pressure on the air electrode side. Pressure retention control circuit 110b sends a signal to water flow volume regulator unit 28, thereby activating it. The activation of water flow volume regulator unit 28 results in water being supplied to vaporizing section 20a in reformer 20. The interior of fuel cell module 2 is still at a temperature of approximately 400°C even at time t404 when approximately 5 hours have elapsed after a shutdown stop, so water supplied to vaporizing section 20a is vaporized there. Note that in this embodiment, water is supplied intermittently, and the water supply amount is set at approximately 1 mL per minute; this water supply amount value is below the minimum water supply amount in the electrical generation operation.

0194 Vaporization and expansion of water in vaporizing section 20a raises the pressure inside the fuel gas passageway from reformer 20 through fuel gas supply pipe 64 and manifold 66 (Fig. 2) up to the fuel cell units 16. Thus pressure drops on the fuel electrode side of fuel cell units 16 are suppressed, and a reverse flow of air to the fuel electrode side is more reliably prevented. Note that the flow paths for vaporizing section 20a, reforming section 20b, and reforming section 20c in reformer 20 are all formed in a serpentine shape, making it difficult for the effects of a pressure rise to be transferred downstream even if water suddenly vaporizes inside vaporizing section 20a. Sudden rises in pressure on the inside of fuel cell units 16 (the fuel electrode side) caused by sudden vaporization, such that fuel gas accumulated therein is jetted out in large quantities over a short time period, can thus be prevented.

0195 Pressure fluctuation-suppressing flow resistance section 64c (Fig. 2), which is installed midway on fuel gas supply pipe 64, and gas flow path fine tubing 98, which is an inflow-side flow resistance section installed at the bottom end of the fuel cell units 16, also suppress sudden pressure rises on the fuel electrode side, and cause fuel gas to remain for long time periods on the fuel electrode side.

0196 Pressure retention control circuit 110b stops water flow volume regulator unit 28 at time t405 in Fig. 25 when the temperature inside fuel cell module 2 has dropped to the oxidation temperature; thereafter fuel cell module 2 is left alone.

0197 Furthermore, at time t406 when the temperature inside fuel cell module 2 has further dropped, shutdown stop circuit 110a sends a signal to reforming air flow regulator unit 44 and generating air flow regulator unit 45, activating those units. By this means the fuel gas pathways such as reformer 20, fuel gas supply pipe 64, and manifold 66, and the internal fuel electrodes in the fuel cell units 16, are purged by air. The inside of exhaust gas passageways such as the air electrode side inside generating chamber 10, the exhaust pathway 21b, and in air-heat exchanger 22 are also purged by air. By purging fuel gas passageways and fuel electrodes, steam which had been held within these locations is condensed, and oxidation by condensate water on the fuel gas passageways and fuel electrodes is prevented. By purging the inside of exhaust gas passageways, condensation within exhaust gas passageways of steam discharged from the fuel electrodes is prevented. Also, by purging the air electrode side within generating chamber 10, a reduction reaction by discharged fuel gas from the fuel electrode side is prevented.

0198 Fig. 26 is a diagram explaining the operation of stop mode 4; the top portion shows a graph schematically depicting pressure changes on the fuel electrode side and air electrode side; the middle portion shows the control operations by control section 110 and the temperature inside fuel cell module 2 on a time line, and the bottom portion shows the state at the top end portion of the fuel cell units 16 at each point in time.

0199 First, before shutdown stop in the middle portion of Fig. 26, electrical generation is occurring, and 10 minutes before the shutdown stop time planned in the program, a first temperature drop step under temperature drop operation is executed. In stop mode 4, because the first temperature drop step is executed for approximately 10 minutes, the temperature inside fuel cell module 2 at the time of shutdown stop, as well as the pressure on the fuel electrode side and the air electrode side, are decreased by a greater amount than in stop mode 3. After a shutdown stop, generating air is supplied for approximately 2 minutes as the second temperature drop step of the temperature drop operation, and generating air flow regulator unit 45 is stopped. After generating air flow regulator unit 45 is stopped, the system is left alone, as in stop mode 3. Here, in stop mode 4, when the system is initially left alone (time t403 in Fig. 25), the temperature inside fuel cell module 2 and the pressures on the fuel electrode side and the air electrode side are decreased even more than in stop mode 3. For this reason the risk of air penetrating to the fuel electrode side before the fuel electrode temperature drops to the oxidation suppression temperature is still further diminished.

0200 In addition, in stop mode 4 at the point in time when the pressure on the fuel electrode side of the fuel cell units 16 has approached the pressure on the air electrode side by being left alone, pressure retention operation circuit 110b is activated, and the pressure on the fuel electrodes in the fuel cell units 16 is increased. Under pressure retention operation, reformed fuel gas which had been accumulating in manifold 66 and in fuel gas supply pipe 64 (Fig. 2), etc. is first fed a little at a time to the fuel electrodes in the fuel cell units 16, then the unreformed fuel gas which had remained inside reformer 20 is fed a little at a time to the fuel electrodes. In addition, after all the unreformed fuel gas is fed in, the steam vaporized in vaporizing section 20a is fed in a little at a time to fuel electrodes in fuel cell units 16. At the point when pressure retention operation circuit 110b is activated, the temperature at the fuel electrodes in the fuel cell units 16 has fallen to close to the oxidation suppression temperature, therefore even if a reverse flow of air to the fuel electrode side occurs, the effect thereof is minute. However, the program stop which executes stop mode 4 is the most often executed stop mode, therefore the risk of fuel electrode oxidation is even further reduced, and the effects of oxidation of each fuel cell units 16 are reduced to a minimum.

0201 As indicated on the left side of the upper portion of Fig. 26, in stop modes 1 through 3 the pressure on the fuel electrode side of fuel cell units 16 drops after a shutdown stop and approaches the pressure on the air electrode side around the time the fuel electrode temperature drops down to the region of the oxidation suppression temperature. In response, in stop mode 4, as shown on the right side of the upper portion of Fig. 26, pressure retention operation by pressure retention operation circuit 110b is executed in the region where pressure on the fuel electrode side approaches the pressure on the air electrode side, and a drop in pressure on the fuel electrode side below that on the air electrode side is more reliably prevented.

0202 As shown in the bottom portion of Fig. 26, when the system is left alone after completion of the second temperature drop step ("left alone 1" in the middle portion of Fig. 24), the fuel gas which had been accumulating at the fuel electrodes in the fuel cell units 16 flows out a little at a time, and at the end of that time the air on the air electrode side can in some cases begin to diffuse to the fuel electrode side (bottom portion (1) in Fig. 26). However, because pressure retention operation is started, the pressure of the steam produced inside vaporizing section 20a causes fuel gas accumulated inside the fuel gas passageways on the downstream side of reformer 20 to again move into the fuel cell units 16, so that the concentration of fuel gas inside the fuel electrodes again rises (lower portion (2) of Fig. 26). Later, as well, steam is produced within vaporizing section 20a under pressure retention operation, so the outflowing portion of fuel gas from the fuel electrodes in the fuel cell units 16 is compensated by the fuel gas which had been accumulating in the fuel gas passageway, and a reverse flow of air to the fuel electrode is prevented. Furthermore, in the pressure retention operation terminating phase, as shown in the bottom portion (3) of Fig. 26, even if accumulated fuel gas has almost completely flowed out, steam produced by the pressure retention operation fills in the fuel electrodes in fuel cell units 16, so a reverse flow of air to the fuel electrodes is reliably prevented.

0203 In addition, after completion of the pressure retention operation, the system is left alone ("left alone 2" in the middle portion of Fig. 26), following which reforming air and generating air are supplied (reforming and electrical generation are not performed), and a purge is executed. Thus the fuel gas and steam remaining on the fuel electrode side of fuel cell units 16 are discharged, and the fuel gas remaining on the air electrode side in generating chamber 10 is also discharged from fuel cell module 2. By this means, oxidation of the fuel electrodes in the fuel cell units 16 is reliably avoided in the most frequently executed stop mode 4.

0204 In the solid oxide fuel cell system 200 of the second embodiment of the present invention, the provision of a mechanical pressure retention means and pressure retention operation enables the prevention of a reverse flow of air from the air electrode side to the fuel electrode side.

As explained with respect to the first embodiment of the invention, the risk of fuel electrode oxidation is well reduced by the mechanical pressure retention means, but when unanticipated external disturbances occur, such as changes in atmospheric pressure outside design values, there is a risk that the pressure on the fuel electrode side cannot be maintained at a temperature at which there is no oxidation of fuel electrodes whatsoever (the oxidation lower limit temperature) using only this mechanical means. Pressure retention control circuit 110b therefore executes a pressure retention operation (Fig. 25, time t404-t405) for increasing the pressure on the fuel electrode side after the fuel electrode temperature has declined to the oxidation suppression temperature. Pressure retention control is executed after the fuel electrode temperature has dropped to the oxidation suppression temperature, therefore the pressure on both the fuel electrode side and the air electrode side has dropped greatly, and it is sufficient just to slightly compensate the pressure on the fuel electrode side. Also, because pressure retention operation is executed with the risk of oxidation sufficiently reduced, oxidation of the fuel electrodes can be reliably prevented without implementing precise controls.

0205 Using the solid oxide fuel cell system 200 of a second embodiment of the present invention, no control by pressure retaining control circuit 110b is executed when stopping under the emergency stop mode (stop mode 1) (Fig. 24, step S22). The simultaneous loss of fuel and power supplied to solid oxide fuel cell system 200 is anticipated as a circumstance in which the emergency stop mode is executed; in such circumstances the pressure retention operation (Fig. 25, time t404-t405) is not executed, and the risk of fuel electrode oxidation can be decreased by a mechanical pressure retention means alone. By not executing pressure retention operation, secondary problems occurring when active control is executed can be avoided in the abnormal conditions when the emergency stop mode is executed. Moreover, the certainty of avoiding fuel electrode oxidation is diminished by not executing a pressure retention operation in the emergency stop mode, but since the frequency with which the emergency stop mode is executed is extremely low, decreasing the risk of fuel electrode oxidation using a mechanical pressure retention means enables the effect on the durable life span of solid oxide fuel cell system 200 to be reduced to a negligible level.

0206 Also, using the solid oxide fuel cell system 200 of the present embodiment a pressure retention operation (Fig. 25, time t404-t405) is executed in the program stop mode (Fig. 24, step S28; stop mode 4), so the pressure retention operation is executed at a pre-planned time. For this reason no problems are prevented even when a pressure retention operation is executed after a shutdown stop, and a long period of time is required until the pressure retention operation stops. Also, because the program stop mode is anticipated to be executed to respond to an intelligent meter, it is executed at a high frequency, and the durable lifespan of solid oxide fuel cell system 200 can be extended by executing pressure retention operation during stop modes which executed at a high frequency, thereby reliably avoiding the risk of fuel electrode oxidation.

0207 Also, using the solid oxide fuel cell system 200 of the present embodiment, no temperature drop operation is executed when stopping in the emergency stop mode (stop mode 1), and the fuel electrode oxidation risk can be decreased by the mechanical pressure retention means alone. On the other hand when stopping by a normal stop mode (stop modes 3, 4), the temperature and pressures on the fuel electrode side and air electrode side can be dropped at the time when mechanical pressure retention is started (Fig. 25, time t403) by performing a temperature drop operation (Fig. 25, time t402-t403) after a shutdown stop, and the risk of a reverse flow of air during the time when the temperature of the fuel electrodes is being decreases to the oxidation suppression temperature can be further diminished.

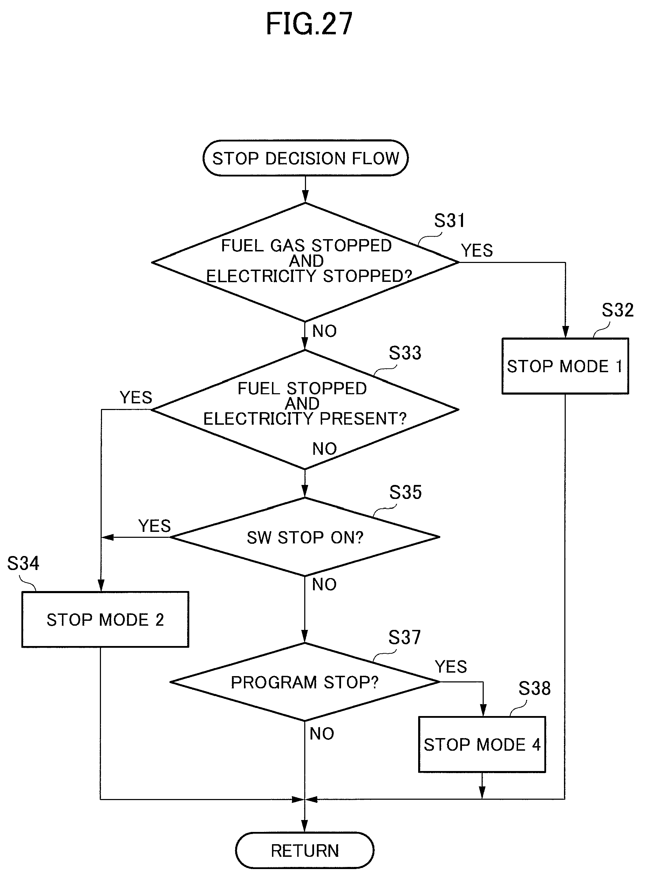

0208 Also, in the second embodiment of the present invention described above, stop mode 3 was executed when a stop switch was operated by a user (Fig. 24, step S25), but as a variant example, stop mode 2 could also be executed, as shown in Fig. 27. Fig. 27 is a flow chart of the stopping decision which selects a stop mode in a solid oxide fuel cell system according to a variant example of the second embodiment of the present invention. I.e., in this variant example, stop mode 2 is executed when fuel gas is stopped and only electricity is being supplied (Fig. 27, step S33 → S34), and when a stop switch has been operated by a user (Fig. 27, step S35 → S34). According to this variant example, if a stop switch is operated, a shutdown stop is executed without executing pre-shutdown operation (the first temperature drop step), therefore controls for a shutdown stop can be quickly completed after a user operates the stop switch.

0209

We have described above a preferred embodiment of the present invention, but various changes may be added to the above-described embodiments.

### Explanation of Reference Numerals

0210
1: solid oxide fuel cell system
2: fuel cell module
4: auxiliary unit
7: insulation (heat storage material)
8: case
8a: communication opening
8b: suspended wall
10: generating chamber
12: fuel cell assembly
14: fuel cell stack
16: fuel cell units (individual solid oxide fuel cells)
18: combustion chamber (combustion section)
20: reformer
20a: vaporizing section (vaporization chamber)
20b: blending section (pressure fluctuation absorption means)
20c: reforming section
20d: steam/blending section partition
20e: partition opening
20f: blending/reforming section partition
20g: communicating holes (narrow flow paths)
21: flow straightening plate (partition wall)
21a: opening portion
21b: exhaust pathway
21c: gas holding space
21d: vertical wall
22: air heat exchanger (heat exchanger)
23: vaporization chamber insulation (internal insulation)
24: water supply source
26: pure water tank
28: water flow regulator unit (water supply apparatus)
30: fuel supply source
38: fuel flow regulator unit (fuel supply apparatus)
39: valve
40: air supply source
44: reforming air flow regulator unit (reforming oxidant gas supply apparatus)
45: generating air flow regulator unit (generating oxidant gas supply apparatus)
46: first heater
48: second heater
50: hot water production device (heat exchanger for waste heat recovery)
52: control box
54: inverter
62: reformer introducing pipe 62: reformer introducing pipe (water introducing pipe, preheating section, condensing section)
62a: T-pipe 62a (condensing section)
63a: water supply piping
63b: fuel gas supply piping
64: fuel gas supply pipe
64c: flow resistance section for pressure fluctuation suppression 66: manifold (dispersion chamber)
76: air introducing pipe
76a: jet outlets
82: exhaust gas discharge pipe
83: ignition apparatus
84: individual fuel cells
85: exhaust valve
86: inside electrode terminals (caps)
98: fuel gas flow path fine tubing (inflow-side flow resistance section, outflow-side flow resistance section; constricted flow path, acceleration section)
110: control section (controller)
110a: shutdown stop circuit
112: operating device
114: display device
116: warning device
126: electrical power state detecting sensor (demand power detection means)
132: fuel flow volume sensor (fuel supply amount detection sensor)
138: pressure sensor (reformer pressure sensor)
142: generating chamber temperature sensor (temperature detection means)
148: reformer temperature sensor
150: outside air temperature sensor

## Claims

1. A solid oxide fuel cell (1) system for generating electricity by steam reforming fuel and reacting the resulting hydrogen with oxidant gas, comprising:
a fuel cell module (2) including a fuel cell stack (14);
a fuel supply apparatus (38) that supplies fuel to the fuel cell module (2);
a water supply apparatus (28) that supplies water for steam reforming to the fuel cell module (2);
an oxidant gas supply apparatus (45) that supplies oxidant gas to an oxidant gas electrode side of the fuel cell stack (14);
a reformer (20) disposed inside the fuel cell module (2) that performs steam reforming of fuel supplied from the fuel supply apparatus (38) using water supplied from the water supply apparatus (28);
a fuel/exhaust gas passageway (21b) that guides fuel/exhaust gas from the fuel supply apparatus (38) through the reformer (20) and fuel electrodes on fuel cell units (16) constituting the fuel cell stack (14), to outside the fuel cell module (2); and
a controller (110) programmed to control the fuel supply apparatus (38), the water supply apparatus (28), the oxidant gas supply apparatus (45), and the extraction of power from the fuel cell module (2);
wherein the controller (110) comprises a shutdown stop circuit (110a) that executes a shutdown stop to stop the supply of fuel and the generation of electricity; and
wherein the fuel/exhaust gas passageway (21b) functions as mechanical pressure retention means, maintaining a pressure on the oxidant gas electrode side within the fuel cell module (2) higher than atmospheric pressure, and maintaining a pressure on the fuel electrode side at a pressure higher than the pressure on the oxidant gas electrode side, after the shutdown stop circuit (110a) executes the shutdown stop, until a temperature of the fuel electrodes drop to a predetermined oxidation suppression temperature at which the risk of fuel electrode oxidation is diminished.

2. The solid oxide fuel cell system of Claim 1, wherein the mechanical pressure retention means is constituted so that after the shutdown stop is executed, pressure on the fuel electrode side is decreased while being maintained at a pressure higher than that on the oxidant gas electrode side, and is maintained at a higher pressure than atmospheric pressure even at the point in time when a temperature of the fuel electrode has dropped to the oxidation suppression temperature.

3. The solid oxide fuel cell system of Claim 2, wherein the mechanical pressure retention means has an outflow-side flow resistance section communicating with the fuel electrode side and oxidant gas electrode side of each fuel cell unit (16), and the flow resistance of the outflow-side flow resistance section is set so that the pressure drop on the fuel electrode side after stopping the supply of fuel and the electrical generation is more gradual than the pressure drop on the oxidant gas electrode side.

4. The solid oxide fuel cell system of Claim 3, wherein the mechanical pressure retention means has an inflow-side flow resistance section for allowing the inflow of fuel to the fuel electrode side of the individual fuel cell units (16).

5. The solid oxide fuel cell system of Claim 3, wherein at the top end of the fuel cell units (16), caps (86) formed as a separate body are attached, and the outflow-side flow resistance section is constituted of elongated narrow tubes extending upward from the caps (86), and the narrow tubes function as a buffer section for preventing oxidation of the fuel electrodes by oxidant gas penetrating from the top end thereof.

6. The solid oxide fuel cell system of Claim 5, wherein the caps (86) are formed of metal so that heat on the oxidant gas electrode side can be easily conducted to the fuel electrode side.

7. The solid oxide fuel cell system of Claim 3, wherein the mechanical pressure retention means maintains the pressure on the fuel electrode side at a pressure higher than that on the oxidant gas electrode side until a temperature of the fuel electrode drops to 400°C.

8. The solid oxide fuel cell system of Claim 7, wherein the mechanical pressure retention means maintains the pressure on the fuel electrode side at a pressure higher than that on the oxidant gas electrode side until a temperature of the fuel electrode drops to 350°C.

9. The solid oxide fuel cell system of Claim 7, wherein after executing the shutdown stop the shutdown stop circuit (110a) stops the fuel supply apparatus (38), the oxydant gas supply apparatus (45), and the water supply apparatus (28) until a temperature of the fuel electrode falls to the oxidation suppression temperature.

10. The solid oxide fuel cell system of Claim 7, wherein after executing a shutdown stop the shutdown stop circuit (110a) operates the oxidant gas supply apparatus (45) for a predetermined time, then stops the oxidant gas supply apparatus (45) until a temperature of the fuel electrode drops to the oxidation suppression temperature.

11. The solid oxide fuel cell system of Claim 7 or 10, wherein immediately before execution of the shutdown stop, the shutdown stop circuit (110a) decreases the amount of electricity generated to a fixed value and increases the amount of oxidant gas supplied by the oxidant gas supply apparatus (45).

12. The solid oxide fuel cell system of Claim 3, wherein the shutdown stop circuit (110a) has a pressure retention operation circuit (110b) that raises the pressure on the fuel electrode side after a temperature of the fuel electrode has declined to the oxidation suppression temperature, so that a pressure decrease on the fuel electrode side which is induced by the decline in temperature on the fuel electrode side, can be suppressed.

13. The solid oxide fuel cell system of Claim 12, wherein the shutdown stop circuit (110a) is constituted to execute stoppage of fuel supply and electrical generation by an emergency stop mode and a normal stop mode; and the shutdown stop circuit (110a) does not execute a control using the pressure retention operation circuit (110b) for stopping in the emergency stop mode.

14. The solid oxide fuel cell system of Claim 13, wherein the normal stop modes include a program stop mode that executes a stop at a pre-planned opportune time, and the shutdown stop circuit (110a) executes a control by the pressure retention operation circuit (110b) when stopping by the program stop mode.

15. The solid oxide fuel cell system of Claim 14, wherein when stopping in the normal stop mode, the shutdown stop circuit (110a) executes a temperature drop operation for dropping the temperature on the oxidant gas electrode side of the fuel cell stack (14) immediately after the fuel supply and electrical generation are stopped, whereas when stopping in the emergency stop mode, no temperature drop operation is executed.

## Patentansprüche

1. Festoxidbrennstoffzellsystem (1) zur Herstellung von Elektrizität durch Dampftformierung von Brennstoff und Reaktion des resultierenden Wasserstoffs mit Oxidationsgas, umfassend:
ein Brennstoffzellmodul (2) umfassend einen Brennstoffzellstapel (14);
eine Brennstoffzufuhrvorrichtung (38), welche dem Brennstoffzellmodul (2) Brennstoff zuführt;
eine Wasserzufuhrvorrictttung (28), welche dem Brennstoffzellmodul (2) Wasser zur Dampfreformierung zuführt;
eine Oxidationsgaszufuhrvorrichtung (45), welche der Oxidationsgaselektrodenseite des Brennstoffzellstapels (40) Oxidationsgas zuführt;
einen Reformer (20), welcher in dem Brennstoffzellmodul (2) angeordnet ist, weicher Dampfreformierung von Brennstoff, welcher durch die Brennstoffzufuhrvorrichtung (38) zugeführt wurde, unter Verwendung von Wasser, welches durch die Wasserzufuhrvorrichtung (28) zugeführt wurde, durchführt;
einen Brennstoff-/Abgaskanal (21 b), welcher Brennstoff-/Abgas von der Brennstoffzufuhrvorrichtung (38) durch den Reformer (20) und Brennstoffelektroden auf Brennstoffzelleirtheiten (16), welche den Brennstoffzellstapel (14) bilden, zur Außenweite des Brennstoffzellmoduls (2) leitet; und
eine Steuerung (110), welche zur Steuerung der Brennstoffzufuhrvorrichtung (38), der Wasserzufuhrvorrichtung (28), der Oxidationsgaszufuhrvorrichtung (45) und der Extraktion von Energie aus dem Brennstoffzellmodul (2) programmiert ist;
wobei die Steuerung (110) einen Abschaltkreis (110a) umfasst, welcher einen Abschaltvorgang durchführt, um die Zufuhr von Brennstoff und die Erzeugung von Elektrizität zu unterbrechen; und
wobei der Brennstoff-/Abgaskanal (21b) als mechanische Druckspeichervorrichtung fungiert und einen Druck auf der Oxidationsgaselektrodenseite in dem Brennstoffzellmodul (2) aufrechterhält, der höher als der Atmosphärendruck ist, und einen Druck auf der Brennstoffelektrodenseite aufrechterhält, der höher als der Druck auf der Oxidationsgaselektrodenseite ist, nachdem der Abschaltkreis (110a) den Abschaltvorgang durchgeführt hat, bis eine Temperatur der Brennstoffelektroden auf eine vorbestimmte, die Oxidation unterbindende Temperatur gesunken ist, bei welcher das Risiko der Oxidation der Brennstoffelektroden verringert ist.

2. Festoxidbrennstoffzellsystem nach Anspruch 1, wobei die mechanische Druck. speichervorrichtung so beschaffen ist, dass der Druck auf der Brennstoffelektrodenseite verringert wird, aber auf einem Druck gehalten wird, der höher als auf der Oxidationsgaselektrodenseite ist, und auf einem höheren Druck als Atmosphärendruck gehalten wird, auch zu demjenigen Zeitpunkt, an dem eine Temperatur der Brennstoffelektrode auf die Temperatur gesunken ist, die die Oxidation unterbindet, nachdem der Abschaltvorgang durchgeführt wurde.

3. Festoxidbrennstoffzellsystem nach Anspruch 2, wobei die mechanische Druckspeichervorrichtung einen abflussseitigen Fließwiderstandsabschnitt aufweist, der mit der Brennstoffelektrodenseite und der Oxidationsgaselektrodenseite jeder Brennstoffzelleinheit (16) kommuniziert, und wobei der Fließwiderstand auf der Abflussseite des Fließwiderstandsabschnitts so gesetzt ist, dass der Druckabfall auf der Brennstoffelektrodenseite nach dem Abschalten der Brennstoffzufuhr und der Elektrizitätsherstellung gradueller ist als der Druckabfall auf der Oxidationsgaselektrodenseite.

4. Festoxidbrennstoffzellsystem nach Anspruch 3, wobei die mechanische Druckspeichervorrichtung einen zuflussseitigen Fließwiderstandsabschnitt aufweist, der den Brennstoffzufluss zu der Brennstoffelektrodenseite der einzelnen Brennstoffzelleinheiten (16) erlaubt.

5. Festoxidbrennstoffzellsystem nach Anspruch 3, wobei Kappen (86), welche als separate Körper gebildet sind, am oberen Ende der Brennstoffzelleinheiten (16) angebracht sind, und wobei der abflussseitige Fließbegrenzungsabschnitt aus länglichen schmalen Röhren gebildet ist, welche sich aufwärts von den Kappen (86) erstrecken, und wobei die schmalen Röhren als Pufferabschnitt zur Vermeidung der Oxidation der Brennstoffelektroden durch Oxidationsgas fungieren, welches diese vom oberen Ende her durchdringt.

6. Festoxidbrennstoffzellsystem nach Anspruch 5, wobei die Kappen (86) aus Metall gebildet sind, so dass Wärme auf der Oxidationsgaselektrodenseite leicht auf die Brennstoffelektrodenseite geleitet werden kann.

7. Festoxidbrennstoffzellsystem nach Anspruch 3, wobei die mechanische Druckspeichervorrichtung den Druck auf der Brennstoffelektrodenseite auf einem Druck hält, der höher als auf der Oxidationsgaselektrodenseite ist, bis eine Temperatur der Brennstoffelektrode auf 400°C sinkt.

8. Festoxidbrennstoffzellsystem nach Anspruch 7, wobei die mechanische Druckspeichervorrichtung den Druck auf der Brennstoffelektrodenseite auf einem Druck hält, der höher als auf der Oxidationsgaselektrodenseite ist, bis eine Temperatur der Brennstoffelektrode auf 350°C sinkt.

9. Festoxidbrennstoffzellsystem nach Anspruch 7, wobei nach Ausführung des Abschaltvorgangs der Abschaltkreis (110a) die Brennstoffzufuhrvorrichtung (38), die Oxidationsgaszufuhrvorrichtung (45) und die Wasserzufuhrvorrichtung (28) anhält, bis eine Temperatur der Brennstoffelektrode auf die Temperatur fällt, welche die Oxidation unterbindet.

10. Festoxidbrennstoffzellsystem nach Anspruch 7, wobei nach Ausführung eines Abschaltvorgangs der Abschaltkreis (110a) die Oxidationsgaszufuhrvorrichtung (45) für eine vorbestimmte Zeit arbeiten lässt und dann die Oxidationsgaszufuhrvorrichtung (45) anhält, bis eine Temperatur der Brennstoffelektrode auf die Temperatur sinkt, welche die Oxidation unterbindet.

11. Festoxidbrennstoffzellsystem nach Anspruch 7 oder 10, wobei unmittelbar vor der Ausführung des Abschaltvorgangs der Abschaltkreis (110a) die erzeugte Elektrizitätsmenge auf einen festen Wert reduziert und die Oxidationsgasmenge, weiche von der Oxidationsgaszufuhrvorrichtung (45) zugeführt wird, erhöht.

12. Festoxidbrennstoffzellsystem nach Anspruch 3, wobei der Abschaltkreis (110a) einen Druckspeicherbetätigungskreis (110b) aufweist, welcher den Druck auf der Brennstoffelektrodenseite erhöht, nachdem eine Temperatur der Brennstoffelektrode auf die Temperatur abgesunken ist, welche die Oxidation unterbindet, so dass eine Druckreduktion auf der Brennstoffelektrodenseite, welche durch den Temperaturabfall auf der Brennstoffelektrodenseite induziert wird, unterdrückt werden kann.

13. Festoxidbrennstoffzellsystem nach Anspruch 12, wobei der Abschaltkreis (110a) dafür ausgelegt ist, die Unterbrechung der Brennstoffzufuhr und der Elektrizitätserzeugung durch einen Notabschaltmodus und einen normalen Abschaltmodus auszuführen; und wobei der Abschaltkreis (110a) keine Steuerung unter Verwendung des Druckspeicherbetätigungskreises (110b) für die Unterbrechung im Notabschaltmodus ausführt.

14. Festoxidbrennstoffzellsystem nach Anspruch 13, wobei der normale Abschaltmodus einen Programmabschaltmodus umfasst, welcher eine Unterbrechung zu einer vorgeplanten günstigen Zeit ausführt, und wobei der Abschaltkreis (110a) eine Steuerung über den Druckspeicherbetätigungskreis (110b) durchführt, wenn die Unterbrechung durch den Programmabschaltmodus ausgeführt wird.

15. Festoxidbrennstoffzellsystem nach Anspruch 14, wobei der Abschaltkreis (110a) einen Temperatursenkungsvorgang zur Erniedrigung der Temperatur auf der Oxidationsgaselektrodenseite des Brennstoffzellstapels (14) unmittelbar nach dem Anhalten der Brennstoffzufuhr und der Erzeugung von elektrischer Energie ausführt, wenn die Unterbrechung im normalen Abschaltmodus ausgeführt wird, wohingegen kein Temperatursenkungsvorgang ausgeführt wird, wenn die Unterbrechung im Notabschaltmodus ausgeführt wird.

## Revendications

1. Système de piles à combustible à oxyde solide (1) servant à produire de l'électricité en reformant à la vapeur un combustible et en faisant réagir l'hydrogène résultant avec un gaz oxydant, comprenant :
un module de piles à combustible (2) comportant un empilement de piles à combustible (14) ;
un appareil d'alimentation en combustible (38) qui fournit un combustible au module de piles à combustible (2) ;
un appareil d'alimentation en eau (28) qui fournit de l'eau pour le reformage à la vapeur au module de piles à combustible (2) ;
un appareil d'alimentation en gaz oxydant (45) qui fournit un gaz oxydant au côté des électrodes à gaz oxydant de l'empilement de piles à combustible (14) ;
un reformeur (20) disposé à l'intérieur du module de piles à combustible (2) qui effectue le reformage à la vapeur du combustible fourni par l'appareil d'alimentation en combustible (38) en utilisant l'eau fournie par l'appareil d'alimentation en eau (28) ;
un passage de combustible/gaz d'échappement (21 b) qui guide le combustible/gaz d'échappement depuis l'appareil d'alimentation en combustible (38), en passant par le reformeur (20) et les électrodes à combustible sur des unités de piles à combustible (16) constituant l'empilement de piles à combustible (14), jusqu'à l'extérieur du module de piles à combustible (2) ; et
un contrôleur (110) programmé pour contrôler l'appareil d'alimentation en combustible (38), l'appareil d'alimentation en eau (28), l'appareil d'alimentation en gaz oxydant (45), et l'extraction d'énergie du module de piles à combustible (2) ;
dans lequel le contrôleur (110) comprend un circuit d'arrêt (110a) qui exécute un arrêt pour interrompre l'alimentation en combustible et la production d'électricité ; et
dans lequel le passage de combustible/gaz d'échappement (21 b) fonctionne comme un moyen de retenue de pression mécanique, maintenant une pression sur le côté des électrodes à gaz oxydant à l'intérieur du module de piles à combustible (2) supérieure à la pression atmosphérique, et maintenant une pression sur le côté des électrodes à combustible à une pression supérieure à la pression sur le côté des électrodes à gaz oxydant, après que le circuit d'arrêt (110a) a exécuté l'arrêt, jusqu'à ce qu'une température des électrodes à combustible chute jusqu'à une température de suppression d'oxydation prédéterminée à laquelle le risque d'oxydation des électrodes à combustible est réduit.

2. Système de piles à combustible à oxyde solide de la revendication 1, dans lequel le moyen de retenue de pression mécanique est constitué de telle sorte que, après que l'arrêt a été exécuté, la pression sur le côté de l'électrode à combustible est diminuée tout en étant maintenue à une pression supérieure à celle sur le côté de l'électrode à gaz oxydant, et est maintenue à une pression supérieure à la pression atmosphérique même au moment dans le temps où une température de l'électrode à combustible a chuté jusqu'à la température de suppression d'oxydation.

3. Système de piles à combustible à oxyde solide de la revendication 2, dans lequel le moyen de retenue de pression mécanique a une section de résistance à l'écoulement côté sortie communiquant avec le côté de l'électrode à combustible et le côté de l'électrode à gaz oxydant de chaque unité de pile à combustible (16), et la résistance à l'écoulement de la section de résistance à l'écoulement côté sortie est réglée de telle sorte que la chute de pression sur le côté de l'électrode à combustible après l'arrêt de l'alimentation en combustible et de la production d'électricité est plus progressive que la chute de pression sur le côté de l'électrode à gaz oxydant.

4. Système de piles à combustible à oxyde solide de la revendication 3, dans lequel le moyen de retenue de pression mécanique a une section de résistance à l'écoulement côté entrée destinée à permettre l'apport de combustible au côté des électrodes à combustible des unités de piles à combustible individuelles (16).

5. Système de piles à combustible à oxyde solide de la revendication 3, dans lequel des capuchons (86) formés comme un corps séparé sont fixés à l'extrémité supérieure des unités de piles à combustible (16), et la section de résistance à l'écoulement côté sortie est constituée de tubes étroits allongés s'étendant vers le haut depuis les capuchons (86), et les tubes étroits fonctionnent comme une section tampon pour empêcher l'oxydation des électrodes à combustible par le gaz oxydant pénétrant depuis l'extrémité supérieure de celles-ci.

6. Système de piles à combustible à oxyde solide de la revendication 5, dans lequel les capuchons (86) sont constitués de métal de telle sorte que la chaleur sur le côté des électrodes à gaz oxydant peut être facilement conduite jusqu'au côté des électrodes à combustible.

7. Système de piles à combustible à oxyde solide de la revendication 3, dans lequel le moyen de retenue de pression mécanique maintient la pression sur le côté de l'électrode à combustible à une pression supérieure à celle sur le côté de l'électrode à gaz oxydant jusqu'à ce qu'une température de l'électrode à combustible chute à 400 °C.

8. Système de piles à combustible à oxyde solide de la revendication 7, dans lequel le moyen de retenue de pression mécanique maintient la pression sur le côté de l'électrode à combustible à une pression supérieure à celle sur le côté de l'électrode à gaz oxydant jusqu'à ce qu'une température de l'électrode à combustible chute à 350 °C.

9. Système de piles à combustible à oxyde solide de la revendication 7 dans lequel, après avoir exécuté l'arrêt, le circuit d'arrêt (110a) arrête l'appareil d'alimentation en combustible (38), l'appareil d'alimentation en gaz oxydant (45) et l'appareil d'alimentation en eau (28) jusqu'à ce qu'une température de l'électrode à combustible chute jusqu'à la température de suppression d'oxydation.

10. Système de piles à combustible à oxyde solide de la revendication 7 dans lequel, après avoir exécuté un arrêt, le circuit d'arrêt (110a) fait fonctionner l'appareil d'alimentation en gaz oxydant (45) pendant un temps prédéterminé, puis arrête l'appareil d'alimentation en gaz oxydant (45) jusqu'à ce qu'une température de l'électrode à combustible chute jusqu'à la température de suppression d'oxydation.

11. Système de piles à combustible à oxyde solide de la revendication 7 ou 10 dans lequel, juste avant l'exécution de l'arrêt, le circuit d'arrêt (110a) diminue la quantité d'électricité produite jusqu'à une valeur fixe et augmente la quantité de gaz oxydant fournie par l'appareil d'alimentation en gaz oxydant (45).

12. Système de piles à combustible à oxyde solide de la revendication 3, dans lequel le circuit d'arrêt (110a) a un circuit d'opération de retenue de pression (110b) qui fait monter la pression sur le côté de l'électrode à combustible après qu'une température de l'électrode à combustible a baissé jusqu'à la température de suppression d'oxydation, de telle sorte qu'une réduction de pression sur le côté de l'électrode à combustible qui est induite par la baisse de température sur le côté de l'électrode à combustible peut être supprimée.

13. Système de piles à combustible à oxyde solide de la revendication 12, dans lequel le circuit d'arrêt (110a) est constitué pour exécuter un arrêt de l'alimentation en combustible et de la production d'électricité par un mode d'arrêt d'urgence et un mode d'arrêt normal ; et le circuit d'arrêt (110a) n'exécute pas une commande en utilisant le circuit d'opération de retenue de pression (110b) pour un arrêt dans le mode d'arrêt d'urgence.

14. Système de piles à combustible à oxyde solide de la revendication 13, dans lequel les modes d'arrêt normal comportent un mode d'arrêt programmé qui exécute un arrêt à un moment opportun préalablement planifié, et le circuit d'arrêt (110a) exécute une commande par le circuit d'opération de retenue de pression (110b) lors d'un arrêt par le mode d'arrêt programmé.

15. Système de piles à combustible à oxyde solide de la revendication 14, dans lequel lors d'un arrêt dans le mode d'arrêt normal, le circuit d'arrêt (110a) exécute une opération de chute de température pour faire chuter la température sur le côté des électrodes à gaz oxydant de l'empilement de piles à combustible (14) juste après que l'alimentation en combustible et la production d'électricité ont été arrêtées, alors que lors d'un arrêt dans le mode d'arrêt d'urgence, aucune opération de chute de température n'est exécutée.
